(19) Europäisches Patentamt / European Patent Office / Office européen des brevets

(11) **EP 4 694 128 A1**

(12) **EUROPEAN PATENT APPLICATION**
published in accordance with Art. 153(4) EPC

(43) Date of publication:
**11.02.2026 Bulletin 2026/07**

(21) Application number: **23931495.8**

(22) Date of filing: **07.04.2023**

(51) International Patent Classification (IPC):
**H04N 19/196** (2014.01)     **H04N 19/70** (2014.01)

(52) Cooperative Patent Classification (CPC):
**H04N 19/196; H04N 19/70**

(86) International application number:
**PCT/CN2023/086930**

(87) International publication number:
**WO 2024/207434 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventor: **XIE, Zhihuang**
**Dongguan, Guangdong 523860 (CN)**

(74) Representative: **RGTH**
**Patentanwälte PartGmbB**
**Neuer Wall 10**
**20354 Hamburg (DE)**

(54) **VIDEO ENCODING METHOD AND APPARATUS, VIDEO DECODING METHOD AND APPARATUS, AND DEVICE, SYSTEM AND STORAGE MEDIUM**

(57)     Provided in the present application are a video encoding method and apparatus, a video decoding method and apparatus and a device, a system and a storage medium. The methods both comprise: when the current block is encoded/decoded, determining a prediction mode of the current block, if the prediction mode of the current block is a multi-model intra-frame block copy illumination compensation mode, determining a reference block of the current block, and determining N groups of linear model parameters, N being a positive integer greater than 1; and selecting a target group of linear model parameters from among the N groups of linear model parameters, and performing a linear change on the reference block by using the target group of linear model parameters, so as to obtain a prediction block of the current block. Therefore, an illumination compensation effect is improved, thereby improving the prediction accuracy and an encoding/decoding performance.

FIG. 11

**Description**

**TECHNICAL FIELD**

The present disclosure relates to the field of video coding and decoding technology, and in particular, to video encoding and decoding methods, apparatuses, a device, a system, and a storage medium.

**BACKGROUND**

Digital video technology can be incorporated into a variety of video apparatuses, such as digital televisions, smartphones, computers, e-readers, or video players. With the development of video technology, video data includes a large amount of data. In order to facilitate the transmission of video data, the video apparatus adopts video compression technology to achieve more efficient transmission or storage of video data.

There is temporal or spatial redundancy in the video, and prediction may be used to eliminate or reduce the redundancy in the video and improve the compression efficiency. In order to improve the prediction effect, an intra block copy illumination compensation mode is proposed. However, in some scenarios, when a current intra block copy illumination compensation mode is used for prediction, the illumination compensation effect is poor, resulting in inaccurate prediction and low encoding and decoding efficiency.

**SUMMARY**

Embodiments of the present disclosure provide video encoding and decoding methods, apparatuses, a device, a system, and a storage medium, which may improve accuracy of building a list of candidate prediction modes, improve prediction accuracy of a current block, and in turn improve encoding and decoding performance.

In a first aspect, the present disclosure provides a video decoding method, applied to a decoder, including:

determining a prediction mode of a current block;
in response to that the prediction mode of the current block is a multi-model intra block copy illumination compensation mode, determining a reference block of the current block and determining N groups of linear model parameters, N being a positive integer greater than 1; and
selecting a target group of linear model parameters from the N groups of linear model parameters, and performing linear transform on the reference block using the target group of linear model parameters to obtain a prediction block of the current block.

In a second aspect, the embodiments of the present disclosure provide a video encoding method, including:

determining a prediction mode of a current block;
in response to that the prediction mode of the current block is a multi-model intra block copy illumination compensation mode, determining a reference block of the current block and determining N groups of linear model parameters, N being a positive integer greater than 1; and
selecting a target group of linear model parameters from the N groups of linear model parameters, and performing linear transform on the reference block using the target group of linear model parameters to obtain a prediction block of the current block.

In a third aspect, the present disclosure provides a video decoding apparatus, which is configured to perform the method in the first aspect or various implementations of the first aspect. Specifically, the apparatus includes functional units for performing the method in the first aspect or various implementations of the first aspect.

In a fourth aspect, the present disclosure provides a video encoding apparatus, which is configured to perform the method in the second aspect or various implementations of the second aspect. Specifically, the apparatus includes functional units for performing the method in the second aspect or various implementations of the second aspect.

In a fifth aspect, a video decoder is provided, including a processor and a memory. The memory is configured to store a computer program, and the processor is configured to call and run the computer program stored in the memory to perform the method in the first aspect or various implementations of the first aspect.

In a sixth aspect, a video encoder is provided, including a processor and a memory. The memory is configured to store a computer program, and the processor is configured to call and run the computer program stored in the memory to perform the method in the second aspect or various implementations of the second aspect.

In a seventh aspect, a video encoding and decoding system is provided, including a video encoder and a video decoder. The video decoder is configured to perform the method in the first aspect or various implementations of the first aspect, and the video encoder is configured to perform the method in the second aspect or various implementations of the second aspect.

In an eighth aspect, a chip is provided, which is configured to implement the method in any one of the first and second aspects or in each of implementations of the first and second aspects. Specifically, the chip includes a processor for calling a computer program from a memory and running the computer program, so that a device equipped with the chip performs the method in any one of the first and second aspects or in each of implementations of the first and second aspects.

In a ninth aspect, a computer-readable storage medium is provided for storing a computer program. The computer program enables a computer to perform the method in any one of the first and second aspects or in each of implementations of the first and second aspects.

In a tenth aspect, a computer program product is provided, including computer program instructions. The computer program instructions enable a computer to perform the method in any one of the first and second aspects or in each of implementations of the first and second aspects.

In an eleventh aspect, a computer program is provided. The computer program, when run on a computer, enables the computer to perform the method in any one of the first and second aspects or in each of implementations of the first and second aspects.

In a twelfth aspect, a bitstream is provided. The bitstream is generated based on the method in the second aspect.

Based on the above technical solutions, a multi-model intra block copy illumination compensation mode is proposed to increase the modes of intra block copy illumination compensation, so that the encoding and decoding ends can select a single-model intra block copy illumination compensation mode (i.e., having only one group of model parameters) for prediction compensation or select the multi-model intra block copy illumination compensation mode (i.e., including multiple groups of model parameters) for prediction compensation according to the specific situations of the current block. In a case where the multi-model intra block copy illumination compensation mode is selected to perform prediction compensation on the current block, N groups of linear model parameters are determined, and target linear model parameters are selected from the N groups of linear model parameters. The target model parameters are then used for performing linear transform on the reference block of the current block to obtain the prediction block of the current block, thereby improving the illumination compensation effect and in turn improving the prediction accuracy and encoding and decoding performance.

## BRIEF DESCRIPTION OF THE DRAWINGS

FIG. 1 is a schematic block diagram of a video encoding and decoding system involved in embodiments of the present disclosure;

FIG. 2 is a schematic block diagram of a video encoder involved in embodiments of the present disclosure;

FIG. 3 is a schematic block diagram of a video decoder involved in embodiments of the present disclosure;

FIGS. 4A and 4B are schematic diagrams of pictures with different luma;

FIG. 5 is a schematic diagram of a principle of an illumination compensation model;

FIG. 6 is a schematic diagram of sample selection;

FIG. 7 is a schematic diagram of an intra block copy (IBC) principle;

FIG. 8 is a schematic diagram of pictures with different illumination;

FIG. 9 is a schematic diagram of an IBC-local illumination compensation (IBC-LIC);

FIG. 10 is a schematic diagram of an application scenario;

FIG. 11 is a schematic flowchart of a video decoding method provided in an embodiment of the present disclosure;

FIG. 12 is a schematic diagram of a template;

FIG. 13 is a schematic diagram of an extended template;

FIG. 14 is a schematic diagram of an extended template;

FIG. 15 is a schematic flowchart of a video encoding method provided in an embodiment of the present disclosure;

FIG. 16 is a schematic block diagram of a video decoding apparatus provided in an embodiment of the present disclosure;

FIG. 17 is a schematic block diagram of a video encoding apparatus provided in an embodiment of the present disclosure;

FIG. 18 is a schematic block diagram of an electronic device provided in embodiments of the present disclosure; and

FIG. 19 is a schematic block diagram of a video encoding and decoding system provided in embodiments of the present disclosure.

## DETAILED DESCRIPTION

The present disclosure can be applied to the field of picture coding and decoding, the field of video coding and decoding, the field of hardware video coding and decoding, the field of dedicated circuit video coding and decoding, the field of real-time video coding and decoding, etc. For example, solutions of the present disclosure may be combined with audio video coding standards (AVS), such as the H.264/audio video coding (AVC) standard, the H.265/high efficiency video coding (HEVC) standard, and the H.266/versatile video coding (VVC) standard. Alternatively, the solutions of the present disclosure may be implemented in conjunction with other proprietary or industry standards, including ITU-TH.261, ISO/IECMPEG-IVisual, ITU-TH.262 or ISO/IECMPEG-2Visual, ITU-TH.263, ISO/IECMPEG-4Visual, ITU-TH.264 (also known as ISO/IECMPEG-4 AVC), including scalable video coding (SVC) and multi-view video coding (MVC) extensions. It should be understood that the technology of the present disclosure is not limited to any specific coding and decoding standard or technology.

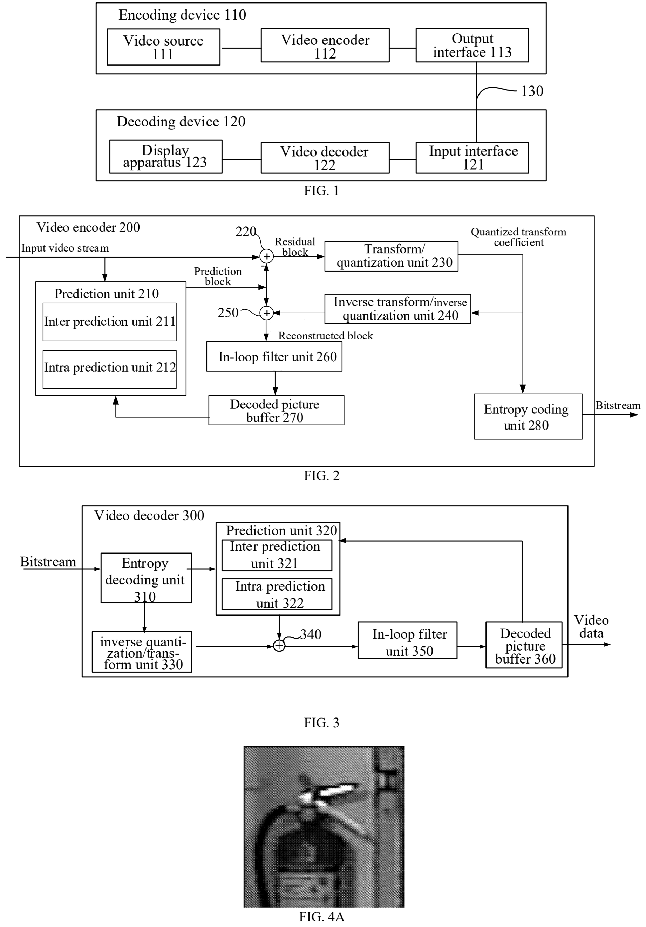

To facilitate the understanding, a video encoding and decoding system involved in embodiments of the present disclosure is first introduced with reference to FIG. 1.

FIG. 1 is a schematic block diagram of a video encoding and decoding system involved in embodiments of the present disclosure. It should be noted that FIG. 1 is merely an example, and the video encoding and decoding system in the embodiments of the present disclosure includes but is not limited to those shown in FIG. 1. As shown in FIG. 1, the video encoding and decoding system 100 includes an encoding device 110 and a decoding device 120. The encoding device is used to encode (which may be understood as "compress") video data to generate a bitstream, and transmit the bitstream to the decoding device. The decoding device decodes the bitstream generated by the encoding device to obtain decoded video data.

The encoding device 110 in the embodiments of the present disclosure can be understood as a device with a video encoding function, and the decoding device 120 can be understood as a device with a video decoding function. That is, in the embodiments of the present disclosure, the encoding device 110 and the decoding device 120 include a wide range of apparatuses, such as smartphones, desktop computers, mobile computing apparatuses, notebook (e.g., laptop) computers, tablet computers, set-top boxes, televisions, cameras, display apparatuses, digital media players, video game consoles, or in-vehicle computers.

In some embodiments, the encoding device 110 may transmit the encoded video data (e.g., the bitstream) to the decoding device 120 via a channel 130. The channel 130 may include one or more media and/or apparatuses capable of transmitting the encoded video data from the encoding device 110 to the decoding device 120.

In an instance, the channel 130 includes one or more communication media that enable the encoding device 110 to transmit the encoded video data directly to the decoding device 120 in real time. In this instance, the encoding device 110 may modulate the encoded video data based on a communication standard and transmit the modulated video data to the decoding device 120. The communication media include a wireless communication medium, such as a radio frequency spectrum. Optionally, the communication media may also include a wired communication medium, such as one or more physical transmission lines.

In another instance, the channel 130 includes a storage medium, and the storage medium can store the video data encoded by the encoding device 110. The storage media include a plurality of locally accessible data storage media, such as an optical disk, a digital video disk (DVD), and a flash memory. In this instance, the decoding device 120 may acquire the encoded video data from the storage medium.

In yet another instance, the channel 130 may include a storage server, and the storage server may store the video data encoded by the encoding device 110. In this instance, the decoding device 120 may download the encoded video data stored in the storage server. Optionally, the storage server may store the encoded video data and transmit the encoded video data to the decoding device 120. For example, the storage server is a web server (e.g., for a website), a file transfer protocol (FTP) server, etc.

In some embodiments, the encoding device 110 includes a video encoder 112 and an output interface 113. The output interface 113 may include a modulator/demodulator (modem) and/or a transmitter.

In some embodiments, the encoding device 110 may further include a video source 111 in addition to the video encoder 112 and the input interface 113.

The video source 111 may include at least one of: a video acquisition apparatus (e.g., a video camera), a video archive, a video input interface, or a computer graphics system. The video input interface is used to receive video data from a video content provider. The computer graphics system is used to generate video data.

The video encoder 112 encodes the video data from the video source 111 to generate a bitstream. The video data may include one or more pictures or a sequence of pictures. The bitstream contains encoding information of the picture(s) or sequence of pictures in the form of a bitstream. The encoding information may include encoded picture data and associated data. The associated data may include a sequence parameter set (SPS), a picture parameter set (PPS) and other syntax structures. The SPS may contain parameters applied to one or more sequences. The PPS may contain parameters applied to one or more pictures. The syntax structure refers to a set of zero or more syntax elements arranged in a specified order in the bitstream.

The video encoder 112 transmits the encoded video data directly to the decoding device 120 via the output interface 113. The encoded video data may also be stored in a storage medium or a storage server for subsequent reading by the decoding device 120.

In some embodiments, the decoding device 120 includes an input interface 121 and a video decoder 122.

In some embodiments, the decoding device 120 may further include a display apparatus 123 in addition to the input interface 121 and the video decoder 122.

The input interface 121 includes a receiver and/or a modem. The input interface 121 may receive the encoded video data via the channel 130.

The video decoder 122 is used to decode the encoded video data to obtain decoded video data, and transmit the decoded video data to the display apparatus 123.

The display apparatus 123 displays the decoded video data. The display apparatus 123 may be integrated with the decoding device 120 or external to the decoding device 120. The display apparatus 123 may include one of various display apparatuses, such as a liquid crystal display (LCD), a plasma display, an organic light-emitting diode (OLED) display, or other types of display apparatuses.

In addition, FIG. 1 is only an instance, and the technical solution of the embodiments of the present disclosure is not limited to FIG. 1. For example, the technology of the present disclosure can also be applied to unilateral video encoding or unilateral video decoding.

A video encoding framework involved in the embodiments of the present disclosure will be introduced below.

FIG. 2 is a schematic block diagram of a video encoder involved in embodiments of the present disclosure. It should be understood that the video encoder 200 may be used to perform lossy compression on a picture, or may be used to perform lossless compression on a picture. The lossless compression may be visually lossless compression or mathematically lossless compression.

The video encoder 200 may be applied to picture data in a luma and chroma (YCbCr, YUV) format. For example, a YUV ratio may be 4:2:0, 4:2:2, or 4:4:4, where Y represents luma, Cb (U) represents blue chroma, Cr (V) represents red chroma, and U and V represent chroma for describing color and saturation. For example, in a color format, 4:2:0 represents that every 4 samples have 4 luma components and 2 chroma components (YYYYCbCr), 4:2:2 represents that every 4 samples have 4 luma components and 4 chroma components (YYYYCbCrCbCr), and 4:4:4 represents full sample display (YYYYCbCrCbCrCbCrCbCr).

For example, the video encoder 200 reads video data, and partitions each picture of the video data into several coding tree units (CTUs). In some examples, the CTB may be referred to as a "tree block", "largest coding unit (LCU)", or "coding tree block (CTB)". Each CTU may be associated with a sample block with identical size within the picture. Each sample may correspond to one luma (or luminance) sample and two chroma (or chrominance) samples. Thus, each CTU may be associated with one luma sample block and two chroma sample blocks. A size of a single CTU is, for example, 128 $\times$ 128, 64 $\times$ 64, 32 $\times$ 32, or the like. A single CTU may be further partitioned into several coding units (CUs) for encoding. The CU may be a rectangular block or a square block. The CU may be further partitioned into a prediction unit (PU) and a transform unit (TU), which separates encoding, prediction and transform, thereby making processing more flexible. In an example, a CTU is partitioned into CUs in a quadtree manner, and a CU is partitioned into TUs and PUs in a quadtree manner.

The video encoder and the video decoder may support various PU sizes. Assuming that the size of a specific CU is 2N $\times$ 2N, the video encoder and the video decoder may support a PU size of 2N $\times$ 2N or N $\times$ N for intra prediction, and support symmetric PUs of 2N × 2N, 2N × N, N × 2N, N × N, or similar sizes for inter prediction. The video encoder and the video decoder may also support asymmetric PUs of 2N × nU, 2N × nD, nL × 2N, and nR × 2N for inter prediction.

In some embodiments, as shown in FIG. 2, the video encoder 200 may include: a prediction unit 210, a residual unit 220, a transform/quantization unit 230, an inverse transform/inverse quantization unit 240, a reconstruction unit 250, an in-loop filter unit 260, a decoded picture buffer 270, and an entropy coding unit 280. It should be noted that the video encoder 200 may include more, fewer or different functional components.

Optionally, in the present disclosure, a current block may be referred to as a current coding unit (CU) or a current prediction unit (PU), a prediction block may be referred to as a prediction picture block or a picture prediction block, and a reconstructed picture block may be referred to as a reconstructed block or a picture reconstructed picture block.

In some embodiments, the prediction unit 210 includes an inter prediction unit 211 and an intra prediction unit 212. Since there is a strong correlation between adjacent samples in a picture of a video, an intra prediction method is used in the video coding and decoding technology to eliminate spatial redundancy between the adjacent samples. Since there is a strong similarity between adjacent pictures in a video, an inter prediction method is used in the video coding and decoding technology to eliminate temporal redundancy between the adjacent pictures. Thus, the encoding efficiency is improved.

The inter prediction unit 211 can be used for inter prediction. The inter prediction may include motion estimation and motion compensation, and may refer to information of different pictures. In the inter prediction, motion information is used to find a reference block from a reference picture, and a prediction block is generated according to the reference block to eliminate temporal redundancy. A picture used for the inter prediction may be a P frame and/or B frame, where the P frame refers to a forward prediction picture, and the B frame refers to a bi-directional prediction picture. The inter prediction uses the motion information to find the reference block from the reference picture, and generates the prediction block according to the reference block. The motion information includes a reference picture list where the reference picture is located, a reference picture index, and a motion vector. The motion vector can be an integer-pixel motion vector or a fractional-pixel motion vector. In the case where the motion vector is the fractional-pixel motion vector, interpolation filtering needs to be used in the reference picture to generate a required fractional-pixel block. Here, an integer-pixel block or fractional-pixel block found in the reference picture according to the motion vector is called the reference block. In some technologies, the reference block will be directly used as the prediction block. In some technologies, the prediction block will be generated by processing the reference block. Processing the reference block to generate the prediction block can also be understood as taking the reference block as a prediction block and then processing the prediction block to generate a new prediction block.

The intra prediction unit 212 only refers to information of the same picture to predict sample information in a current block of the picture to eliminate spatial redundancy. A frame used for the intra prediction may be an I frame.

There are multiple prediction modes for the intra prediction. Considering H series of international digital video coding standards as an example, the H.264/AVC standard has 8 angle prediction modes and 1 non-angle prediction mode, and the H.265/HEVC standard is expanded to 33 angle prediction modes and 2 non-angle prediction modes. Intra prediction modes used by HEVC include a planar mode (Planar), a direct current (DC) mode, and 33 angle modes, for a total of 35 prediction modes. Intra modes used by VVC are a Planar, a DC mode, and 65 angle modes, for a total of 67 prediction modes.

It should be noted that with the increase of angle modes, intra prediction will be more accurate and more in line with the requirements of the development of high-definition and ultra-high-definition digital videos.

The residual unit 220 can generate a residual block of a CU based on a sample block of the CU and a prediction block of a PU of the CU. For example, the residual unit 220 may generate the residual block of the CU such that each sample in the residual block has a value equal to a difference between a sample in the sample block of the CU and a corresponding sample in the prediction block of the PU of the CU.

The transform/quantization unit 230 can quantize a transform coefficient. The transform/quantization unit 230 may quantize a transform coefficient associated with a TU of the CU based on a quantization parameter (QP) value associated with the CU. The video encoder 200 may adjust a degree of quantization applied to the transform coefficient associated with the CU by adjusting the QP value associated with the CU.

The inverse transform/inverse quantization unit 240 can separately perform inverse quantization and inverse transform on the quantized transform coefficient, to reconstruct a residual block from the quantized transform coefficient.

The reconstruction unit 250 can add samples of the reconstructed residual block to corresponding samples of one or more prediction blocks generated by the prediction unit 210, to generate a reconstructed block associated with the TU. By reconstructing the sample block of each TU of the CU in this manner, the video encoder 200 can reconstruct the sample block of the CU.

The in-loop filter unit 260 is used to process inverse-transformed and inverse-quantized samples, to compensate for distortion information and provide a good reference for subsequent encoded samples. For example, a deblocking filtering operation may be performed to reduce blocking artifacts of the sample block associated with the CU.

In some embodiments, the in-loop filter unit 260 includes a deblocking filtering unit and a sample adaptive offset/adaptive loop filtering (SAO/ALF) unit, where the deblocking filtering unit is used to remove blocking artifacts, and the SAO/ALF unit is used to remove a ringing effect.

The decoded picture buffer 270 can store the reconstructed sample block. The inter prediction unit 211 may use a reference picture containing the reconstructed sample block to perform inter prediction on a PU of another picture. In addition, the intra prediction unit 212 may use the reconstructed sample block in the decoded picture buffer 270 to perform intra prediction on other PUs in the same picture as the CU.

The entropy coding unit 280 can receive the quantized transform coefficient from the transform/quantization unit 230. The entropy coding unit 280 can perform one or more entropy coding operations on the quantized transform coefficient to generate entropy-coded data.

FIG. 3 is a schematic block diagram of a video decoder involved in embodiments of the present disclosure.

As shown in FIG. 3, the video decoder 300 includes an entropy decoding unit 310, a prediction unit 320, an inverse quantization/inverse transform unit 330, a reconstruction unit 340, an in-loop filter unit 350, and a decoded picture buffer 360. It should be noted that the video decoder 300 may include more, fewer or different functional components.

The video decoder 300 can receive a bitstream. The entropy decoding unit 310 can parse the bitstream to extract syntax element(s) from the bitstream. As part of parsing the bitstream, the entropy decoding unit 310 may parse entropy-coded syntax element(s) in the bitstream. The prediction unit 320, the inverse quantization/inverse transform unit 330, the reconstruction unit 340, and the in-loop filter unit 350 can decode video data according to the syntax element(s) extracted from the bitstream, i.e., generate decoded video data.

In some embodiments, the prediction unit 320 includes an intra prediction unit 322 and an inter prediction unit 321.

The intra prediction unit 322 can perform intra prediction to generate a prediction block for a PU. The intra prediction unit 322 may use an intra prediction mode to generate a prediction block of a PU based on sample blocks of spatially-adjacent PUs. The intra prediction unit 322 may also determine the intra prediction mode of the PU based on one or more syntax elements parsed from the bitstream.

The inter prediction unit 321 can construct a first reference picture list (list 0) and a second reference picture list (list 1) according to the syntax element(s) parsed from the bitstream. In addition, in a case where the PU is encoded by using inter prediction, the entropy decoding unit 310 can parse motion information of the PU. The inter prediction unit 321 may determine one or more reference blocks of the PU based on the motion information of the PU. The inter prediction unit 321 may generate a prediction block of the PU based on the one or more reference blocks of the PU.

The inverse quantization/inverse transform unit 330 can perform inverse quantization (i.e., de-quantization) on a transform coefficient associated with a TU. The inverse quantization/inverse transform unit 330 may use a QP value associated with a CU of the TU to determine a degree of quantization.

After the transform coefficient is inverse-quantized, the inverse quantization/inverse transform unit 330 can apply one or more inverse transforms to the inverse-quantized transform coefficient, to generate a residual block associated with the TU.

The reconstruction unit 340 uses the residual block associated with the TU of the CU and the prediction block of the PU of the CU to reconstruct a sample block of the CU. For example, the reconstruction unit 340 may add samples of the residual block to corresponding samples of the prediction block to reconstruct the sample block of the CU to obtain a reconstructed block.

The in-loop filter unit 350 can perform a deblocking filtering operation to reduce blocking artifacts of the sample block associated with the CU.

The video decoder 300 can store the reconstructed picture of the CU in the decoded picture buffer 360. The video decoder 300 can use the reconstructed picture in the decoded picture buffer 360 as a reference picture for subsequent prediction, or transmit the reconstructed picture to a display apparatus for display.

A basic process of video encoding and decoding is as follows. At an encoding end, a picture is partitioned into blocks, and for a current block, the prediction unit 210 generates a prediction block of the current block using intra prediction or inter prediction. The residual unit 220 may calculate, based on the prediction block and an original block of the current block, a residual block, i.e., a difference between the prediction block and the original block of the current block. The residual block may also be referred to as residual information. The residual block undergoes processes such as transform and quantization by the transform/quantization unit 230, so that information to which the human's eyes are not sensitive may be removed to eliminate visual redundancy. Optionally, the residual block before the transform and quantization performed by the transform/quantization unit 230 may be referred to as a time domain residual block, and the time domain residual block transformed and quantized by the transform/quantization unit 230 may be referred to as a frequency residual block or a frequency domain residual block. The entropy coding unit 280 receives the quantized transform coefficient output by the transform/quantization unit 230, and may perform entropy coding on the quantized transform coefficient to output a bitstream. For example, the entropy coding unit 280 may eliminate character redundancy according to a target context model and probability information of the binary bitstream.

At a decoding end, the entropy decoding unit 310 can parse the bitstream to obtain prediction information, quantization coefficient matrix, etc. of the current block, and the prediction unit 320 performs intra prediction or inter prediction on the current block to generate a prediction block of the current block based on the prediction information. The inverse quantization/inverse transform unit 330 uses the quantization coefficient matrix obtained from the bitstream to perform inverse quantization and inverse transform on the quantization coefficient matrix to obtain a residual block. The reconstruction unit 340 adds the prediction block and the residual block to obtain a reconstructed block. Reconstructed blocks constitute a reconstructed picture. The in-loop filter unit 350 performs loop filter on the reconstructed picture based on a picture or a block to obtain a decoded picture. The encoding end also needs to perform operations similar to those of the decoding end to obtain a decoded picture. The decoded picture may also be referred to as a reconstructed picture, and the reconstructed picture may be used as a reference picture of a subsequent picture for inter prediction.

It should be noted that, block partition information, as well as mode information or parameter information for prediction, transform, quantization, entropy coding, in-loop filter, etc., determined by the encoding end, are carried in the bitstream when necessary. The decoding end parses the bitstream, and performs analysis according to existing information to determine the same block partition information, mode information or parameter information for prediction, transform, quantization, entropy coding, in-loop filter, etc. as the encoding end, thereby ensuring that the decoded picture obtained by the encoding end is the same as the decoded picture obtained by the decoding end.

The above is the basic process for a video codec under a block-based hybrid coding framework. With the development of technology, some modules or steps of the framework or process may be optimized. The present disclosure is applicable to the basic process of the video codec under the block-based hybrid coding framework, but is not limited to the framework and the process.

The international video coding standards development organization (Joint Video Experts Team (JVET)) established a team to study a coding model beyond H.266/VVC, and named the model (i.e., platform test software) an enhanced compression model (ECM). The ECM has begun to adopt newer and more efficient compression algorithms based on VTM10.0, and currently has an encoding performance that exceeds VVC by about 13%. The ECM not only expands a size of the coding unit of a specific resolution, but also integrates many intra prediction and inter prediction technologies.

The technical solutions of the embodiments of the present disclosure are the improvements on the ECM reference software to achieve higher encoding efficiency.

In the embodiments of the present disclosure, the current block may be a current coding unit (CU) or a current prediction unit (PU). Due to the requirements for parallel processing, a picture may be partitioned into slices, and the slices in the same picture may be processed in parallel, that is, there is no data dependency between the slices. The term "frame" is a commonly used term, which can generally be understood that a frame is a picture. In the present disclosure, the frame may also be replaced by a picture or slices.

In real natural videos, there are often variations in illumination intensity in video contents, such as decrease in illumination intensity over time, dark clouds blocking, or variations in the intensity of a camera flash. The difference between the video contents and adjacent pictures mainly lies in strength of a picture direct current (DC) component, and there is basically no change in texture information in the contents. However, due to the influence of a large DC component value, motion search and motion compensation of the inter prediction technology cannot effectively predict these contents and are prone to introduce a lot of residual information during encoding. Local illumination compensation (LIC) technology can effectively remove the DC redundancy information, accurately predict luma change, and make corresponding compensation, thereby making the residual information small and improving encoding efficiency. In the following text, the local illumination compensation technology is abbreviated as illumination compensation.

The latest video codec standard H.266/VVC has been finalized. The International Video Coding Joint Standard Experts Team JVET proposed to explore video encoding and decoding standards beyond VVC encoding performance based on VVC, and established the exploratory experiment EE2 with the purpose of beyond VVC. The platform reference software used in the exploratory experiment is based on VTM11.0. The new algorithm will be integrated into the platform reference software, and the branch will be changed to ECM. Moreover, several expert discussion teams will be established for ECM. The latest ECM reference software version 8.0 already has an encoding performance beyond VVC by about 19%. VVC, as the current latest standard, is only about 27% higher in the encoding performance than the previous generation video codec standard H.265/HEVC. It is conceivable that in the near future, the window for exploration and research of the next generation of video encoding and decoding standard may be opened based on ECM.

In the early days of ECM, encoding tools that VVC did not have were integrated into the reference software. The encoding tools provide the efficient encoding performance and processing capabilities for different encoding scenarios of ECM, including LIC. A brief introduction is made to LIC in the current ECM below.

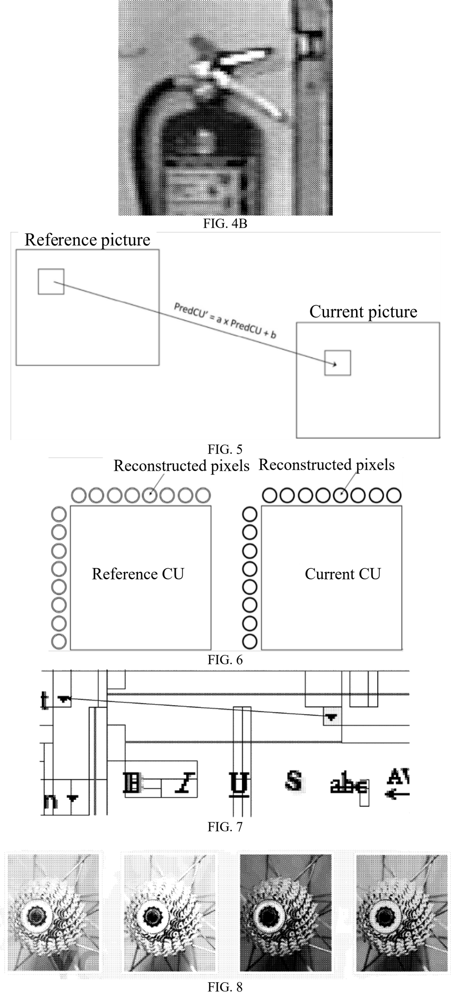

The illumination compensation technology is an inter coding technology. During the inter coding process, a current coding unit obtains a corresponding reference block according to motion vector (MV) information. The reference block usually comes from a different coding frame, that is to say, a reference coding unit does not belong to the current picture. Different pictures may have large or small changes in some specific scenarios, and the illumination compensation technology is very effective in processing some of these changes. As shown in FIGS. 4A and 4B, texture information of the left and right parts is basically the same, and the difference lies in brightness change between the two parts. The picture on the right is very bright because it is illuminated by the camera flash, and the picture on the left is illuminated by normal natural light. There is a difference between the two pictures, and this difference brings a huge burden in video encoding. Assuming that the left block uses the right block as the reference coding unit, texture information of the two blocks is the same, and thus the difference in texture details is very small, but the overall residual is large. This is because samples of the right picture are offset as a whole due to the flash, and this offset is included in the residual of the two blocks. If the residual is directly transformed and quantized and then written into the bitstream, the overhead will be huge.

The illumination compensation technology in the existing ECM reference software eliminates the influence, which is, for example, caused by flash or illumination change, through a linear fitting manner, thereby making the overall prediction effect better. The main aspects of the illumination compensation technology are as follows.

The correlation between reconstructed samples of adjacent parts of the reference coding unit and the current coding unit is used to fit the correlation between the changes in the prediction samples and the reference samples within the coding unit. This is because the top and left reconstructed samples adjacent to the current coding unit can be obtained if they exist, and the top and left reconstructed samples adjacent to the reference coding unit in the reference picture can also be obtained. By modeling the reconstructed samples of the current picture and the reconstructed samples of the reference picture, a corresponding fitting model can be obtained.

During the modeling process, the ECM illumination compensation adopts a linear fitting manner. The model is simplified to consist of a scaling parameter a and an offset parameter b, which can fit the illumination change between the current picture and the reference picture.

For example, the change relationship is represented by the model parameters, which is shown in formula (1):

$$Pred'(x, y) = a \cdot Pred(x, y) + b \qquad (1)$$

where Pred(x, y) is a prediction block before illumination compensation, Pred'(x, y) is a prediction block after illumination compensation, a is the scaling parameter in the illumination compensation model, and b is the offset parameter in the illumination compensation model.

Both a and b in the formula need to be calculated through the information of the current picture and the information of the reference picture.

For example, a and b are obtained by modeling reconstructed samples spatially-adjacent to the current block and samples adjacent to a corresponding reconstructed block in a reference picture, and the derivation formula is shown in formula (2):

$$Curr\_Rec_{neigh} = a \cdot Ref\_Rec_{neigh} + b \qquad (2)$$

In the above formula, $Curr\_Rec_{neigh}$ is the reconstructed picture of the current picture, and $Ref\_Rec_{neigh}$ is the reconstructed picture of the reference picture.

As shown in FIG. 5, in the digital video encoding and decoding process, the coding block of the current picture is corrected for illumination difference through the illumination compensation model to obtain a compensated prediction block.

The calculation of the scaling parameter a and the offset parameter b requires the use of the reconstructed samples adjacent to the corresponding reconstructed block in the reference picture and the reconstructed samples adjacent to the coding block in the current picture. Based on the correlation between the reconstructed samples adjacent to the coding unit in the current picture and the reconstructed samples at corresponding positions in the reference picture, the scaling parameter a and the offset parameter b are modeled and solved, as shown in FIG. 6.

In FIG. 6, Reconstructed pixels are reconstructed samples closest to the CU, Reference picture CU is a corresponding reconstructed CU in the reference picture, and the Current picture CU is a CU to be encoded in the current encoding picture. By modeling corresponding Reconstructed pixels in the two pictures to solve a linear relationship, the scaling parameter a and the offset parameter b are obtained, and then the linear relationship is applied to the Reference picture CU to obtain a prediction block of the Current picture CU. The specific modeling process is as follows.

The illumination compensation model in the ECM is a linear model, and model parameters include the scaling factor a and the offset parameter b, which are obtained by the least square error. The number of reconstructed samples is selected based on a width and height of the current coding unit. In a case where the width or height of the current coding unit is equal to 4, 4 reconstructed samples are taken from the top reconstructed samples adjacent to the coding unit, and 4 reconstructed samples are taken from the left reconstructed samples adjacent to the coding unit. For example, if the width of the current coding unit is 16 and the height of the current coding unit is 4, all the 4 reconstructed samples are taken from the left reconstructed samples adjacent to the coding unit, and 4 reconstructed samples are taken from the top reconstructed samples adjacent to the coding unit with a step size of 3. In a case where the width and height of the current coding unit are not equal to 4, samples with the number of the logarithm of the relatively small side length to the base 2 are obtained from the top adjacent reconstructed samples and the left adjacent reconstructed samples.

The model parameters are calculated after the top and left reconstructed samples are obtained. Assuming that the obtained reconstructed samples of the reference picture are denoted as x, the reconstructed samples of the current picture are denoted as y, the sum of the reconstructed samples of the reference picture is denoted as sumX, the sum of the reconstructed samples of the current picture is denoted as sumY, the sum of squares of the reconstructed samples of the reference picture is denoted as sumXX, and the sum of products of the reconstructed samples of the reference picture and the reconstructed samples of the current picture is denoted as sumXY, then the parameter calculations are shown in formula (3):

$$a = (sumXY - sumXsumY) / (sumXX - sumXsumX);$$
$$b = sumY - a * sumX \qquad (3)$$

where sumXsumY is sumX multiplied by sumY.

There are some shift operations in the calculation process of the ECM reference software, which are simplified processes and will not be described in details here. After the model parameters of the linear model are obtained, linear transform is performed on a prediction block after motion compensation to obtain a final prediction block.

In a case where the reconstructed samples for calculating the linear model parameters belong to an inter prediction block, an interpolation operation is required.

The illumination compensation technology in the ECM may be used in a general inter prediction, merge prediction mode and sub-block mode, where the general inter prediction is an inter mode, the merge prediction mode is a merge mode, and the sub-block mode is an affine mode. Moreover, the illumination compensation technology is applicable only to a single-frame prediction mode, but is prohibited for use in a multi-frame bi-directional reference mode.

In addition, there is a coupled relationship between the illumination compensation technology in the ECM and another technology adopted. In the current coding unit, the illumination compensation technology is not applied together with a bi-directional optical flow (BDOF) technology or a symmetric motion vector difference (SMVD) technology.

The above-mentioned illumination compensation technology is applied to inter prediction, and there is a technology in intra prediction that is similar to the inter prediction, namely, intra block copy (IBC) technology. The intra block copy technology, as the name suggests, is to find a block in the current picture that matches or is close to the current coding block and then copy it as a prediction block of the current coding block. This is an intra prediction technology specifically used for screen content encoding.

For example, as shown in FIG. 7, there is an inverted triangle graphic texture in the coding block on the right. If a traditional intra prediction technology is used to encode the current coding block, a large amount of bit overhead is required to encode residual information. After adopting the intra block copy technology, a search is performed within a specified range of the current picture to find a similar or identical graphic texture in the top left corner. Through distortion cost calculation or hash value matching, a searched reconstructed block is determined and then copied as a prediction block of the current coding block. It can be seen that this prediction technology is much more efficient than the traditional intra coding technology. In some scenarios, it is even possible to search for an identical prediction block without encoding residual information, thereby saving the overhead of a large amount of bits.

In FIG. 7, the solid line with an arrow is block vector (BV) information of the current coding block. At the decoding end, the current coding block finds, based on the BV, a matching reconstructed block as the prediction block of the current coding block.

Similar to the inter prediction, the IBC has two modes, where one is an advanced motion vector prediction (AMVP) mode and the other is a skip/merge mode (i.e., the merge mode).

In the AMVP mode, the IBC needs to transmit an index to indicate which block vector prediction (BVP) to use, as well as encoding block vector difference (BVD).

In the skip/merge mode, the IBC needs to transmit an index to indicate which block vector (BV) information to use.

Similar to the inter prediction, in some application scenarios, even if the texture information in the coding blocks is the same, there may be difference in color. In natural sequences, the most common scenario is illumination change. For example, a camera is fixed to capture a building, and the video content of the building captured in the morning is the same as the video content of the building captured in the afternoon. However, the illumination intensity is changed. Therefore, even if the inter prediction uses the decoded reconstructed picture as the reference content, the video content cannot be fully represented. This is because the illumination is different, and the overall mean of the video content is different. The residual bitstream overhead required for encoding is large. The illumination compensation technology solves this problem very well through converting the reference content and the current content by establishing a linear model, thereby adapting to variations in different illumination intensities without changing the texture content.

The screen content encoding also has the similar problem. Even if the contents of the coding blocks are the same, color deviation or other problems may cause a low encoding efficiency of the intra block copy technology, and even a similar coding block cannot be found. For example, as shown in FIG. 8, even if the textures of the picture contents are the same, the large difference in color causes a decrease in the efficiency of the block copy technology or even inability to match these reconstructed picture contents.

The IBC-LIC technology is the same as the inter LIC technology. By establishing a linear relationship between the reference block and the coding block, the reference block is converted as the prediction block of the current coding unit. The process is the same as the above-mentioned inter LIC. In some embodiments, in the AMVP mode, the IBC needs a flag to indicate whether to use the LIC technology; and in the merge mode, the LIC technology is enabled and disabled by inheritance.

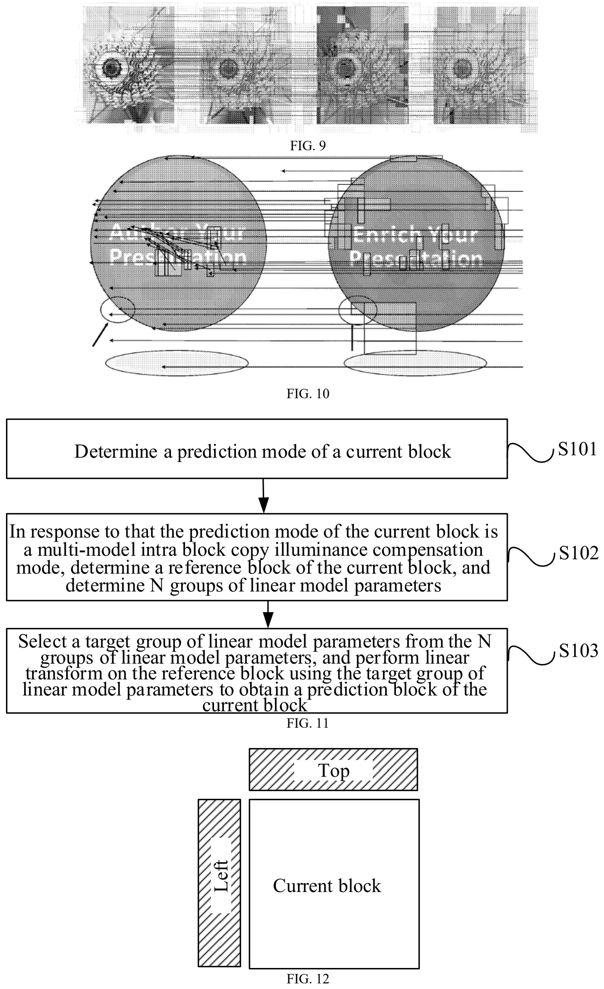

For example, after the IBC-LIC technology is enabled, the encoding status of the current picture area is shown in FIG. 9. As shown in FIG. 9, starting from the second sub-picture, the IBC-LIC technology is used in more and more coding blocks to copy the content of the previously reconstructed sub-picture.

The IBC-LIC technology can indeed provide very impressive performance in screen content coding application scenarios, and its calculation process is the same as the calculation process of the inter LIC technology. The complexity is acceptable both in terms of software and hardware, and the cost-effectiveness is high.

However, the IBC-LIC adopts reference samples and reconstructed samples from the top and left template areas as input for modeling while using the inter LIC, which may not be a good fit for screen content coding scenarios. Normally, in natural sequences, the illumination variations should be the same for the content in the current picture. However, in screen content scenarios, the change in content is at the pixel level and is sharp. For example, in some PPT application scenarios, the change in color is very rapid and drastic. Some shapes are red, but a next shape switched to may be green. In a case where the current coding unit includes the two colors, and the reference reconstructed block has the same texture but a different color change, parameters calculated using the template cannot well reflect the change relationship between different colors. In this case, the model parameters are more like a compromise fitting. In a special example, considering FIG. 10 as an example, assuming that a blue circular pattern is on the right and an orange circular pattern is on the left, the blue circular pattern on the right and the orange circular pattern on the left are very similar in shape, and some color gradients are also very similar. Therefore, copying edge shapes and then performing color compensation is a high effective method to save bit rate. However, an area covered by the template usually has multiple colors, and the prediction block also has different colors, resulting in inaccurate model fitting. As a result, when the intra block copy illumination compensation mode is used for prediction, the prediction is not accurate, leading to a low encoding and decoding efficiency.

In order to solve the above technical problems, the embodiments of the present disclosure propose a multi-model intra block copy illumination compensation mode to increase the modes of intra block copy illumination compensation. In this way, the encoding and decoding ends can select a single-model intra block copy illumination compensation mode (i.e., having only one group of model parameters) for prediction compensation or select the multi-model intra block copy illumination compensation mode (i.e., including multiple groups of model parameters) for prediction compensation according to the specific situations of the current block. In a case where the multi-model intra block copy illumination compensation mode is selected to perform prediction compensation on the current block, multiple groups of linear model parameters are determined, and target linear model parameters are selected from the multiple groups of linear model parameters. The target model parameters are then used for performing linear transform on a reference block of the current block to obtain a prediction block of the current block, thereby improving the prediction accuracy and enhancing the encoding and decoding performance.

Next, with reference to FIG. 11, a video decoding method provided in the embodiments of the present disclosure is introduced by taking a decoding end as an example.

FIG. 11 is a schematic flowchart of a video decoding method provided in an embodiment of the present disclosure. The embodiment of the present disclosure is applied to the video decoders shown in FIGS. 1 and 3. As shown in FIG. 11, the method in the embodiments of the present disclosure includes the following steps.

In S101, a prediction mode of a current block is determined.

In the embodiments of the present disclosure, for the convenience of description, the intra block copy illumination compensation mode with only one group of model parameters is denoted as a single-model intra block copy illumination compensation mode, for example, represented as an IBC-LIC-S mode, where the IBC-LIC-S mode is a currently existing IBC-LIC mode. The intra block copy illumination compensation mode including multiple groups of model parameters is denoted as a multi-model intra block copy illumination compensation mode, for example, represented as an IBC-LIC-M mode.

In order to improve the effect of intra block copy illumination compensation, the embodiments of the present disclosure propose the multi-model intra block copy illumination compensation mode, which can be understood as an intra block copy illumination compensation mode including multiple groups of linear model parameters. For example, a reference block (or an initial prediction block) of the current block is determined using the intra copy technology. Then, an optimal group of linear model parameters is selected from the multiple groups of linear model parameters, and linear transform (i.e., illumination compensation) is performed on the reference block of the current block to obtain a prediction block of the current block. Therefore, the illumination compensation effect and the prediction accuracy are improved, thereby improving the decoding effect of the picture.

In the embodiments of the present disclosure, for the convenience of description, the intra block copy illumination compensation mode with only one group of model parameters is denoted as a single-model intra block copy illumination compensation mode, for example, represented as an IBC-LIC-S mode.

The embodiments of the present disclosure do not limit the specific manner for determining the prediction mode of the current block.

In some embodiments, the decoding end defaults the prediction mode of the current block to the multi-model intra block copy illumination compensation mode.

In some embodiments, the decoding end builds a list of candidate prediction modes, and the candidate prediction modes include the single-model intra block copy illumination compensation mode and the multi-model intra block copy illumination compensation mode. Next, the decoding end determines a cost of each candidate prediction mode in the list of candidate prediction modes for predicting a template of the current block, and determines a candidate prediction mode with a minimum cost as the prediction mode of the current block.

In some embodiments, the decoding end decodes a bitstream to obtain first information, where the first information is used to indicate a prediction type of the current block. Then, the decoding end determines the prediction mode of the current block based on the first information.

The embodiments of the present disclosure do not limit the specific form of the first information.

In an example, the first information may be represented as modeType.

For example, in a case where modeType = MODE_INTRA, it indicates that the prediction type of the current block is intra prediction.

For another example, in a case where modeType = MODE_INTER, it indicates that the prediction type of the current block is inter prediction.

For yet another example, in a case where modeType = MODE_IBC, it indicates that the prediction type of the current block is intra block copy prediction.

In some embodiments, in a case where a sequence-level flag is further included in the embodiments of the present disclosure, before decoding the bitstream to obtain the first information, the decoding end decodes the bitstream to obtain a third flag. The third flag is the sequence-level flag, which is used to indicate whether a current sequence allows local illumination compensation. In a case where the third flag indicates that the current sequence allows the local illumination compensation, the decoding end decodes the bitstream to obtain a first flag. Otherwise, the decoding end skips the step of decoding the bitstream to obtain the first information.

The embodiments of the present disclosure do not limit the specific form of the third flag.

In an example, the third flag may be represented as sps_ibc_lic_enable_flag. The third flag sps_ibc_lic_enable_flag is set to different values, to indicate whether the current sequence allows the use of the local illumination compensation technology.

For example, in a case where the value of the third flag sps_ibc_lic_enable_flag is 0, it indicates that the current sequence does not allow the use of the local illumination compensation technology.

For another example, in a case where the value of the third flag sps_ibc_lic_enable_flag is 1, it indicates that the current sequence allows the use of the local illumination compensation technology.

The embodiments of the present disclosure do not limit the specific manner in which the decoding end determines the prediction mode of the current block based on the first information.

In some embodiments, in a case where the decoding end determines that the prediction type of the current block is intra prediction or inter prediction based on the first information, the decoding end continues to decode the bitstream to determine a specific intra prediction mode or inter prediction mode of the current block. In this case, the decoding end can determine that the prediction mode of the current block is not the multi-model intra block copy illumination compensation mode.

In some embodiments, in a case where the decoding end determines that the prediction type of the current block is intra block copy prediction based on the first information, the decoding end can default the prediction mode of the current block to the multi-model intra block copy illumination compensation mode.

In some embodiments, in the case where the decoding end determines that the prediction type of the current block is the intra block copy prediction based on the first information, the decoding end continues to decode the bitstream to obtain a first flag that is used to indicate whether the current block uses a merge mode, and then the decoding end determines the prediction mode of the current block based on the first flag.

The embodiments of the present disclosure do not limit the specific form of the first flag.

In an example, the first flag may be represented as merge_flag. The first flag merge_flag is set to different values, to indicate whether the current block uses the merge mode for prediction.

For example, in a case where the value of the first flag merge_flag is 0, it indicates that the current block does not use the merge mode for prediction.

For another example, in a case where the value of the first flag merge_flag is 1, it indicates that the current block uses the merge mode for prediction.

The embodiments of the present disclosure do not limit the specific manner in which the decoding end determines the prediction mode of the current block based on the first flag.

In a possible implementation, in the case where the first flag indicates that the current block does not use the merge mode, the decoding end defaults the prediction mode of the current block to the multi-model intra block copy illumination compensation mode.

In a possible implementation, in the case where the first flag indicates that the current block does not use the merge mode, the decoding end can use the single-model intra block copy illumination compensation mode and the multi-model intra block copy illumination compensation mode to predict a template area of the current block separately, and select one mode with a minimum cost as the prediction mode of the current block.

In a possible implementation, in the case where the first flag indicates that the current block does not use the merge mode, the decoding end continues to decode the bitstream to obtain second information that is used to indicate whether the current block uses the intra block copy illumination compensation mode, and then the decoding end determines the prediction mode of the current block based on the second information.

The embodiments of the present disclosure do not limit the specific form of the second information.

In some embodiments, the second information may be represented as cu_ibc_lic_flag. The second information cu_ibc_lic_flag is set to different values, to indicate whether the current block uses the intra block copy illumination compensation mode.

For example, in a case where the value of the second information cu_ibc_lic_flag is 0, it indicates that the current block does not use the intra block copy illumination compensation mode for prediction.

For another example, in a case where the value of the second information cu_ibc_lic_flag is 1, it indicates that the current block uses the intra block copy illumination compensation mode for prediction.

In some embodiments, the decoding end has restrictions on sizes of blocks using the intra block copy illumination compensation mode. For example, blocks of certain sizes do not use the intra block copy illumination compensation mode, and blocks of certain sizes use the intra block copy illumination compensation mode. Based on this, before decoding the second information, the decoding end determines whether a size of the current block meets a first preset size. In a case where the size of the current block meets the first preset size, the decoding end decodes the bitstream to obtain the second information.

The embodiments of the present disclosure do not limit the specific indicator(s) for measuring of the size of the current block.

For example, a width and height of the current block may be used to measure the size of the current block. For example, in a case where the width of the current block is greater than threshold 1 and the height of the current block is greater than threshold 2, it is determined that the size of the current block meets the first preset size. Then, the bitstream is decoded to obtain the second information. A value of threshold 1 may be 4, 8, 16, 32, 128, 256, etc. A value of threshold 2 may be 4, 8, 16, 32, 128, 256, etc. Threshold 1 may be equal to threshold 2.

For example, a product of the width and height of the current block (i.e., an area of the current block) may be used to measure the size of the current block. For example, in a case where the area of the current block is greater than or equal to threshold 3 and less than threshold 5, it is determined that the size of the current block meets the first preset size. Then, the bitstream is decoded to obtain the second information. A value of threshold 3 may be 16, 32, etc. A value of threshold 5 may be 256, 1024, etc.

For example, the number of samples included in the current block may be used to measure the size of the current block. For example, in a case where the number of samples included in the current block is greater than or equal to threshold 4, it is determined that the size of the current block meets the first preset size. Then, the bitstream is decoded to obtain the second information. A value of threshold 4 may be 16, 32, 128, 256, 1024, etc.

The embodiments of the present disclosure do not limit the specific manner in which the decoding end determines the prediction mode of the current block based on the second information.

Manner 1: in the case where the second information indicates that the current block does not use the intra block copy illumination compensation mode, the decoding end continues to decode the bitstream, determines the prediction mode of the current block, and determines that the prediction mode of the current block is not the multi-model intra block copy illumination compensation mode.

Manner 2: in the case where the second information indicates that the current block uses the intra block copy illumination compensation mode, the decoding end defaults the prediction mode of the current block to the multi-model intra block copy illumination compensation mode.

Manner 3: in the case where the second information indicates that the current block uses the intra block copy illumination compensation mode, the decoding end can use the single-model intra block copy illumination compensation mode and the multi-model intra block copy illumination compensation mode to predict the template area of the current block separately, and select the mode with the minimum cost as the prediction mode of the current block.

Manner 4: in the case where the second information indicates that the current block uses the intra block copy illumination compensation mode, the decoding end continues to decode the bitstream to obtain index information, which is used to indicate a mode index of the intra block copy illumination compensation mode used by the current block, and then the decoding end determines the prediction mode of the current block based on the index information.

The embodiments of the present disclosure do not limit the specific form of the index information.

In some embodiments, the index information may be represented as cu_ibc_lic_index. The index information cu_ibc_lic_index is set to different values, to indicate the mode indexes of the intra block copy illumination compensation mode used by the current block.

For example, in a case where the value of the index information cu_ibc_lic_index is a first numerical value, it indicates that the prediction mode of the current block is the single-model intra block copy illumination compensation mode.

For another example, in a case where the value of the index flag cu_ibc_lic_index is a second numerical value, it is determined that the prediction mode of the current block is the multi-model intra block copy illumination compensation mode.

The embodiments of the present disclosure do not limit the specific values of the first numerical value and the second numerical value.

For example, the first numerical value is 0.

For example, the second numerical value is 1.

In an example of Manner 4, the decoding end determines the prediction mode of the current block by decoding syntax elements shown in Table 1.

Table 1

| | |
|---|---|
| if (sps_ibc_lic_enable_flag && modeType == MODE_IBC && !merge_flag && cbWidth * cbHeight >32) { | |
| **cu_ibc_lic_flag** | ae(v) |
| if (cu_ibc_lic_flag) | |
| **cu_ibc_lic_index** | ae(v) |
| } | |
| else { | |
| cu_ibc_lic_flag .= 0 | |
| } | |

Here, sps_ibc_lic_enable_flag is the third flag, which is used to indicate whether the current sequence allows the local illumination compensation; modeType is the first information, which is used to indicate the prediction type of the current block; modeType == MODE_IBC indicates that the prediction type of the current block is the intra block copy prediction; merge_flag is the first flag, which is used to indicate whether the current block uses the merge mode for prediction; cbWidth is the width of the current block, and cbHeight is the height of the current block; cu_ibc_lic_flag is the second information, which is used to indicate whether the current block uses the intra block copy illumination compensation mode; and cu_ibc_lic_index is the index flag, which is used to indicate the mode index of the intra block copy illumination compensation mode used by the current block.

As shown in Table 1 above, in this example, the decoding end first decodes sps_ibc_lic_enable_flag. In a case where sps_ibc_lic_enable_flag indicates that the current sequence allows the local illumination compensation, the decoding end continues to decode merge_flag. In a case where merge_flag indicates that the current block does not use the merge mode, the decoding end determines whether cbWidth * cbHeight of the current block is greater than 32, where 32 is a preset value that can be changed according to actual conditions. In a case where the decoding end determines that cbWidth * cbHeight of the current block is greater than 32, the decoding end continues to decode cu_ibc_lic_flag. In a case where cu_ibc_lic_flag indicates that the current block uses the intra block copy illumination compensation mode, the decoding end continues to decode cu_ibc_lic_index to obtain whether the prediction mode of the current block is the single-model intra block copy illumination compensation mode or the multi-model intra block copy illumination compensation mode.

For example, cu_ibc_lic_index may be decoded in a context-based manner or in an equal probability manner.

Manner 5: in a case where the second information indicates that the current block uses the intra block copy illumination compensation mode and the size of the current block is greater than or equal to a second preset size, the multi-model intra block copy illumination compensation mode is determined as the prediction mode of the current block.

In Manner 5, for a large current block, the multi-model intra block copy illumination compensation mode is used by default. That is, during parsing the syntax elements at the decoding end, in a case where cu_ibc_lic_flag is true and the size of the current block is greater than the second preset size, it indicates that the current block uses the multi-model intra block copy illumination compensation mode; otherwise, it indicates that the current block does not use the illumination compensation technology and there is no need to parse the index.

The embodiments of the present disclosure do not limit the specific indicator(s) for measuring of the size of the current block.

For example, a width and height of the current block may be used to measure the size of the current block. For example, in a case where the width of the current block is greater than threshold 1 and the height of the current block is greater than threshold 2, it is determined that the size of the current block is greater than the second preset size. A value of threshold 1 may be 4, 8, 16, 32, 128, 256, etc. A value of threshold 2 may be 4, 8, 16, 32, 128, 256, etc. Threshold 1 may be equal to threshold 2.

For example, a product of the width and height of the current block (i.e., an area of the current block) may be used to measure the size of the current block. For example, in a case where the area of the current block is greater than or equal to threshold 3, it is determined that the size of the current block is greater than the second preset size. A value of threshold 3 may be 16, 32, 128, 256, etc.

For example, the number of samples included in the current block may be used to measure the size of the current block. For example, in a case where the number of samples included in the current block is greater than or equal to threshold 4, it is determined that the size of the current block is greater than the second preset size. A value of threshold 4 may be 16, 32, 128, 256, 1024, etc.

The second information in the above embodiments only indicates whether the current block uses the intra block copy illumination compensation mode, and does not indicate the mode index of the intra block copy illumination compensation mode. The mode index of the intra block copy illumination compensation mode is indicated by the index information.

In some embodiments, the second information indicates whether the current block uses the intra block copy illumination compensation mode, and the second information can further indicate the mode index of the intra block copy illumination compensation mode. In this case, the decoding end may directly determine the prediction mode of the current block based on a value of the second information.

In an example, cu_ibc_lic_mode may be used in this embodiment to represent the second information. Alternatively, another syntax element may be used to represent the second information, which will not be limited in the embodiments of the present disclosure.

For example, in a case where the value of the second information cu_ibc_lic_mode is a first numerical value, it is determined that the prediction mode of the current block is a non-intra block copy illumination compensation mode.

For another example, in a case where the value of the second information cu_ibc_lic_mode is a second numerical value, it is determined that the prediction mode of the current block is the single-model intra block copy illumination compensation mode.

For yet another example, in a case where the value of the second information cu_ibc_lic_mode is a third numerical value, it is determined that the prediction mode of the current block is the multi-model intra block copy illumination compensation mode.

The embodiments of the present disclosure do not limit the specific values of the first numerical value, the second numerical value and the third numerical value.

In an example, the first numerical value is 0, the second numerical value is 1, and the third numerical value is 2.

In this embodiment, whether the current block uses the intra block copy illumination compensation mode and the mode index of the intra block copy illumination compensation mode used by the current block may be determined through the specific value of the second information cu_ibc_lic_mode.

For example, the decoding end decodes the bitstream to obtain the second information cu_ibc_lic_mode. In a case where the value of the second information cu_ibc_lic_mode is the first numerical value, it is determined that the current block does not use the intra block copy illumination compensation mode. In a case where the value of the second information cu_ibc_lic_mode is the second numerical value, it is determined that the prediction mode of the current block is the single-model intra block copy illumination compensation mode. In a case where the value of the second information cu_ibc_lic_mode is the third numerical value, it is determined that the prediction mode of the current block is the multi-model intra block copy illumination compensation mode.

In an example of this embodiment, the decoding end determines the prediction mode of the current block by decoding syntax elements shown in Table 2.

Table 2

| if (sps_ibc_lic_enable_flag && modeType == MODE_IBC && !merge_flag && cbWidth * cbHeight >32) { | |
|---|---|
| **cu_ibc_lic_mode** | ae(v) |
| } | |

(continued)

| | |
|---|---|
| else { | |
| cu_ibc_lic_mode = 0 | |
| } | |

As shown in Table 2 above, in this example, the decoding end first decodes sps_ibc_lic_enable_flag. In a case where sps_ibc_lic_enable_flag indicates that the current sequence allows the local illumination compensation, the decoding end continues to decode merge_flag. In a case where merge_flag indicates that the current block does not use the merge mode, the decoding end determines whether cbWidth * cbHeight of the current block is greater than 32, where 32 is a preset value that can be changed according to actual conditions. In a case where the decoding end determines that cbWidth * cbHeight of the current block is greater than 32, the decoding end continues to decode cu_ibc_lic_mode. In a case where cu_ibc_lic_mode is 0, it indicates that the current block does not use the intra block copy illumination compensation mode. In a case where cu_ibc_lic_mode is 1, it indicates that the current block uses the single-model intra block copy illumination compensation mode. In a case where cu_ibc_lic_mode is 2, it indicates that the current block uses the multi-model intra block copy illumination compensation mode.

In some embodiments, the intra block copy illumination compensation mode is mutually exclusive with some tools. Thus, a condition for parsing the second information may be determined according to a coupling relationship of an existing decoding tool in the standards. In this case, before the decoding end decodes the second information, the method further includes: decoding the bitstream by the decoding end to obtain third information. The third information is used to indicate whether the current block is decoded using a first tool, and the first tool is mutually exclusive with the intra block copy illumination compensation technology. In a case where the third information indicates that the current block is decoded without using the first tool, the decoding end decodes the bitstream to obtain the second information.

In the embodiments of the present disclosure, in a case where the current block allows the use of other types of intra block copy prediction technologies, which cannot be used simultaneously with the intra block copy illumination compensation technology, whether to parse the second information of the current block may be determined by first parsing a block-level usage flag (i.e., the third information) of the first tool. In a case where the block-level usage flag (i.e., the third information) of the first tool is true, there is no need to parse the second information of the current block; otherwise, the second information of the current block is parsed.

For example, the syntax element table is updated by taking an example in which the first tool is RRIBC. RRIBC stands for reconstruction-reordered IBC, which is a technology that reorganizes reconstructed samples and then searches for a matching block. The reorganization operations include but are not limited to horizontal flipping and vertical flipping. In this case, the decoding end decodes the syntax elements shown in Table 3 to obtain the prediction mode of the current block.

Table 3

| | |
|---|---|
| if (sps_ibc_lic_enable_flag && modeType == MODE_IBC && !merge_flag && cbWidth * cbHeight >32 && cu_rribc_flip_type == 0) { | |
| **cu_ibc_lic_flag** | ae(v) |
| if (cu_ibc_lic_flag) | |
| **cu_ibc_lic_index** | ae(v) |
| } | |
| else { | |
| cu_ibc_lic_flag = 0 | |
| } | |

As shown in Table 3, cu_rribc_flip_type is an operation type of the first tool RRIBC. In a case where cu_rribc_flip_type is 0, it indicates that the current block does not use the RRIBC technology; otherwise, it indicates that the current block uses the RRIBC technology.

As shown in Table 3, the decoding end decodes cu_rribc_flip_type. In a case where cu_rribc_flip_type = 0, it indicates that the current block does not use the RRIBC technology; then, the decoding end continues to decode the second information cu_ibc_lic_flag. In a case where cu_rribc_flip_type = 1, it indicates that the current block uses the RRIBC technology; then, the decoding end skips decoding the second information cu_ibc_lic_flag, and determines that the current block does not use the intra block copy illumination compensation technology.

In an example, the second information in Table 3 may also be represented by cu_ibc_lic_mode in Table 2, and thus the index information cu_ibc_lic_index in Table 3 is deleted.

The above describes the specific process in which the decoding end determines the prediction mode of the current block in a case where the first flag indicates that the current block does not use the merge mode.

In some embodiments, in a case where the first flag indicates that the current block uses the merge mode, the decoding end can determine the prediction mode of the current block in at least the following manners.

Manner 1: in the case where the first flag indicates that the current block uses the merge mode, a prediction mode of the reference block is determined as the prediction mode of the current block.

In this Manner 1, in the case where the decoding end determines that the current block uses the merge mode, the prediction mode of the current block is obtained by inheritance. Specifically, the decoding end determines the reference block of the current block, and determines the prediction mode of the reference block as the prediction mode of the current block.

For example, in a case where the prediction mode of the reference block is the single-model intra block copy illumination compensation mode, it is determined that the prediction mode of the current block is also the single-model intra block copy illumination compensation mode.

For another example, in a case where the prediction mode of the reference block is the multi-model intra block copy illumination compensation mode, it is determined that the prediction mode of the current block is also the multi-model intra block copy illumination compensation mode.

In this Manner 1, the encoding end does not need to transmit prediction mode information of the current block in the bitstream.

Manner 2: in the case where the first flag indicates that the current block uses the merge mode, the single-model intra block copy illumination compensation mode is determined as the prediction mode of the current block.

In this Manner 2, in the case where the current block uses the merge mode, by default, both the encoding end and the decoding end determine the single-model intra block copy illumination compensation mode as the prediction mode of the current block.

In this Manner 2, the encoding end does not need to transmit prediction mode information of the current block in the bitstream.

Manner 3: in the case where the first flag indicates that the current block uses the merge mode, the multi-model intra block copy illumination compensation mode is determined as the prediction mode of the current block.

In this Manner 3, in the case where the current block uses the merge mode, by default, both the encoding end and the decoding end determine the multi-model intra block copy illumination compensation mode as the prediction mode of the current block.

In this Manner 3, the encoding end does not need to transmit prediction mode information of the current block in the bitstream.

Manner 4: in the case where the first flag indicates that the current block uses the merge mode, the bitstream is decoded to obtain fourth information, where the fourth information is used to indicate the prediction mode of the current block; and the prediction mode of the current block is obtained based on the fourth information.

In this Manner 4, in the case where the current block uses the merge mode, it is determined whether the current block uses the IBC-LIC without inheriting surrounding information. Instead, by calculating a rate-distortion cost at the encoding end, whether to use the IBC-LIC is transmitted to the decoding end in the form of a flag and an index. The decoding end parses the usage flag of the IBC-LIC technology under the merge mode to determine whether to use the IBC-LIC technology for the current coding unit. For example, the encoding end calculates the rate-distortion cost of each candidate prediction mode for predicting the current block, and determines a candidate prediction mode with a minimum cost as the prediction mode of the current block. At the same time, according to the candidate prediction mode with the minimum cost, the fourth information is written into the bitstream, and the prediction mode of the current block is indicated by the fourth information.

In an example, in a case where the encoding end determines that the current block does not use the IBC-LIC, the second information cu_ibc_lic_flag in the above table may be set to false. For another example, in a case where the encoding end determines that the current block uses the IBC-LIC, the second information cu_ibc_lic_flag in the above table may be set to true, and cu_ibc_lic_index is determined based on a specific IBC-LIC mode index of the current block. For example, in the case where the prediction mode of the current block is the single-model intra block copy illumination compensation mode, cu_ibc_lic_index is set to 0 and encoded into the bitstream; and in the case where the prediction mode of the current block is the multi-model intra block copy illumination compensation mode, cu_ibc_lic_index is set to 1 and encoded into the bitstream.

In an example, in the case where the encoding end determines that the current block does not use the IBC-LIC, the second information cu_ibc_lic_mode in the above table may be set to false (e.g., set to 0). For another example, in the case where the encoding end determines that the current block uses the IBC-LIC, the second information cu_ibc_lic_mode in the above table may be set to true, and the specific value of cu_ibc_lic_mode is determined based on the specific IBC-LIC mode index of the current block. For example, in the case where the prediction mode of the current block is the single-model intra block copy illumination compensation mode, cu_ibc_lic_mode is set to 1 and encoded into the bitstream; and in the case where the prediction mode of the current block is the multi-model intra block copy illumination compensation mode, cu_ibc_lic_mode is set to 2 and encoded into the bitstream.

The above describes the specific process in which the decoding end determines the prediction mode of the current block.

After the decoding end determines the prediction mode of the current block based on the above step, the decoding end performs the following step S102.

In S102, in response to that the prediction mode of the current block is the multi-model intra block copy illumination compensation mode, a reference block of the current block is determined, and N groups of linear model parameters are determined.

N is a positive integer greater than 1.

Based on the above steps, the decoding end determines the prediction mode of the current block. In the case where the prediction mode of the current block is the multi-model intra block copy illumination compensation mode, the decoding end needs to determine the N groups of linear model parameters and determine the reference block of the current block. Next, a group of linear model parameters is selected from the N groups of linear model parameters as target linear model parameters, and linear transform is performed on the reference block of the current block to obtain a prediction block with a good illumination compensation effect, thereby improving the prediction accuracy and decoding performance.

The specific process of determining the reference block of the current block is introduced below.

In some embodiments, the reference block of the current block is also referred to as a prediction block of the current block, or an initial prediction block of the current block, or a first prediction block of the current block. That is, in the embodiments of the present disclosure, the reference block of the current block can be understood as a prediction block that is not subjected to illumination compensation.

In some embodiments, in the intra prediction, the decoding end determines the reference block of the current block in a current picture (i.e., a current frame).

For example, in FIG. 7, the solid line with an arrow is block vector (BV) information of the current block. At the decoding end, through the BV, a matching reconstructed block is found for the current block as the reference block of the current block.

Similar to the inter prediction, the IBC has two modes, where one is advanced motion vector prediction (AMVP) mode and the other is a skip/merge mode (i.e., the merge mode).

In an example, in the AMVP mode, the decoding end builds an MVP candidate list, decodes the bitstream, obtains an index, selects an MVP from the MVP candidate list based on the index, determines a starting point of motion estimation based on the selected MVP, and then searches near the starting point to obtain the reference block of the current block.

In an example, in the skip/merge mode, the decoding end builds an MVP candidate list, decodes the bitstream, obtains an index, selects an MVP from the MVP candidate list based on the index, uses the selected MVP as an MV of the current point, and then determines the reference block of the current block in the current picture based on the MV.

In some embodiments, the decoding end may also use other existing manners to determine the reference block of the current block.

The specific process in which the decoding end determines the N groups of linear model parameters is introduced below.

In the embodiments of the present disclosure, in the case where the decoding end determines that the prediction mode of the current block is the multi-model intra block copy illumination compensation mode, multiple groups of linear model parameters need to be determined, and a group of linear model parameters is selected from the multiple groups of linear model parameters for performing linear transform on the reference block of the current block to obtain a prediction value of the current block.

The embodiments of the present disclosure do not limit the specific parameters included in each group of linear model parameters. For example, the parameters may be any parameters related to linear transform.

In an example, each group of linear model parameters among the N groups of linear model parameters includes a scaling parameter a and an offset parameter b. It should be noted that, among the N groups of linear model parameters, parameters included in each group are not completely the same.

For example, the N groups of linear model parameters in the embodiments of the present disclosure are shown in Table 4.

Table 4

| Index | N groups of linear model parameters |
|-------|-------------------------------------|
| 0     | (a0, b0)                            |

(continued)

| Index | N groups of linear model parameters |
|-------|--------------------------------------|
| 1 | (a1, b1) |
| ... | ... |
| i | (ai, bi) |
| ... | ... |
| N-1 | (an-1, bn-1) |

In the above Table 4, (ai, bi) is an i-th group of linear model parameters, where ai is the scaling parameter in the i-th group of linear model parameters, and bi is the offset parameter in the i-th group of linear model parameters.

After determining the N groups of linear model parameters shown in Table 4, the decoding end can select a group of linear model parameters from the N groups of linear model parameters shown in Table 4 above, and perform linear transform on the reference block of the current block to achieve illumination compensation. Therefore, a reference block after illumination compensation is obtained, and then the reference block after illumination compensation is determined as the prediction block of the current block.

The embodiments of the present disclosure do not limit the specific manner for the decoding end to determine the N groups of linear model parameters.

In some embodiments, the encoding end may write determined N groups of linear model parameters into the bitstream, so that the decoding end may obtain the N groups of linear model parameters by decoding the bitstream.

In some embodiments, the N groups of linear model parameters are preset values or empirical values.

In some embodiments, the decoding end determines the N groups of linear model parameters through the following step S102-A.

In S102-A, the N groups of linear model parameters are determined based on a surrounding reconstructed area of the reference block and a surrounding reconstructed area of the current block.

In this embodiment, the decoding end determines the surrounding reconstructed area of the reference block and the surrounding reconstructed area of the current block, and then determines the N groups of linear model parameters based on the surrounding reconstructed area of the reference block and the surrounding reconstructed area of the current block.

For example, the surrounding reconstructed area of the reference block includes a reconstructed area adjacent to the reference block and/or a reconstructed area not adjacent to the reference block. Correspondingly, the surrounding reconstructed area of the current block includes a reconstructed area adjacent to the current block and/or a reconstructed area not adjacent to the current block.

In the embodiments of the present disclosure, the decoding end can determine the N groups of linear model parameters that are different based on feature information of the surrounding reconstructed area of the reference block and feature information of the surrounding reconstructed area of the current block. The N groups of linear model parameters that are different may achieve different illumination compensation effects. Thus, the decoding end may select, according to actual situations, a group of linear model parameters with a target illumination compensation effect from the N groups of linear model parameters with different illumination compensation effects, to perform illumination compensation on the reference block of the current block, which improves the illumination compensation effect and prediction effect, and thereby improves the decoding performance.

The embodiments of the present disclosure do not limit the specific manner in which the decoding end determines the N groups of linear model parameters based on the surrounding reconstructed area of the reference block and the surrounding reconstructed area of the current block.

In some embodiments, the decoding end first determines one group of linear model parameters based on the surrounding reconstructed area of the reference block and the surrounding reconstructed area of the current block. For example, the process of determining the one group of linear model parameters based on the surrounding reconstructed area of the reference block and the surrounding reconstructed area of the current block may be performed with reference to the method shown in the above formula (3). Then, the one group of linear model parameters is adjusted to obtain the N groups of linear model parameters.

In some embodiments, the decoding end partitions the surrounding reconstructed area of the reference block into N sub-areas. For example, based on color information, luma information, bit depth and other feature information of the surrounding reconstructed area of the reference block, the surrounding reconstructed area of the reference block is partitioned into N first sub-areas. Correspondingly, according to the N first sub-areas of the reference block, the surrounding reconstructed area of the current block is partitioned into N second sub-areas, where a single first sub-area corresponds to one second sub-area. In this way, a group of linear model parameters may be determined according to each first sub-area of the N first sub-areas and according to the first sub-area and a second sub-area corresponding to the first sub-area. For example, the group of linear model parameters 1 is determined according to first sub-area 1 and second sub-area 1, and the group of linear model parameters 2 is determined according to first sub-area 2 and second sub-area 2, and so on; and thus, the N groups of linear model parameters may be determined. For example, the process of determining the group of linear model parameters 1 according to first sub-area 1 and second sub-area 1 may be performed with reference to the method shown in the above formula (3).

In some embodiments, the above S102-A includes the following steps S102-A1 to S102-A3.

In S102-A1, a first sample set is determined from the surrounding reconstructed area of the reference block, and a second sample set is determined from the surrounding reconstructed area of the current block.

In S102-A2, the first sample set and the second sample set are classified into N groups of sample sets, where any one group of sample sets among the N groups of sample sets includes at least one first sample and at least one second sample.

In S102-A3, for an i-th group of sample sets among the N groups of sample sets, an i-th group of linear model parameters is determined based on first sample(s) and second sample(s) included in the i-th group of sample sets, where i is a positive integer less than or equal to N.

In the embodiments of the present disclosure, for the convenience of description, samples (i.e., reconstructed samples) included in the surrounding reconstructed area of the reference block are denoted as first samples, and samples (i.e., reconstructed samples) included in the surrounding reconstructed area of the current block are denoted as second samples.

In this embodiment, after determining the surrounding reconstructed area of the reference block and the surrounding reconstructed area of the current block, the decoding end determines the first sample set from the surrounding reconstructed area of the reference block and determines the second sample set from the surrounding reconstructed area of the current block, where the first sample set includes at least one first sample and the second sample set includes at least one second sample set.

The embodiments of the present disclosure do not limit the specific manner in which the decoding end determines the first sample set from the surrounding reconstructed area of the reference block and determines the second sample set from the surrounding reconstructed area of the current block.

For example, the decoding end acquires at least one first sample from the surrounding reconstructed area of the reference block according to a preset acquisition step size to constitute the first sample set, and acquires at least one second sample from the surrounding reconstructed area of the current block according to the preset acquisition step size to constitute the second sample set.

For another example, the decoding end determines all first samples included in the surrounding reconstructed area of the reference block as the first sample set, and determines all second samples included in the surrounding reconstructed area of the current block as the second sample set.

In some embodiments, the surrounding reconstructed area of the reference block includes a template area of the reference block, and the surrounding reconstructed area of the current block includes a template area of the current block. In this case, the above S102-A1 includes the following step S102-A1.

In S102-A11, the first sample set is determined from the template area of the reference block, and the second sample set is determined from the template area of the current block.

In this embodiment, in the case where the surrounding reconstructed area of the reference block includes the template area of the reference block and the surrounding reconstructed area of the current block includes the template area of the current block, the decoding end may directly determine the first sample set from the template area of the reference block and determine the second sample set from the template area of the current block.

The specific implementations of the decoding end determining the first sample set from the template area of the reference block and determining the second sample set from the template area of the current block include but are not limited to the following manners.

Manner 1: the number of first samples to be selected and the number of second samples to be selected are set according to a width and a height of the current block.

For example, in a case where the width or height of the current block is equal to preset value 1 (e.g., 4), second samples with the number of preset value 1 (e.g., 4) are taken from each of the top template and the left template of the current block to constitute the second sample set, and the second sample set includes 8 second samples; first samples with the number of preset value 1 (e.g., 4) are taken from each of the top template and the left template of the reference block to constitute the first sample set, and the first sample set includes 8 first samples.

For another example, in a case where the width of the current block is preset value 2 (e.g., 16) and the height of the current block is preset value 3 (e.g., 4), 4 second samples are taken from the left template of the current block, and second samples with the number of preset value 5 (e.g., 4) are taken from the top template of the current block according to a step size of preset value 4 (e.g., 3) to constitute the second sample set, and the second sample set includes 8 second samples; 4 first samples are taken from the left template of the reference block, and first samples with the number of preset value 5 (e.g., 4) are taken from the top template of the reference block according to the step size of preset value 4 (e.g., 3) to constitute the first sample set, and the first sample set includes 8 first samples.

For yet another example, in a case where both the width and height of the current block are not equal to preset value 1 (e.g., 4), second samples with the number of the logarithm of the relatively small side length to base 2 are obtained from reconstructed samples included in the top template and the left template of the current block to constitute the second sample set; and first samples with the number of the logarithm of the relatively small side length to base 2 are obtained from reconstructed samples included in the top template and the left template of the reference block to constitute the first sample set.

For example, the top template includes one sample row (i.e., pixel row), and the left template includes one sample column (i.e., pixel column).

Manner 2: the decoding end performs sampling in the template area of the reference block according to a first sampling step size to obtain the first sample set, and performs sampling in the template area of the current block according to the first sampling step size to obtain the second sample set, where the first sampling step size is less than a preset sampling step size.

In this Manner 2, the decoding end may increase the number of samples involved in the calculation of the linear model parameters by reducing the sampling step size, so as to improve the calculation accuracy of the linear model parameters.

For example, the decoding end performs sampling in the template area of the reference block according to the first sampling step size to obtain the first sample set, and performs sampling in the template area of the current block according to the first sampling step size to obtain the second sample set, where the first sampling step size is less than the preset sampling step size.

For example, the first sampling step size is less than 3.

Manner 3: the decoding end determines all samples included in the template area of the reference block as the first sample set, and determines all samples included in the template area of the current block as the second sample set.

In Manner 3, all samples included in the template area of the reference block may be determined as the first sample set, and all samples included in the template area of the current block may be determined as the second sample set, so as to increase the number of samples involved in the calculation of the linear model parameters and improve the calculation accuracy of the linear model parameters.

The embodiments of the present disclosure do not limit the specific sizes of the template area of the reference block and the template area of the current block.

In some embodiments, as shown in FIG. 12, the template area of the reference block includes a top template area of the reference block and/or a left template area of the reference block, and the template area of the current block includes a top template area of the current block and/or a left template area of the current block.

In some embodiments, in order to increase the number of samples involved in the calculation of the linear model parameters, the template area can be enlarged.

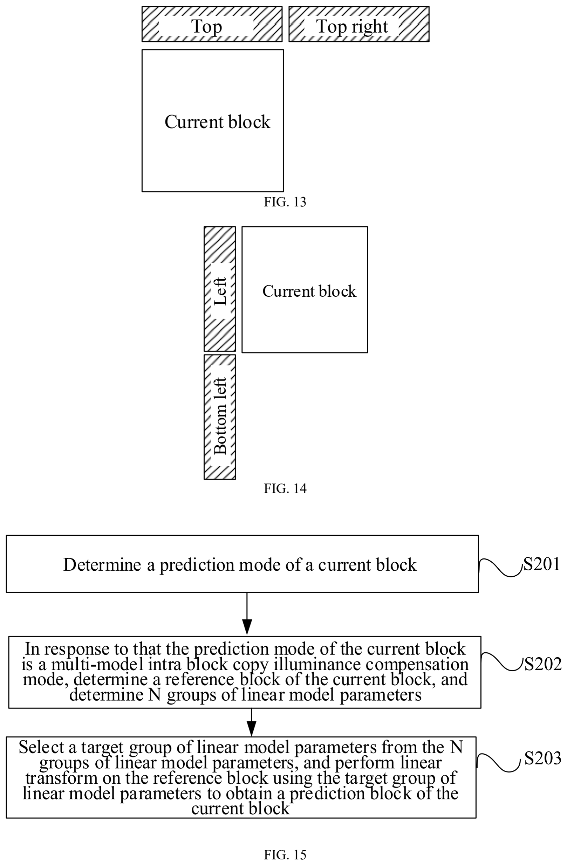

In an example, the top template is expanded. For example, as shown in FIG. 13, a left side template area of the reference block includes the left template area of the reference block and a bottom left template area of the reference block, and a left side template area of the current block includes the left template area of the current block and a bottom left template area of the current block.

In an example, the left template is expanded. For example, as shown in FIG. 14, the number of sample rows included in a top side template area of the reference block is greater than or equal to a preset number of rows, and the number of sample rows included in a top side template area of the current block is greater than or equal to the preset number of rows.

In this way, in the embodiments of the present disclosure, when samples are selected, it is possible to determine the first sample set from the top side template and/or the left side template of the reference block shown in FIGS. 13 and 14 and determine the second sample set from the top side template and/or the left side template of the current block shown in FIGS. 13 and 14, so as to increase the number of samples in the first sample set and the second sample set.

In some embodiments, the decoding end may further increase the number of rows in the top side template to achieve template expansion. For example, the number of sample rows included in the top side template area of the reference block is greater than or equal to the preset number of rows, and the number of sample rows included in the top side template area of the current block is greater than or equal to the preset number of rows. For example, the preset number of rows may be 2, 3, 4, 5, etc.

In some embodiments, the decoding end may further increase the number of columns in the left side template to achieve template expansion. For example, the number of sample columns included in the left side template area of the reference block is greater than or equal to a preset number of columns, and the number of sample columns included in the left side template area of the current block is greater than or equal to the preset number of columns. For example, the preset number of columns may be 2, 3, 4, 5, etc.

After determining the first sample set from the surrounding reconstructed area of the reference block and determining the second sample set from the surrounding reconstructed area of the current block through the above steps, the decoding end performs the above step S102-A2.

The embodiments of the present disclosure do not limit the specific manner in which the decoding end classifies the first sample set and the second sample set into the N groups of sample sets.

In some embodiments, the decoding end classifies the first sample set and the second sample set into the N groups of sample sets based on feature information such as color information, luma information, and bit depth of each of the first samples and the second samples in the first sample set and the second sample set, and each of the N groups of sample sets includes at least one first sample and at least one second sample. For example, in the first sample set and the second sample set, first sample(s) and second sample(s), which have similar feature information such as color information and luma information, are classified into a group of sample sets.

In some embodiments, the above S102-A2 includes the following steps.

In S102-A21, first samples included in the first sample set are classified into N classes of first samples.

In S102-A22, second samples included in the second sample set are classified into N classes of second samples.

In S102-A23, the N groups of sample sets are obtained based on the N classes of first samples and the N classes of second samples.

In this embodiment, the decoding end classifies the first samples included in the first sample set into the N classes of first samples, and at the same time, classifies the second samples included in the second sample set into the N classes of second samples, where each of the N classes of first samples includes at least one first sample, and each of the N classes of second samples includes at least one second sample.

The embodiments of the present disclosure do not limit the specific manner in which the decoding end classifies the first samples included in the first sample set into the N classes of first samples.

In some embodiments, the decoding end classifies, based on feature information of each of the first samples in the first sample set, the first samples to obtain the N classes of first samples.

In some embodiments, the above S102-A21 includes the following steps S102-A21-a1 and S102-A21-a2.

In S102-A21-a1, a first sample mean value of the first sample set is determined.

In S102-A21-a2, the first sample set is classified into the N classes of first samples based on the first sample mean.

In this embodiment, the decoding end classifies the first samples included in the first sample set based on the sample mean value.

Specifically, the decoding end first determines the sample mean value of the first sample set based on a reconstructed value of each first sample in the first sample set. For the convenience of description, the sample mean value is referred to as the first sample mean value. Then, the decoding end classifies the first samples included in the first sample set into the N classes of first samples based on the first sample mean value.

For example, first samples in the first sample set that are greater than or equal to the first sample mean value are classified into a first class of first samples; and first samples in the first sample set that are less than or equal to the first sample mean value are classified into a second class of first samples.

For another example, first samples in the first sample set whose difference values with the first sample mean value are between threshold c and threshold d are classified into a first class of first samples; first samples in the first sample set whose difference values with the first sample mean value are less than threshold c are classified into a second class of first samples; and first samples in the first sample set whose difference values with the first sample mean value are greater than threshold d are classified into a third class of first samples.

In some embodiments, the above S102-A21 includes the following step S102-A21-b.

In S102-A21-b, the first sample set is classified into the N classes of first samples based on bit depths of the first samples in the first sample set.

In this embodiment, the decoding end classifies the first sample set into the N classes of first samples based on a bit depth of each of the first samples in the first sample set.

In an example, the first samples in the first sample set are classified into 2 classes of first samples, 3 classes of first samples, or 4 classes of first samples based on sizes of the bit depths, and the bit depths of the first samples in each class of first samples are close.

In another example, the decoding end determines a first bit depth mean value of the first sample set, and classifies the first sample set into the N classes of first samples based on the first bit depth mean value.

For example, first samples in the first sample set whose bit depths are greater than or equal to the first bit depth mean value are classified into a first class of first samples; and first samples in the first sample set whose bit depths are less than or equal to the first bit depth mean value are classified into a second class of first samples.

For another example, first samples in the first sample set whose difference values between bit depths and the first bit depth mean value are between threshold e and threshold f are classified into a first class of first samples; first samples in the first sample set whose difference values between bit depths and the first bit depth mean value are less than threshold e are classified into a second class of first samples; and first samples in the first sample set whose difference values between bit depths and the first bit depth mean value are greater than threshold f are classified into a third class of first samples.

The decoding end classifies the first samples in the first sample set into the N classes of first samples based on the above step, and also classifies the second samples in the second sample set into the N classes of second samples.

The embodiments of the present disclosure do not limit the specific manner in which the decoding end classifies the second samples included in the second sample set into the N classes of second samples.

In some embodiments, the decoding end may classify the second samples included in the second sample set into the N classes of second samples in the same manner as the classification of the N classes of first samples.

In some embodiments, the decoding end classifies the second samples included in the second sample set into the N classes of second samples through the following step. That is, the above S102-A22 includes the following step.

In S102-A221, for a j-th class of first samples in the N classes of first samples, second samples in the second sample set that correspond to first samples in the j-th class are determined as a j-th class of second samples, where j is a positive integer less than or equal to N.

Based on the above steps, the decoding end classifies the first samples in the first sample set into the N classes of first samples, and for the j-th class of first samples in the N classes of first samples, the decoding end determines the second samples in the second sample set that correspond to the j-th class of first samples as the j-th class of second samples, where j is a positive integer less than or equal to N.

For example, the decoding end classifies first samples in the first sample set that are greater than or equal to the first sample mean value into a first class of first samples; correspondingly, the decoding end classifies second samples in the second sample set whose positions correspond to the first samples in the first class into a first class of second samples. The decoding end classifies first samples in the first sample set that are less than the first sample mean value into a second class of first samples; correspondingly, the decoding end classifies second samples in the second sample set whose positions correspond to the first samples in the second class into a second class of second samples.

It can be seen from the above that, the N classes of first samples obtained by classifying the first sample set by the decoding end are in one-to-one correspondence with the N classes of second samples obtained by classifying the second sample set by the decoding end. For example, the first class of first samples corresponds to the first class of second samples, and the second class of first samples corresponds to the second class of second samples. Therefore, the decoding end may determine the j-th class of first samples in the N classes of first samples and the j-th class of second samples in the N classes of second samples as a j-th group of sample sets. In this way, the N classes of first samples and the N classes of second samples constitute the N groups of sample sets.

The decoding end classifies the first sample set and the second sample set into the N groups of sample sets based on the above steps and then performs the above step S102-A3.

In the embodiments of the present disclosure, the decoding end determines a group of linear model parameters based on each group of sample sets in the N groups of sample sets, so as to obtain the N groups of linear model parameters.

In the embodiments of the present disclosure, the specific process of determining each group of linear model parameters based on each group of sample sets in the N groups of sample sets is the same. For the convenience of description, the process of determining the i-th group of linear model parameters based on the i-th group of sample sets is taken as an example for description.

The embodiments of the present disclosure do not limit the specific manner for determining the i-th group of linear model parameters based on first sample(s) and second sample(s) included in the i-th group of sample sets in the above S102-A3.

In an example, a linear relationship between the first sample(s) and the second sample(s) included in the i-th group of sample sets is determined, and then the i-th group of linear model parameters is determined. Since the first sample and the second sample included in the i-th group of sample sets are known, a scaling parameter a and an offset parameter b corresponding to the i-th group of sample sets may be determined by solving a linear equation, to obtain the i-th group of linear model parameters.

In an example, the first samples in the i-th group of sample sets are added to obtain a first sum value, and the second samples in the i-th group of sample sets are added to obtain a second sum value; a sum of squares of the first samples in the i-th group of sample sets is determined to obtain a third sum value; a fourth sum value is obtained by multiplying the first samples and the second samples in the i-th group of sample sets and then adding the multiplied results; and the i-th group of linear model parameters is determined based on the first sum value, the second sum value, the third sum value and the fourth sum value.

In this example, the first samples xi in the i-th group of sample sets are added to obtain the first sum value sumXi; the second samples yi in the i-th group of sample sets are added to obtain the second sum value sumYi; the sum of squares of the first samples xi in the i-th group of sample sets is determined to obtain the third sum value sumXiXi; the fourth sum value sumXiYi is obtained by multiplying the first samples xi and the second samples yi in the i-th group of sample sets and then adding the multiplied results; and the i-th group of linear model parameters is determined based on the first sum value, the second sum value, the third sum value and the fourth sum value.

The embodiments of the present disclosure do not limit the specific manner in which the decoding end determines the i-th group of linear model parameters based on the first sum value, the second sum value, the third sum value and the fourth sum value.

In some embodiments, the i-th group of linear model parameters includes a scaling coefficient ai and an offset parameter bi.

For example, the decoding end determines the i-th group of linear model parameters through the following formula (4):

$$ai = (sumXiYi - sumXisumYi) / (sumXiXi - sumXisumXi);$$
$$bi = sumYi - ai * sumXi \qquad\qquad (5)$$

The above is an introduction to the process of determining the i-th group of linear model parameters based on the i-th group of sample sets. The decoding end may determine the N groups of linear model parameters based on the N groups of sample sets with reference to the above method.

After determining the N groups of linear model parameters based on the above steps, the decoding end performs the following step S103.

In S103, a target group of linear model parameters is selected from the N groups of linear model parameters, and linear transform is performed on the reference block using the target group of linear model parameters to obtain a prediction block of the current block.

In the embodiments of the present disclosure, in the case where the decoding end determines that the prediction mode of the current block is the multi-model intra block copy illumination compensation mode, the decoding end determines the reference block of the current block and determines the N groups of linear model parameters. Next, the decoding end selects target linear model parameters from the N groups of linear model parameters, and performs linear transform on the reference block of the current block using the target linear model parameters, which improves the illumination compensation effect of the reference block, and thereby improves the prediction effect and decoding performance.

The embodiments of the present disclosure do not limit the specific manner in which the decoding end selects the target group of linear model parameters from the N groups of linear model parameters.

In some embodiments, the encoding end and decoding end determine the N groups of linear model parameters using the same manner, and the encoding end may write an index of the selected target group of linear model parameters into the bitstream. In this way, after determining the N groups of linear model parameters based on the above steps, the decoding end decodes the bitstream to obtain the index of the target group of linear model parameters, and then determines, based on the index, the target group of linear model parameters from the N groups of linear model parameters determined as shown in Table 4 above.

In some embodiments, the decoding end selects the target group of linear model parameters from the N groups of linear model parameters using the following steps.

In S103-A1, a second sample mean value of the reference block is determined.

In S103-A2, the target group of linear model parameters is selected from the N groups of linear model parameters based on the second sample mean value.

The method in this embodiment corresponds to the method of S102-A21-a1 and S102-A21-a2 described above.

It can be seen from the above S102-A21-a1 and S102-A21-a2 that, when the decoding end determines the N groups of linear model parameters, the decoding end classifies the first samples included in the first sample set into the N classes of first samples based on the first sample mean value, and classifies the second samples included in the second sample set into the N classes of second samples based on position information of the N classes of first samples, so as to obtain the N groups of sample sets. Finally, the N groups of linear model parameters are determined based on the N groups of sample sets. Based on this, when the decoding end selects the target linear model parameters from the N groups of linear model parameters, the decoding end determines a sample mean value (which is denoted as the second sample mean value) of the reference block of the current block, i.e., a mean value of reconstructed sample values included in the reference block. In this way, the target group of linear model parameters may be selected from the N groups of linear model parameters based on the second sample mean value.

The embodiments of the present disclosure do not limit the specific manner in which the decoding end selects the target group of linear model parameters from the N groups of linear model parameters based on the second sample mean value.

In a possible implementation, the decoding end compares the second sample mean value with sample values in the N groups of sample sets corresponding to the N groups of linear model parameters, selects a group of linear model parameters corresponding to a group of sample sets closest to the second sample mean value, and determines the group of linear model parameters as the target group of linear model parameters. For example, the second sample mean value is closest to (i.e., has a smallest distance to) first sample(s) and second sample(s) included in a k-th group of sample sets in the N groups of sample sets, and a group of linear model parameters corresponding to the k-th group of sample sets among the N groups of linear model parameters is determined as the target group of linear model parameters.

In a possible implementation, the decoding end selects the target group of linear model parameters from the N groups of linear model parameters based on the second sample mean value and the first sample mean value.

It can be seen from the above S102-A21-a1 and S102-A21-a2 that, in some embodiments, when the decoding end classifies the first sample set and the second sample set into the N groups of sample sets, first samples in the first sample set that are greater than or equal to the first sample mean value are classified into the first class of first samples, and first samples in the first sample set that are less than or equal to the first sample mean value are classified into the second class of first samples. Then, the N groups of linear model parameters are determined based on the N groups of sample sets. Based on this, the decoding end may select the target group of linear model parameters from the N groups of linear model parameters based on magnitudes of the second sample mean value and the first sample mean value.

For example, in a case where the second sample mean value is greater than or equal to the first sample mean value, a group of linear model parameters corresponding to the first class of first samples among the N groups of linear model parameters is determined as the target group of linear model parameters.

For another example, in a case where the second sample mean value is less than or equal to the first sample mean value, a group of linear model parameters corresponding to the second class of first samples among the N groups of linear model parameters is determined as the target group of linear model parameters.

In some embodiments, the decoding end selects the target group of linear model parameters from the N groups of linear model parameters using the following steps.

In S103-B1, a second bit depth mean value of the reference block is determined.

In S103-B2, the target group of linear model parameters is selected from the N groups of linear model parameters based on the second bit depth mean value.

The method in this embodiment corresponds to the method of S102-A21-b1 and S102-A21-b2 mentioned above.

It can be seen from the above S102-A21-b 1 and S102-A21-b2 that, when the decoding end determines the N groups of linear model parameters, the decoding end classifies the first samples included in the first sample set into the N classes of first samples based on the first bit depth mean value, and classifies the second samples included in the second sample set into the N classes of second samples based on position information of the N classes of first samples, so as to obtain the N groups of sample sets. Finally, the N groups of linear model parameters are determined based on the N groups of sample sets. Based on this, when the decoding end selects the target linear model parameters from the N groups of linear model parameters, the decoding end determines a bit depth mean value (which is denoted as the second bit depth mean value) of the reference block of the current block, i.e., a mean value of bit depths of the reconstructed sample values included in the reference block. In this way, the target group of linear model parameters may be selected from the N groups of linear model parameters based on the second bit depth mean value.

The embodiments of the present disclosure do not limit the specific manner in which the decoding end selects the target group of linear model parameters from the N groups of linear model parameters based on the second bit depth mean value.

In a possible implementation, the decoding end compares the second bit depth mean value with bit depths of samples in the N groups of sample sets corresponding to the N groups of linear model parameters, selects a group of linear model parameters corresponding to a group of sample sets closest to the second bit depth mean value, and determines the group of linear model parameters as the target group of linear model parameters. For example, the second bit depth mean value is closest to the bit depths of the first sample(s) and the second sample(s) included in the k-th group of sample sets in the N groups of sample sets, and thus a group of linear model parameters corresponding to the k-th group of sample sets among the N groups of linear model parameters is determined as the target group of linear model parameters.

In a possible implementation, the decoding end selects the target group of linear model parameters from the N groups of linear model parameters based on the second bit depth mean value and the first bit depth mean value.

It can be seen from the above S102-A21-b1 and S102-A21-b2 that, in some embodiments, when the decoding end classifies the first sample set and the second sample set into the N groups of sample sets, first samples in the first sample set whose bit depths are greater than or equal to the first bit depth mean value are classified into the first class of first samples, and first samples in the first sample set whose bit depths are less than or equal to the first bit depth mean value are classified into the second class of first samples. Then, the N groups of linear model parameters are determined based on the N groups of sample sets. Based on this, the decoding end may select the target group of linear model parameters from the N groups of linear model parameters based on magnitudes of the second bit depth mean value and the first bit depth mean value.

For example, in a case where the second bit depth mean value is greater than or equal to the first bit depth mean value, a group of linear model parameters corresponding to the first class of first samples among the N groups of linear model parameters is determined as the target group of linear model parameters.

For another example, in a case where the second bit depth mean value is less than or equal to the first bit depth mean value, a group of linear model parameters corresponding to the second class of first samples among the N groups of linear model parameters is determined as the target group of linear model parameters.

After determining the target group of linear model parameters from the N groups of linear model parameters based on the above steps, the decoding end performs linear transform on the reference block of the current block using the target group of linear model parameters.

For example, the target linear model parameters include a scaling parameter a1 and an offset parameter b1, and the decoding end performs linear transform on the reference block based on the scaling parameter and the offset parameter to obtain the prediction block.

For example, the decoding end performs linear transform on the reference block of the current block based on the formula (5):

$$Pred'(x, y) = a1 \cdot Pred(x, y) + b1 \quad (5)$$

where $Pred(x, y)$ is the reference block of the current block or a prediction block before illumination compensation, a1 is the scaling parameter included in the target linear model parameters, b1 is the offset parameter included in the target linear model parameters, and $Pred'(x, y)$ is the prediction block of the current block or a prediction block after illumination compensation.

In some embodiments, the embodiments of the present disclosure provide the video decoding method, which is applicable to the intra prediction at the decoding end. After the embodiments of this solution are integrated into the latest ECM8.0, the test results under the general test condition AI are shown in Table 5.

Table 5 IBC-LIC-M mode performance

|  | All intra Main10 | | | | |
|  | Over ECM8.0 | | | | |
|  | Y | U | V | EncT | DecT |
| Class AI | 0.00% | 0.00% | 0.00% | 100% | 100% |
| Class A2 | 0.00% | 0.00% | 0.00% | 100% | 100% |
| Class B | 0.00% | 0.00% | 0.00% | 100% | 100% |
| Class C | 0.00% | 0.00% | 0.00% | 100% | 100% |
| Class E | 0.00% | 0.00% | 0.00% | 100% | 100% |
| **Overall** | 0.00% | 0.00% | 0.00% | 100% | 100% |
| Class D | 0.00% | 0.00% | 0.00% | 100% | 100% |
| Class F | -0.17% | -0.06% | -0.07% | 100% | 100% |
| Class TGM | -0.02% | 0.02% | -0.04% | 100% | 100% |

Table 6 Combination mode performance

|  | All intra Main10 | | | | |
|  | Over ECM8.0 | | | | |
|  | Y | U | V | EncT | DecT |
| Class AI | 0.00% | 0.00% | 0.00% | 100% | 100% |
| Class A2 | 0.00% | 0.00% | 0.00% | 100% | 100% |
| Class B | 0.00% | 0.00% | 0.00% | 100% | 100% |
| Class C | 0.00% | 0.00% | 0.00% | 100% | 100% |
| Class E | 0.00% | 0.00% | 0.00% | 100% | 100% |
| **Overall** | 0.00% | 0.00% | 0.00% | 100% | 100% |
| Class D | 0.00% | 0.00% | 0.00% | 100% | 100% |
| Class F | -0.50% | -0.67% | -0.54% | 101% | 99% |
| Class TGM | -0.11% | -0.10% | -0.07% | 102% | 101% |

It should be noted that negative numbers represent performance gains, with fewer bits at the same quality.

The present disclosure is applied to the scenarios of screen content coding; during testing, general screen content coding test conditions are used, that is, this technology is not enabled from Class AI to Class E, so that there is no change in encoding performance and no fluctuation in encoding time under these classes.

Class F and Class TGM are special sequence classes for screen content coding. From the simulation results, the decoding solution provided in the embodiments of the present disclosure has 0.17% improvement in encoding performance for Class F, and the encoding and decoding time does not change.

The video decoding method provided in the embodiments of the present disclosure proposes a multi-model intra block copy illumination compensation mode to increase the modes of intra block copy illumination compensation, so that the decoding end may select a single-model intra block copy illumination compensation mode (i.e., having only one group of model parameters) for prediction compensation or select the multi-model intra block copy illumination compensation mode (i.e., including multiple groups of model parameters) for prediction compensation according to the specific situations of the current block. In a case where the multi-model intra block copy illumination compensation mode is selected to perform prediction compensation on the current block, N groups of linear model parameters are determined, and target linear model parameters are selected from the N groups of linear model parameters. The target model parameters are then used for performing linear transform on the reference block of the current block to obtain the prediction block of the current block, thereby improving the illumination compensation effect and in turn improving the prediction accuracy and decoding performance.

The above description introduces the video decoding method of the present disclosure by taking the decoding end as an example. Next, an encoding end is taken as an example for introduction.

FIG. 15 is a schematic flowchart of a video encoding method provided in an embodiment of the present disclosure. The embodiment of the present disclosure is applied to the video encoders shown in FIGS. 1 and 2. As shown in FIG. 15, the method in the embodiments of the present disclosure includes the following steps.

In S201, a prediction mode of a current block is determined.

In the embodiments of the present disclosure, for the convenience of description, the intra block copy illumination compensation mode with only one group of model parameters is denoted as a single-model intra block copy illumination compensation mode, for example, represented as an IBC-LIC-S mode, where the IBC-LIC-S mode is a currently existing IBC-LIC mode. The intra block copy illumination compensation mode including multiple groups of model parameters is denoted as a multi-model intra block copy illumination compensation mode, for example, represented as an IBC-LIC-M mode.

In order to improve the effect of intra block copy illumination compensation, the embodiments of the present disclosure propose the multi-model intra block copy illumination compensation mode, which can be understood as an intra block copy illumination compensation mode including multiple groups of linear model parameters. For example, a reference block (or an initial prediction block) of the current block is determined using the intra copy technology. Then, an optimal group of linear model parameters is selected from the multiple groups of linear model parameters, and linear transform (i.e., illumination compensation) is performed on the reference block of the current block to obtain a prediction block of the current block. Therefore, the illumination compensation effect and the prediction accuracy are improved, thereby improving the encoding effect of the picture.

In the embodiments of the present disclosure, for the convenience of description, the intra block copy illumination compensation mode with only one group of model parameters is denoted as a single-model intra block copy illumination compensation mode, for example, represented as an IBC-LIC-S mode.

The embodiments of the present disclosure do not limit the specific manner for determining the prediction mode of the current block.

In some embodiments, the encoding end defaults the prediction mode of the current block to the multi-model intra block copy illumination compensation mode.

In some embodiments, the above S201 includes the following steps.

In S201-A1, a list of candidate prediction modes corresponding to the current block is determined, where the candidate prediction modes include the multi-model intra block copy illumination compensation mode.

In S201-A2, a cost of each candidate prediction mode in the list of candidate prediction modes for predicting the current block is determined.

In S201-A3, the prediction mode of the current block is determined based on the cost.

In some embodiments, before the encoding end determines the list of candidate prediction modes corresponding to the current block, the method further includes: determining a third flag, the third flag being used to indicate whether a current sequence allows local illumination compensation; and in response to that the third flag is used to indicate that the current sequence allows the local illumination compensation, adding the multi-model intra block copy illumination compensation mode to the list of candidate prediction modes corresponding to the current block.

The embodiments of the present disclosure do not limit the specific form of the third flag.

In an example, the third flag may be represented as sps_ibc_lic_enable_flag. The third flag sps_ibc_lic_enable_flag is set to different values, to indicate whether the current sequence allows the use of the local illumination compensation technology.

For example, in a case where the value of the third flag sps_ibc_lic_enable_flag is 0, it indicates that the current sequence does not allow the use of the local illumination compensation technology.

For another example, in a case where the value of the third flag sps_ibc_lic_enable_flag is 1, it indicates that the current sequence allows the use of the local illumination compensation technology.

In some embodiments, the encoding end writes the third flag into the bitstream, where the third flag is used to indicate whether the current sequence allows the local illumination compensation.

In some embodiments, the encoding end has restrictions on sizes of blocks using the intra block copy illumination compensation mode. For example, blocks of certain sizes do not use the intra block copy illumination compensation mode, and blocks of certain sizes use the intra block copy illumination compensation mode. Based on this, the encoding end determines whether a size of the current block meets a first preset size before determining the list of candidate prediction modes corresponding to the current block. In a case where the size of the current block meets the first preset size, the encoding end adds the multi-model intra block copy illumination compensation mode to the list of candidate prediction modes corresponding to the current block.

The embodiments of the present disclosure do not limit the specific indicator(s) for measuring of the size of the current block.

For example, a width and height of the current block may be used to measure the size of the current block. For example, in a case where the width of the current block is greater than threshold 1 and the height of the current block is greater than threshold 2, it is determined that the size of the current block meets the first preset size. A value of threshold 1 may be 4, 8, 16, 32, 128, 256, etc. A value of threshold 2 may be 4, 8, 16, 32, 128, 256, etc. Threshold 1 may be equal to threshold 2.

For example, a product of the width and height of the current block (i.e., an area of the current block) may be used to measure the size of the current block. For example, in a case where the area of the current block is greater than or equal to threshold 3 and less than threshold 5, it is determined that the size of the current block meets the first preset size. A value of threshold 3 may be 16, 32, etc. A value of threshold 5 may be 256, 1024, etc.

For example, the number of samples included in the current block may be used to measure the size of the current block. For example, in a case where the number of samples included in the current block is greater than or equal to threshold 4, it is determined that the size of the current block meets the first preset size. A value of threshold 4 may be 16, 32, 128, 256, 1024, etc.

In some embodiments, before determining the list of candidate prediction modes corresponding to the current block, the encoding end determines whether the current block is encoded using a first tool, where the first tool is mutually exclusive with the intra block copy illumination compensation technology. In a case where the current block is encoded without using the first tool, the encoding end adds the multi-model intra block copy illumination compensation mode to the list of candidate prediction modes corresponding to the current block.

In an example, the encoding end traverses prediction modes, and in a case where a type of a current prediction mode is an intra block copy mode, an enabled flag of the this technology (i.e., the third flag) is obtained. The flag is a sequence-level flag, which indicates whether a current sequence allows the use of the intra block copy local illumination compensation technology, and may be in the form of sps_ibc_lic_enable_flag.

In step 1: in a case where the enabled flag (i.e., the third flag) of IBC-LIC is true and the size of the current block meets the first preset size (for example, the area of the current block is greater than threshold 1, and the area of the current block is less than threshold 2), the encoding end attempts to use the prediction method of IBC-LIC, i.e., performs the following step 2. In a case where the enabled flag (i.e., the third flag) of IBC-LIC or the size of the current block does not meet the first preset size, the encoding end does not attempt to use the prediction method of IBC-LIC, i.e., skips the following step 2 and directly performs step 3.

In step 2, reconstructed sample information of top and left template areas of the current block and reconstructed sample information of top and left template areas of the reference block are obtained.

First, the encoding end traverses various prediction modes under the IBC AMVP mode and calculates respective rate-distortion costs.

In a first round, the encoding end attempts to use the IBC-LIC-S mode. The number of samples obtained is the same as described above, and depends on the width and the height of the current block. The obtained reconstructed samples are modeled by the linear model calculation method described above, and a scaling parameter a and an offset parameter b are calculated. Linear transform is performed on a prediction block, with transform parameters of scaling a times and compensating b, to obtain a final prediction block of the current block. A residual of the current block is obtained by subtracting the predicted block from an original sample corresponding to the current block, and the rate-distortion cost (denoted as cost1) is calculated by operations such as transform and quantization.

In a second round, the encoding end attempts to use the IBC-LIC-M mode. The number of samples obtained is the same as described above, and depends on the width and the height of the current block. Samples of two template areas are classified based on a sample mean value of the template areas adjacent to the reference block. Samples whose sample values are greater than the sample mean value in the template areas adjacent to the reference block are classified into a first class; and correspondingly, samples in the template areas adjacent to the prediction block at corresponding positions are also classified into the first class. Otherwise, if samples whose sample values are less than or equal to the sample mean value in the template areas adjacent to the reference block are classified into a second class, and similarly, samples in the template areas adjacent to the prediction block at corresponding positions are also classified into the second class. Linear model parameters of a first class are calculated for the first class of samples and the second class of samples separately using the above-mentioned model calculation method, to obtain a scaling factor a1 and an offset parameter b1 in first model parameters and obtain a scaling factor a2 and an offset parameter b2 in second model parameters. A first model or a second model is selected based on the size relationship between the sample values in the reference block and the sample mean value of the template areas; for samples in the reference block whose sample values are greater than the sample mean value of the template areas, the first model parameters are used for linear transform; and for samples in the reference block whose sample values are less than or equal to the sample mean value of the template areas, the second model parameters are used for linear transform. After the predicted block is obtained, the rate-distortion cost is calculated with the original block and denoted as cost2.

By comparing cost1 and cost2, the minimum cost is recorded and is denoted as costAmvpIbcLic, and information of the current illumination compensation mode including an illumination compensation mode index is stored. The mode index corresponding to cost1 is 0, and the mode index corresponding to cost2 is 1.

Next, the encoding end builds list information for the IBC merge mode, traverses the candidate modes and calculates respective rate-distortion costs.

The current block traverses candidate BVs in the merge list. In a case where the IBC-LIC is enabled in inherited information, the current block obtains the reference block based on the BV information, and obtains samples in template areas adjacent to the current block and the reference block based on the inherited IBC-LIC mode and calculates linear model parameters. The reference block is transformed based on the linear model parameters, and the steps are the same as above, to obtain the final prediction block. A residual of the current block is obtained by subtracting the predicted block from original samples corresponding to the current block. The rate-distortion cost (which is denoted as costIdx1) is calculated by operations such as transform and quantization. Other candidate BVs in the merge list are traversed, and the rate-distortion costs costIdx2, costIdx3, costIdx4, etc. are calculated through the same method.

By comparing the costs costIdx1, costIdx2, etc., the minimum cost is recorded and is denoted as costMergeIbc.

In step 3, the encoding end continues to traverse other inter prediction technologies, calculates the rate-distortion cost corresponding to each technology, and selects the prediction mode corresponding to the minimum cost as the optimal prediction mode for the current block.

In some embodiments, if costAmvpIbcLic is the minimum, the current block uses intra block copy illumination compensation technology, and the coding unit-level usage flag of the illumination compensation technology needs to be set to true and written into the bitstream. In addition, the intra block copy illumination compensation mode index also needs to be written into the bitstream.

In some embodiments, if costMergeIbc is the minimum, the current block uses the intra block copy technology of the merge mode, the merge flag of IBC is set to true and written into the bitstream, and the merge index is also written into the bitstream.

In some embodiments, in a case where the current block allows the use of illumination compensation technology and costLic is not the minimum, the current block does not use illumination compensation technology, and the coding unit-level usage flag of the illumination compensation technology needs to be set to false and written into the bitstream; otherwise, other optimal prediction mode information is written into the bitstream, which is not strongly related to this technology and is not described in detail here.

In some embodiments, the encoding end determines a prediction type of the current block and writes first information into the bitstream, where the first information is used to indicate the prediction type of the current block.

The embodiments of the present disclosure do not limit the specific form of the first information.

In an example, the first information may be represented as modeType.

For example, in a case where modeType = MODE_INTRA, it indicates that the prediction type of the current block is intra prediction.

For another example, in a case where modeType = MODE_INTER, it indicates that the prediction type of the current block is inter prediction.

For yet another example, in a case where modeType = MODE_IBC, it indicates that the prediction type of the current block is intra block copy prediction.

In some embodiments, in a case where the first information indicates that the prediction type of the current block is intra block copy prediction, a first flag is written into the bitstream. The first flag is used to indicate whether the current block uses a merge mode.

The embodiments of the present disclosure do not limit the specific form of the first flag.

In an example, the first flag may be represented as merge_flag. The first flag merge_flag is set to different values, to indicate whether the current block uses the merge mode for prediction.

For example, in a case where the value of the first flag merge_flag is 0, it indicates that the current block does not use the merge mode for prediction.

For another example, in a case where the value of the first flag merge_flag is 1, it indicates that the current block uses the merge mode for prediction.

In some embodiments, in the case where the current block does not use the merge mode, second information is written into the bitstream. The second information is used to indicate whether the current block uses an intra block copy illumination compensation mode.

In some embodiments, the second information may be represented as cu_ibc_lic_flag. The second information cu_ibc_lic_flag is set to different values, to indicate whether the current block uses the intra block copy illumination compensation mode.

For example, in a case where the value of the second information cu_ibc_lic_flag is 0, it indicates that the current block does not use the intra block copy illumination compensation mode for prediction.

For another example, in a case where the value of the second information cu_ibc_lic_flag is 1, it indicates that the current block uses the intra block copy illumination compensation mode for prediction.

In some embodiments, in the case where the current block uses the intra block copy illumination compensation mode, index information is written into the bitstream. The index information is used to indicate a mode index of the intra block copy illumination compensation mode used by the current block.

In some embodiments, in the case where the current block uses the intra block copy illumination compensation mode, index information is written into the bitstream. The index information is used to indicate a mode index of the intra block copy illumination compensation mode used by the current block.

The embodiments of the present disclosure do not limit the specific form of the index information.

In some embodiments, the index information may be represented as cu_ibc_lic_index. The index information cu_ibc_lic_index is set to different values, to indicate the mode indexes of the intra block copy illumination compensation mode used by the current block.

For example, in a case where the prediction mode of the current block is the single-model intra block copy illumination compensation mode, the value of the index information cu_ibc_lic_index is a first numerical value.

For another example, in a case where the prediction mode of the current block is the multi-model intra block copy illumination compensation mode, the value of the index flag cu_ibc_lic_index is a second numerical value.

The embodiments of the present disclosure do not limit the specific values of the first numerical value and the second numerical value.

For example, the first numerical value is 0.

For example, the second numerical value is 1.

For example, the above cu_ibc_lic_index may be encoded in a context-based manner or in an equal probability manner.

Manner 5: in a case where the second information indicates that the current block uses the intra block copy illumination compensation mode and the size of the current block is greater than or equal to a second preset size, the multi-model intra block copy illumination compensation mode is determined as the prediction mode of the current block.

In Manner 5, for a large current block, the multi-model intra block copy illumination compensation mode is used by default. That is, during parsing the syntax elements at the encoding end, in a case where cu_ibc_lic_flag is true and the size of the current block is greater than the second preset size, it indicates that the current block uses the multi-model intra block copy illumination compensation mode; otherwise, it indicates that the current block does not use the illumination compensation technology and there is no need to parse the index.

The embodiments of the present disclosure do not limit the specific indicator(s) for measuring of the size of the current block.

For example, a width and height of the current block may be used to measure the size of the current block. For example, in a case where the width of the current block is greater than threshold 1 and the height of the current block is greater than threshold 2, it is determined that the size of the current block is greater than the second preset size. A value of threshold 1 may be 4, 8, 16, 32, 128, 256, etc. A value of threshold 2 may be 4, 8, 16, 32, 128, 256, etc. Threshold 1 may be equal to threshold 2.

For example, a product of the width and height of the current block (i.e., an area of the current block) may be used to measure the size of the current block. For example, in a case where the area of the current block is greater than or equal to threshold 3, it is determined that the size of the current block is greater than the second preset size. A value of threshold 3 may be 16, 32, 128, 256, etc.

For example, the number of samples included in the current block may be used to measure the size of the current block. For example, in a case where the number of samples included in the current block is greater than or equal to threshold 4, it is determined that the size of the current block is greater than the second preset size. A value of threshold 4 may be 16, 32, 128, 256, 1024, etc.

In some embodiments, in a case where the second information indicates that the current block uses the intra block copy illumination compensation mode and the size of the current block is greater than or equal to the second preset size, the multi-model intra block copy illumination compensation mode is determined as the prediction mode of the current block.

The second information in the above embodiments only indicates whether the current block uses the intra block copy illumination compensation mode, and does not indicate the mode index of the intra block copy illumination compensation mode. The mode index of the intra block copy illumination compensation mode is indicated by the index information.

In some embodiments, the second information indicates whether the current block uses the intra block copy illumination compensation mode, and the second information can further indicate the mode index of the intra block copy illumination compensation mode.

In an example, cu_ibc_lic_mode may be used in this embodiment to represent the second information. Alternatively, another syntax element may be used to represent the second information, which will not be limited in the embodiments of the present disclosure.

For example, in a case where the prediction mode of the current block is a non-intra block copy illumination compensation mode, it is determined that the value of the second information cu_ibc_lic_mode is a first numerical value.

For another example, in a case where the prediction mode of the current block is the single-model intra block copy illumination compensation mode, it is determined that the value of the second information cu_ibc_lic_mode is a second numerical value.

For yet another example, in a case where the prediction mode of the current block is the multi-model intra block copy illumination compensation mode, it is determined that the value of the second information cu_ibc_lic_mode is a third numerical value.

The embodiments of the present disclosure do not limit the specific values of the first numerical value, the second numerical value and the third numerical value.

In an example, the first numerical value is 0, the second numerical value is 1, and the third numerical value is 2.

In some embodiments, in a case where the current block uses the merge mode, the encoding end can determine the prediction mode of the current block in at least the following manners.

Manner 1: in the case where the current block uses the merge mode, a prediction mode of the reference block is determined as the prediction mode of the current block.

Manner 2: in the case where the current block uses the merge mode, the single-model intra block copy illumination compensation mode is determined as the prediction mode of the current block.

Manner 3: in the case where the current block uses the merge mode, the multi-model intra block copy illumination compensation mode is determined as the prediction mode of the current block.

Manner 4: in the case where the current block uses the merge mode, the prediction mode is not obtained by inheritance. Instead, by calculating the rate-distortion cost of each candidate prediction mode for predicting the current block, a candidate prediction mode with a minimum cost is determined as the prediction mode of the current block. In an example, fourth information is written into the bitstream, and the prediction mode of the current block is indicated by the fourth information.

The above description introduces the specific process of determining, by the encoding end, the prediction mode of the current block.

After determining the prediction mode of the current block based on the above steps, the encoding end performs the following step S202.

In S202, in response to that the prediction mode of the current block is the multi-model intra block copy illumination compensation mode, a reference block of the current block is determined, and N groups of linear model parameters are determined.

N is a positive integer greater than 1.

Based on the above steps, the encoding end determines the prediction mode of the current block. In the case where the prediction mode of the current block is the multi-model intra block copy illumination compensation mode, the encoding end needs to determine the N groups of linear model parameters and determine the reference block of the current block. Next, a group of linear model parameters is selected from the N groups of linear model parameters as target linear model parameters, and linear transform is performed on the reference block of the current block to obtain a prediction block with a good illumination compensation effect, thereby improving the prediction accuracy and encoding performance.

The specific process of determining the reference block of the current block is introduced below.

In some embodiments, the reference block of the current block is also referred to as a prediction block of the current block, or an initial prediction block of the current block, or a first prediction block of the current block. That is, in the embodiments of the present disclosure, the reference block of the current block can be understood as a prediction block that is not subjected to illumination compensation.

In some embodiments, in the intra prediction, the encoding end determines the reference block of the current block in a current picture (i.e., a current frame).

For example, in FIG. 7, the solid line with an arrow is block vector (BV) information of the current block. At the encoding end, through the BV, a matching reconstructed block is found for the current block as the reference block of the current block.

Similar to the inter prediction, the IBC has two modes, where one is advanced motion vector prediction (AMVP) mode and the other is a skip/merge mode (i.e., the merge mode).

In an example, in the AMVP mode, the encoding end builds an MVP candidate list, determines an optimal MVP from the MVP candidate list, determines a starting point of motion estimation based on the selected MVP, and then searches near the starting point to obtain the reference block of the current block.

In an example, in the skip/merge mode, the encoding end builds an MVP candidate list, determines an optimal MVP from the MVP candidate list, uses the selected MVP as an MV of the current point, and then determines the reference block of the current block in the current picture based on the MV.

In some embodiments, the encoding end may also use other existing manners to determine the reference block of the current block.

The specific process of determining, by the encoding end, the N groups of linear model parameters is introduced below.

In the embodiments of the present disclosure, in the case where the encoding end determines that the prediction mode of the current block is the multi-model intra block copy illumination compensation mode, multiple groups of linear model parameters need to be determined, and a group of linear model parameters is selected from the multiple groups of linear model parameters for performing linear transform on the reference block of the current block to obtain a prediction value of the current block.

The embodiments of the present disclosure do not limit the specific parameters included in each group of linear model parameters. For example, the parameters may be any parameters related to linear transform.

In an example, each group of linear model parameters among the N groups of linear model parameters includes a scaling parameter a and an offset parameter b. It should be noted that, among the N groups of linear model parameters, parameters included in each group are not completely the same.

For example, the N groups of linear model parameters in the embodiments of the present disclosure are shown in Table 4.

After determining the N groups of linear model parameters shown in Table 4, the encoding end can select a group of linear model parameters from the N groups of linear model parameters shown in Table 4 above, and perform linear transform on the reference block of the current block to achieve illumination compensation. Therefore, a reference block after illumination compensation is obtained, and then the reference block after illumination compensation is determined as the prediction block of the current block.

The embodiments of the present disclosure do not limit the specific manner for the encoding end to determine the N groups of linear model parameters.

In some embodiments, the N groups of linear model parameters are preset values or empirical values.

In some embodiments, the encoding end determines the N groups of linear model parameters through the following step S202-A.

In S202-A, the N groups of linear model parameters are determined based on a surrounding reconstructed area of the reference block and a surrounding reconstructed area of the current block.

In this embodiment, the encoding end determines the surrounding reconstructed area of the reference block and the surrounding reconstructed area of the current block, and then determines the N groups of linear model parameters based on the surrounding reconstructed area of the reference block and the surrounding reconstructed area of the current block.

For example, the surrounding reconstructed area of the reference block includes a reconstructed area adjacent to the reference block and/or a reconstructed area not adjacent to the reference block. Correspondingly, the surrounding reconstructed area of the current block includes a reconstructed area adjacent to the current block and/or a reconstructed area not adjacent to the current block.

In the embodiments of the present disclosure, the encoding end can determine the N groups of linear model parameters that are different based on feature information of the surrounding reconstructed area of the reference block and feature information of the surrounding reconstructed area of the current block. The N groups of linear model parameters that are different may achieve different illumination compensation effects. Thus, the encoding end may select, according to actual situations, a group of linear model parameters with a target illumination compensation effect from the N groups of linear model parameters with different illumination compensation effects, to perform illumination compensation on the reference block of the current block, which improves the illumination compensation effect and prediction effect, and thereby improves the encoding performance.

The embodiments of the present disclosure do not limit the specific manner in which the encoding end determines the N groups of linear model parameters based on the surrounding reconstructed area of the reference block and the surrounding reconstructed area of the current block.

In some embodiments, the encoding end first determines one group of linear model parameters based on the surrounding reconstructed area of the reference block and the surrounding reconstructed area of the current block. For example, the process of determining the one group of linear model parameters based on the surrounding reconstructed area of the reference block and the surrounding reconstructed area of the current block may be performed with reference to the method shown in the above formula (3). Then, the one group of linear model parameters is adjusted to obtain the N groups of linear model parameters.

In some embodiments, the encoding end partitions the surrounding reconstructed area of the reference block into N sub-areas. For example, based on color information, luma information, bit depth and other feature information of the surrounding reconstructed area of the reference block, the surrounding reconstructed area of the reference block is partitioned into N first sub-areas. Correspondingly, according to the N first sub-areas of the reference block, the surrounding reconstructed area of the current block is partitioned into N second sub-areas, where a single first sub-area corresponds to one second sub-area. In this way, a group of linear model parameters may be determined according to each first sub-area of the N first sub-areas and according to the first sub-area and a second sub-area corresponding to the first sub-area. For example, the group of linear model parameters 1 is determined according to first sub-area 1 and second sub-area 1, and the group of linear model parameters 2 is determined according to first sub-area 2 and second sub-area 2, and so on; and thus, the N groups of linear model parameters may be determined. For example, the process of determining the group of linear model parameters 1 according to first sub-area 1 and second sub-area 1 may be performed with reference to the method shown in the above formula (3).

In some embodiments, the above S202-A includes the following steps S202-A1 to S202-A3.

In S202-A1, a first sample set is determined from the surrounding reconstructed area of the reference block, and a second sample set is determined from the surrounding reconstructed area of the current block.

In S202-A2, the first sample set and the second sample set are classified into N groups of sample sets, where any one group of sample sets among the N groups of sample sets includes at least one first sample and at least one second sample.

In S202-A3, for an i-th group of sample sets among the N groups of sample sets, an i-th group of linear model parameters is determined based on first sample(s) and second sample(s) included in the i-th group of sample sets, where i is a positive integer less than or equal to N.

In the embodiments of the present disclosure, for the convenience of description, samples (i.e., reconstructed samples) included in the surrounding reconstructed area of the reference block are denoted as first samples, and samples (i.e., reconstructed samples) included in the surrounding reconstructed area of the current block are denoted as second samples.

In this embodiment, after determining the surrounding reconstructed area of the reference block and the surrounding reconstructed area of the current block, the encoding end determines the first sample set from the surrounding reconstructed area of the reference block and determines the second sample set from the surrounding reconstructed area of the current block, where the first sample set includes at least one first sample and the second sample set includes at least one second sample set.

The embodiments of the present disclosure do not limit the specific manner in which the encoding end determines the first sample set from the surrounding reconstructed area of the reference block and determines the second sample set from the surrounding reconstructed area of the current block.

For example, the encoding end acquires at least one first sample from the surrounding reconstructed area of the reference block according to a preset acquisition step size to constitute the first sample set, and acquires at least one second sample from the surrounding reconstructed area of the current block according to the preset acquisition step size to constitute the second sample set.

For another example, the encoding end determines all first samples included in the surrounding reconstructed area of the reference block as the first sample set, and determines all second samples included in the surrounding reconstructed area of the current block as the second sample set.

In some embodiments, the surrounding reconstructed area of the reference block includes a template area of the reference block, and the surrounding reconstructed area of the current block includes a template area of the current block. In this case, the above S202-A1 includes the following step S202-A1.

In S202-A11, the first sample set is determined from the template area of the reference block, and the second sample set is determined from the template area of the current block.

In this embodiment, in the case where the surrounding reconstructed area of the reference block includes the template area of the reference block and the surrounding reconstructed area of the current block includes the template area of the current block, the encoding end can directly determine the first sample set from the template area of the reference block and determine the second sample set from the template area of the current block.

The specific implementations of the encoding end determining the first sample set from the template area of the reference block and determining the second sample set from the template area of the current block include but are not limited to the following manners.

Manner 1: the number of first samples to be selected and the number of second samples to be selected are set according to a width and a height of the current block.

For example, in a case where the width or height of the current block is equal to preset value 1 (e.g., 4), second samples with the number of preset value 1 (e.g., 4) are taken from each of the top template and the left template of the current block to constitute the second sample set, and the second sample set includes 8 second samples; first samples with the number of preset value 1 (e.g., 4) are taken from each of the top template and the left template of the reference block to constitute the first sample set, and the first sample set includes 8 first samples.

For another example, in a case where the width of the current block is preset value 2 (e.g., 16) and the height of the current block is preset value 3 (e.g., 4), 4 second samples are taken from the left template of the current block, and second samples with the number of preset value 5 (e.g., 4) are taken from the top template of the current block according to a step size of preset value 4 (e.g., 3) to constitute the second sample set, and the second sample set includes 8 second samples; 4 first samples are taken from the left template of the reference block, and first samples with the number of preset value 5 (e.g., 4) are taken from the top template of the reference block according to the step size of preset value 4 (e.g., 3) to constitute the first sample set, and the first sample set includes 8 first samples.

For yet another example, in a case where both the width and height of the current block are not equal to preset value 1 (e.g., 4), second samples with the number of the logarithm of the relatively small side length to base 2 are obtained from reconstructed samples included in the top template and the left template of the current block to constitute the second sample set; and first samples with the number of the logarithm of the relatively small side length to base 2 are obtained from reconstructed samples included in the top template and the left template of the reference block to constitute the first sample set.

For example, the top template includes one sample row, and the left template includes one sample column.

Manner 2: the encoding end performs sampling in the template area of the reference block according to a first sampling step size to obtain the first sample set, and performs sampling in the template area of the current block according to the first sampling step size to obtain the second sample set, where the first sampling step size is less than a preset sampling step size.

In this Manner 2, the encoding end may increase the number of samples involved in the calculation of the linear model parameters by reducing the sampling step size, so as to improve the calculation accuracy of the linear model parameters.

For example, the encoding end performs sampling in the template area of the reference block according to the first sampling step size to obtain the first sample set, and performs sampling in the template area of the current block according to the first sampling step size to obtain the second sample set, where the first sampling step size is less than the preset sampling step size.

For example, the first sampling step size is less than 3.

Manner 3: the encoding end determines all samples included in the template area of the reference block as the first sample set, and determines all samples included in the template area of the current block as the second sample set.

In Manner 3, all samples included in the template area of the reference block may be determined as the first sample set, and all samples included in the template area of the current block may be determined as the second sample set, so as to increase the number of samples involved in the calculation of the linear model parameters and improve the calculation accuracy of the linear model parameters.

The embodiments of the present disclosure do not limit the specific sizes of the template area of the reference block and the template area of the current block.

In some embodiments, as shown in FIG. 12, the template area of the reference block includes a top template area of the reference block and/or a left template area of the reference block, and the template area of the current block includes a top template area of the current block and/or a left template area of the current block.

In some embodiments, in order to increase the number of samples involved in the calculation of the linear model parameters, the template area can be enlarged.

In an example, the top template is expanded. For example, as shown in FIG. 13, a left side template area of the reference block includes the left template area of the reference block and a bottom left template area of the reference block, and a left side template area of the current block includes the left template area of the current block and a bottom left template area of the current block.

In an example, the left template is expanded. For example, as shown in FIG. 14, the number of sample rows included in a top side template area of the reference block is greater than or equal to a preset number of rows, and the number of sample rows included in a top side template area of the current block is greater than or equal to the preset number of rows.

In this way, in the embodiments of the present disclosure, when samples are selected, it is possible to determine the first sample set from the top side template and/or the left side template of the reference block shown in FIGS. 13 and 14 and determine the second sample set from the top side template and/or the left side template of the current block shown in FIGS. 13 and 14, so as to increase the number of samples in the first sample set and the second sample set.

In some embodiments, the encoding end may further increase the number of rows in the top side template to achieve template expansion. For example, the number of sample rows included in the top side template area of the reference block is greater than or equal to the preset number of rows, and the number of sample rows included in the top side template area of the current block is greater than or equal to the preset number of rows. For example, the preset number of rows may be 2, 3, 4, 5, etc.

In some embodiments, the encoding end may further increase the number of columns in the left side template to achieve template expansion. For example, the number of sample columns included in the left side template area of the reference block is greater than or equal to a preset number of columns, and the number of sample columns included in the left side template area of the current block is greater than or equal to the preset number of columns. For example, the preset number of columns may be 2, 3, 4, 5, etc.

After determining the first sample set from the surrounding reconstructed area of the reference block and determining the second sample set from the surrounding reconstructed area of the current block through the above steps, the encoding end performs the above step S202-A2.

The embodiments of the present disclosure do not limit the specific manner in which the encoding end classifies the first sample set and the second sample set into the N groups of sample sets.

In some embodiments, the encoding end classifies the first sample set and the second sample set into the N groups of sample sets based on feature information such as color information, luma information, and bit depth of each of the first samples and the second samples in the first sample set and the second sample set, and each of the N groups of sample sets includes at least one first sample and at least one second sample. For example, in the first sample set and the second sample set, first sample(s) and second sample(s), which have similar feature information such as color information and luma information, are classified into a group of sample sets.

In some embodiments, the above S202-A2 includes the following steps.

In S202-A21, first samples included in the first sample set are classified into N classes of first samples.

In S202-A22, second samples included in the second sample set are classified into N classes of second samples.

In S202-A23, the N groups of sample sets are obtained based on the N classes of first samples and the N classes of second samples.

In this embodiment, the encoding end classifies the first samples included in the first sample set into the N classes of first samples, and at the same time, classifies the second samples included in the second sample set into the N classes of second samples, where each of the N classes of first samples includes at least one first sample, and each of the N classes of second samples includes at least one second sample.

The embodiments of the present disclosure do not limit the specific manner in which the encoding end classifies the first samples included in the first sample set into the N classes of first samples.

In some embodiments, the encoding end classifies, based on feature information of each of the first samples in the first sample set, the first samples to obtain the N classes of first samples.

In some embodiments, the above S202-A21 includes the following steps S202-A21-a1 and S202-A21-a2.

In S202-A21-a1, a first sample mean value of the first sample set is determined.

In S202-A21-a2, the first sample set is classified into the N classes of first samples based on the first sample mean.

In this embodiment, the encoding end classifies the first samples included in the first sample set based on the sample mean value.

Specifically, the encoding end first determines the sample mean value of the first sample set based on a reconstructed value of each first sample in the first sample set. For the convenience of description, the sample mean value is referred to as the first sample mean value. Then, the encoding end classifies the first samples included in the first sample set into the N classes of first samples based on the first sample mean value.

For example, first samples in the first sample set that are greater than or equal to the first sample mean value are classified into a first class of first samples; and first samples in the first sample set that are less than or equal to the first sample mean value are classified into a second class of first samples.

For another example, first samples in the first sample set whose difference values with the first sample mean value are between threshold c and threshold d are classified into a first class of first samples; first samples in the first sample set whose difference values with the first sample mean value are less than threshold c are classified into a second class of first samples; and first samples in the first sample set whose difference values with the first sample mean value are greater than threshold d are classified into a third class of first samples.

In some embodiments, the above S202-A21 includes the following step S202-A21-b.

In S202-A21-b, the first sample set is classified into the N classes of first samples based on bit depths of the first samples in the first sample set.

In this embodiment, the encoding end classifies the first sample set into the N classes of first samples based on a bit depth of each of the first samples in the first sample set.

In an example, the first samples in the first sample set are classified into 2 classes of first samples, 3 classes of first samples, or 4 classes of first samples based on sizes of the bit depths, and the bit depths of the first samples in each class of first samples are close.

In another example, the encoding end determines a first bit depth mean value of the first sample set, and classifies the first sample set into the N classes of first samples based on the first bit depth mean value.

For example, first samples in the first sample set whose bit depths are greater than or equal to the first bit depth mean value are classified into a first class of first samples; and first samples in the first sample set whose bit depths are less than or equal to the first bit depth mean value are classified into a second class of first samples.

For another example, first samples in the first sample set whose difference values between bit depths and the first bit depth mean value are between threshold e and threshold f are classified into a first class of first samples; first samples in the first sample set whose difference values between bit depths and the first bit depth mean value are less than threshold e are classified into a second class of first samples; and first samples in the first sample set whose difference values between bit depths and the first bit depth mean value are greater than threshold f are classified into a third class of first samples.

The encoding end classifies the first samples in the first sample set into the N classes of first samples based on the above step, and also classifies the second samples in the second sample set into the N classes of second samples.

The embodiments of the present disclosure do not limit the specific manner in which the encoding end classifies the second samples included in the second sample set into the N classes of second samples.

In some embodiments, the encoding end may classify the second samples included in the second sample set into the N classes of second samples in the same manner as the classification of the N classes of first samples.

In some embodiments, the encoding end classifies the second samples included in the second sample set into the N classes of second samples through the following step. That is, the above S202-A22 includes the following step.

In S202-A221, for a j-th class of first samples in the N classes of first samples, second samples in the second sample set that correspond to first samples in the j-th class are determined as a j-th class of second samples, where j is a positive integer less than or equal to N.

Based on the above steps, the encoding end classifies the first samples in the first sample set into the N classes of first samples, and for the j-th class of first samples in the N classes of first samples, the encoding end determines the second samples in the second sample set that correspond to the j-th class of first samples as the j-th class of second samples, where j is a positive integer less than or equal to N.

For example, the encoding end classifies first samples in the first sample set that are greater than or equal to the first sample mean value into a first class of first samples; correspondingly, the encoding end classifies second samples in the second sample set whose positions correspond to the first samples in the first class into a first class of second samples. The encoding end classifies first samples in the first sample set that are less than the first sample mean value into a second class of first samples; correspondingly, the encoding end classifies second samples in the second sample set whose positions correspond to the first samples in the second class into a second class of second samples.

It can be seen from the above that, the N classes of first samples obtained by classifying the first sample set by the encoding end are in one-to-one correspondence with the N classes of second samples obtained by classifying the second sample set by the encoding end. For example, the first class of first samples corresponds to the first class of second samples, and the second class of first samples corresponds to the second class of second samples. Therefore, the encoding end may determine the j-th class of first samples in the N classes of first samples and the j-th class of second samples in the N classes of second samples as a j-th group of sample sets. In this way, the N classes of first samples and the N classes of second samples constitute the N groups of sample sets.

The encoding end classifies the first sample set and the second sample set into the N groups of sample sets based on the above steps and then performs the above step S202-A3.

In the embodiments of the present disclosure, the encoding end determines a group of linear model parameters based on each group of sample sets in the N groups of sample sets, so as to obtain the N groups of linear model parameters.

In the embodiments of the present disclosure, the specific process of determining each group of linear model parameters based on each group of sample sets in the N groups of sample sets is the same. For the convenience of description, the process of determining an i-th group of linear model parameters based on an i-th group of sample sets is taken as an example for description.

The embodiments of the present disclosure do not limit the specific manner for determining the i-th group of linear model parameters based on first sample(s) and second sample(s) included in the i-th group of sample sets in the above S202-A3.

In an example, a linear relationship between the first sample(s) and the second sample(s) included in the i-th group of sample sets is determined, and then the i-th group of linear model parameters is determined. Since the first sample and the second sample included in the i-th group of sample sets are known, a scaling coefficient a and an offset parameter b corresponding to the i-th group of sample sets may be determined by solving a linear equation, to obtain the i-th group of linear model parameters.

In an example, the first samples in the i-th group of sample sets are added to obtain a first sum value, and the second samples in the i-th group of sample sets are added to obtain a second sum value; a sum of squares of the first samples in the i-th group of sample sets is determined to obtain a third sum value; a fourth sum value is obtained by multiplying the first samples and the second samples in the i-th group of sample sets and then adding the multiplied results; and the i-th group of linear model parameters is determined based on the first sum value, the second sum value, the third sum value and the fourth sum value.

In this example, the first samples xi in the i-th group of sample sets are added to obtain the first sum value sumXi; the second samples yi in the i-th group of sample sets are added to obtain the second sum value sumYi; the sum of squares of the first samples xi in the i-th group of sample sets is determined to obtain the third sum value sumXiXi; the fourth sum value sumXiYi is obtained by multiplying the first samples xi and the second samples yi in the i-th group of sample sets and then adding the multiplied results; and the i-th group of linear model parameters is determined based on the first sum value, the second sum value, the third sum value and the fourth sum value.

The embodiments of the present disclosure do not limit the specific manner in which the encoding end determines the i-th group of linear model parameters based on the first sum value, the second sum value, the third sum value and the fourth sum value.

In some embodiments, the i-th group of linear model parameters includes a scaling coefficient ai and an offset parameter bi.

For example, the encoding end determines the i-th group of linear model parameters through the following formula (4).

The above is an introduction to the process of determining the i-th group of linear model parameters based on the i-th group of sample sets. The encoding end can determine the N groups of linear model parameters based on the N groups of sample sets with reference to the above method.

In some embodiments, the encoding end may write the determined N groups of linear model parameters into the bitstream, so that the decoding end may obtain the N groups of linear model parameters by decoding the bitstream.

After determining the N groups of linear model parameters based on the above steps, the encoding end performs the following step S203.

In S203, a target group of linear model parameters is selected from the N groups of linear model parameters, and linear transform is performed on the reference block using the target group of linear model parameters to obtain a prediction block of the current block.

In the embodiments of the present disclosure, in the case where the encoding end determines that the prediction mode of the current block is the multi-model intra block copy illumination compensation mode, the encoding end determines the reference block of the current block and determines the N groups of linear model parameters. Next, the encoding end selects the target linear model parameters from the N groups of linear model parameters, and performs linear transform on the reference block of the current block using the target linear model parameters, which improves the illumination compensation effect of the reference block, and thereby improves the prediction effect and encoding performance.

The embodiments of the present disclosure do not limit the specific manner in which the encoding end selects the target group of linear model parameters from the N groups of linear model parameters.

In some embodiments, the encoding end selects the target group of linear model parameters from the N groups of linear model parameters using the following steps.

In S203-A1, a second sample mean value of the reference block is determined.

In S203-A2, the target group of linear model parameters is selected from the N groups of linear model parameters based on the second sample mean value.

The method in this embodiment corresponds to the method of S202-A21-a1 and S202-A21-a2 described above.

It can be seen from the above S202-A21-a1 and S202-A21-a2 that, when the encoding end determines the N groups of linear model parameters, the encoding end classifies the first samples included in the first sample set into the N classes of first samples based on the first sample mean value, and classifies the second samples included in the second sample set into the N classes of second samples based on position information of the N classes of first samples, so as to obtain the N groups of sample sets. Finally, the N groups of linear model parameters are determined based on the N groups of sample sets. Based on this, when the encoding end selects the target linear model parameters from the N groups of linear model parameters, the encoding end determines a sample mean value (which is denoted as the second sample mean value) of the reference block of the current block, i.e., a mean value of reconstructed sample values included in the reference block. In this way, the target group of linear model parameters may be selected from the N groups of linear model parameters based on the second sample mean value.

The embodiments of the present disclosure do not limit the specific manner in which the encoding end selects the target group of linear model parameters from the N groups of linear model parameters based on the second sample mean value.

In a possible implementation, the encoding end compares the second sample mean value with sample values in the N groups of sample sets corresponding to the N groups of linear model parameters, selects a group of linear model parameters corresponding to a group of sample sets closest to the second sample mean value, and determines the group of linear model parameters as the target group of linear model parameters. For example, the second sample mean value is closest to (i.e., has a smallest distance to) first sample(s) and second sample(s) included in a k-th group of sample sets in the N groups of sample sets, and a group of linear model parameters corresponding to the k-th group of sample sets among the N groups of linear model parameters is determined as the target group of linear model parameters.

In a possible implementation, the encoding end selects the target group of linear model parameters from the N groups of linear model parameters based on the second sample mean value and the first sample mean value.

It can be seen from the above S202-A21-a1 and S202-A21-a2 that, in some embodiments, when the encoding end classifies the first sample set and the second sample set into the N groups of sample sets, first samples in the first sample set that are greater than or equal to the first sample mean value are classified into the first class of first samples, and first samples in the first sample set that are less than or equal to the first sample mean value are classified into the second class of first samples. Then, the N groups of linear model parameters are determined based on the N groups of sample sets. Based on this, the encoding end may select the target group of linear model parameters from the N groups of linear model parameters based on magnitudes of the second sample mean value and the first sample mean value.

For example, in a case where the second sample mean value is greater than or equal to the first sample mean value, a group of linear model parameters corresponding to the first class of first samples among the N groups of linear model parameters is determined as the target group of linear model parameters.

For another example, in a case where the second sample mean value is less than or equal to the first sample mean value, a group of linear model parameters corresponding to the second class of first samples among the N groups of linear model parameters is determined as the target group of linear model parameters.

In some embodiments, the encoding end selects the target group of linear model parameters from the N groups of linear model parameters using the following steps.

In S203-B1, a second bit depth mean value of the reference block is determined.

In S203-B2, the target group of linear model parameters is selected from the N groups of linear model parameters based on the second bit depth mean value.

The method in this embodiment corresponds to the method of S202-A21-b1 and S202-A21-b2 mentioned above.

It can be seen from the above S202-A21-b1 and S202-A21-b2 that, when the encoding end determines the N groups of linear model parameters, the encoding end classifies the first samples included in the first sample set into the N classes of first samples based on the first bit depth mean value, and classifies the second samples included in the second sample set into the N classes of second samples based on position information of the N classes of first samples, so as to obtain the N groups of sample sets. Finally, the N groups of linear model parameters are determined based on the N groups of sample sets. Based on this, when the encoding end selects the target linear model parameters from the N groups of linear model parameters, the encoding end determines a bit depth mean value (which is denoted as the second bit depth mean value) of the reference block of the current block, i.e., a mean value of bit depths of the reconstructed sample values included in the reference block. In this way, the target group of linear model parameters may be selected from the N groups of linear model parameters based on the second bit depth mean value.

The embodiments of the present disclosure do not limit the specific manner in which the encoding end selects the target group of linear model parameters from the N groups of linear model parameters based on the second bit depth mean value.

In a possible implementation, the encoding end compares the second bit depth mean value with bit depths of samples in the N groups of sample sets corresponding to the N groups of linear model parameters, selects a group of linear model parameters corresponding to a group of sample sets closest to the second bit depth mean value, and determines the group of linear model parameters as the target group of linear model parameters. For example, the second bit depth mean value is closest to the bit depths of the first sample(s) and the second sample(s) included in the k-th group of sample sets in the N groups of sample sets, and thus a group of linear model parameters corresponding to the k-th group of sample sets among the N groups of linear model parameters is determined as the target group of linear model parameters.

In a possible implementation, the encoding end selects the target group of linear model parameters from the N groups of linear model parameters based on the second bit depth mean value and the first bit depth mean value.

It can be seen from the above S202-A21-b1 and S202-A21-b2 that, in some embodiments, when the encoding end classifies the first sample set and the second sample set into the N groups of sample sets, first samples in the first sample set whose bit depths are greater than or equal to the first bit depth mean value are classified into the first class of first samples, and first samples in the first sample set whose bit depths are less than or equal to the first bit depth mean value are classified into the second class of first samples. Then, the N groups of linear model parameters are determined based on the N groups of sample sets. Based on this, the encoding end may select the target group of linear model parameters from the N groups of linear model parameters based on magnitudes of the second bit depth mean value and the first bit depth mean value.

For example, in a case where the second bit depth mean value is greater than or equal to the first bit depth mean value, a group of linear model parameters corresponding to the first class of first samples among the N groups of linear model parameters is determined as the target group of linear model parameters.

For another example, in a case where the second bit depth mean value is less than or equal to the first bit depth mean value, a group of linear model parameters corresponding to the second class of first samples among the N groups of linear model parameters is determined as the target group of linear model parameters.

After determining the target group of linear model parameters from the N groups of linear model parameters based on the above steps, the encoding end performs linear transform on the reference block of the current block using the target group of linear model parameters.

For example, the target linear model parameters include a scaling parameter a1 and an offset parameter b1, and the encoding end performs linear transform on the reference block based on the scaling parameter and the offset parameter to obtain the prediction block.

For example, the encoding end performs linear transform on the reference block of the current block based on the above formula (5).

The video encoding method provided in the embodiments of the present disclosure proposes a multi-model intra block copy illumination compensation mode to increase the modes of intra block copy illumination compensation, so that the encoding end may select a single-model intra block copy illumination compensation mode (i.e., having only one group of model parameters) for prediction compensation or select the multi-model intra block copy illumination compensation mode (i.e., including multiple groups of model parameters) for prediction compensation according to the specific situations of the current block. In a case where the multi-model intra block copy illumination compensation mode is selected to perform prediction compensation on the current block, N groups of linear model parameters are determined, and target linear model parameters are selected from the N groups of linear model parameters. The target model parameters are then used for performing linear transform on the reference block of the current block to obtain the prediction block of the current block, thereby improving the illumination compensation effect and in turn improving the prediction accuracy and encoding performance.

It should be understood that FIGS. 11 to 15 are merely examples of the present disclosure and should not be construed as limitations to the present disclosure.

The preferred embodiments of the present disclosure are described in detail above in conjunction with the accompanying drawings. However, the present disclosure is not limited to the specific details in the above embodiments. Within the technical concept of the present disclosure, a variety of simple variations may be made to the technical solution of the present disclosure, and these simple variations all fall within the protection scope of the present disclosure. For example, the various specific technical features described in the above specific embodiments may be combined in any suitable manner without contradiction. In order to avoid unnecessary repetition, the various possible combinations are not described additionally in the present disclosure. For another example, different implementations of the present disclosure may also be combined arbitrarily, as long as it does not violate the concept of the present disclosure, which should also be regarded as the contents disclosed in the present disclosure.

It should also be understood that in various method embodiments of the present disclosure, the magnitudes of serial numbers of the above processes do not imply a sequential order of execution, and the order of execution of the processes should be determined by their function and inherent logic without constituting any limitation of the process of implementing the embodiments of the present disclosure. In addition, in the embodiments of the present disclosure, the term "and/or" is only a description of an association relationship of associated objects, which indicates that there may be three kinds of relationships. Specifically, "A and/or B" may represent three situations: A exists alone, both A and B exist, and B exists alone. In addition, the character "/" in the present disclosure generally indicates that the associated objects before and after this character are in an "or" relationship.

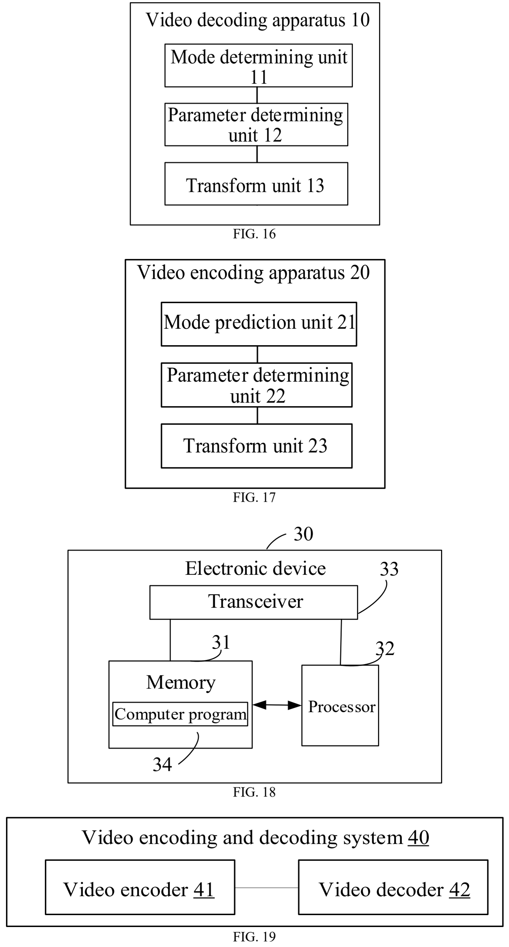

In conjunction with FIGS. 11 to 15, the method embodiments of the present disclosure are described in detail above, and the apparatus embodiments of the present disclosure will be described in detail below in conjunction with FIGS. 16 and 17.

FIG. 16 is a schematic block diagram of a video encoding apparatus provided in an embodiment of the present disclosure. The video encoding apparatus 10 is applied to the above-mentioned video encoder.

As shown in FIG. 16, the video encoding apparatus 10 includes:

a mode determining unit 11, configured to determine a prediction mode of a current block;
a parameter determining unit 12, configured to, in response to that the prediction mode of the current block is a multi-model intra block copy illumination compensation mode, determine a reference block of the current block and determine N groups of linear model parameters, where N is a positive integer greater than 1; and
a transform unit 13, configured to select a target group of linear model parameters from the N groups of linear model parameters, and perform linear transform on the reference block using the target group of linear model parameters, to obtain a prediction block of the current block.

In some embodiments, the parameter determining unit 12 is specifically configured to determine the N groups of linear model parameters based on a surrounding reconstructed area of the reference block and a surrounding reconstructed area of the current block.

In some embodiments, the parameter determining unit 12 is specifically configured to: determine a first sample set from the surrounding reconstructed area of the reference block, and determine a second sample set from the surrounding reconstructed area of the current block; classify the first sample set and the second sample set into N groups of sample sets, any one of the N groups of sample sets including at least one first sample and at least one second sample; and for an i-th group of sample sets among the N groups of sample sets, determine an i-th group of linear model parameters based on the first sample(s) and the second sample(s) included in the i-th group of sample sets, i being a positive integer less than or equal to N.

In some embodiments, the surrounding reconstructed area of the reference block includes a template area of the reference block, and the surrounding reconstructed area of the current block includes a template area of the current block. The parameter determining unit 12 is specifically configured to determine the first sample set from the template area of the reference block, and determine the second sample set from the template area of the current block.

In some embodiments, the parameter determining unit 12 is specifically configured to: perform sampling in the template area of the reference block according to a first sampling step size to obtain the first sample set, the first sampling step size being less than a preset sampling step size; and perform sampling in the template area of the current block according to the first sampling step size to obtain the second sample set.

In some embodiments, the parameter determining unit 12 is specifically configured to: determine all samples included in the template area of the reference block as the first sample set; and determine all samples included in the template area of the current block as the second sample set.

In some embodiments, the template area of the reference block includes a top side template area of the reference block and/or a left side template area of the reference block, and the template area of the current block includes a top side template area of the current block and/or a left side template area of the current block.

In some embodiments, the top side template area of the reference block includes a top template area of the reference block and a top right template area of the reference block; and the top side template area of the current block includes a top template area of the current block and a top right template area of the current block.

In some embodiments, the left side template area of the reference block includes a left template area of the reference block and a bottom left template area of the reference block; and the left side template area of the current block includes a left template area of the current block and a bottom left template area of the current block.

In some embodiments, a number of sample rows included in the top side template area of the reference block is greater than or equal to a preset number of rows, and a number of sample rows included in the top side template area of the current block is greater than or equal to the preset number of rows.

In some embodiments, a number of sample columns included in the left side template area of the reference block is greater than or equal to a preset number of columns, and a number of sample columns included in the left side template area of the current block is greater than or equal to the preset number of columns.

In some embodiments, the parameter determining unit 12 is specifically configured to: classify first samples included in the first sample set into N classes of first samples; classify second samples included in the second sample set into N classes of second samples; and obtain the N groups of sample sets based on the N classes of first samples and the N classes of second samples.

In some embodiments, the parameter determining unit 12 is specifically configured to: determine a first sample mean value of the first sample set; and classify the first sample set into the N classes of first samples based on the first sample mean value.

In some embodiments, the parameter determining unit 12 is specifically configured to: classify first samples in the first sample set that are greater than or equal to the first sample mean value into a first class of first samples; and classify first samples in the first sample set that are less than or equal to the first sample mean value into a second class of first samples.

In some embodiments, the parameter determining unit 12 is specifically configured to classify the first sample set into the N classes of first samples based on bit depths of the first samples in the first sample set.

In some embodiments, the parameter determining unit 12 is specifically configured to: determine a first bit depth mean value of the first sample set; and classify the first sample set into the N classes of first samples based on the first bit depth mean value.

In some embodiments, the parameter determining unit 12 is specifically configured to: classify first samples in the first sample set whose bit depths are greater than or equal to the first bit depth mean value into a first class of first samples; and classify first samples in the first sample set whose bit depths are less than or equal to the first bit depth mean value into a second class of first samples.

In some embodiments, the parameter determining unit 12 is specifically configured to: for a j-th class of first samples in the N classes of first samples, determine second samples in the second sample set that correspond to first samples in the j-th class as a j-th class of second samples, j being a positive integer less than or equal to N.

In some embodiments, the parameter determining unit 12 is specifically configured to determine the j-th class of first samples and the j-th class of second samples as a j-th group of sample sets.

In some embodiments, the parameter determining unit 12 is specifically configured to: add first samples in the i-th group of sample sets to obtain a first sum value, and add second samples in the i-th group of sample sets to obtain a second sum value; determine a sum of squares of the first samples in the i-th group of sample sets to obtain a third sum value; obtain a fourth sum value by multiplying the first samples and the second samples in the i-th group of sample sets and then adding multiplied results; and determine the i-th group of linear model parameters based on the first sum value, the second sum value, the third sum value and the fourth sum value.

In some embodiments, the transform unit 13 is specifically configured to: determine a second sample mean value of the reference block; and select the target group of linear model parameters from the N groups of linear model parameters based on the second sample mean value.

In some embodiments, the transform unit 13 is specifically configured to select the target group of linear model parameters from the N groups of linear model parameters based on the second sample mean value and the first sample mean value.

In some embodiments, the transform unit 13 is specifically configured to: in response to that the second sample mean value is greater than or equal to the first sample mean value, determine a group of linear model parameters corresponding to the first class of first samples among the N groups of linear model parameters as the target group of linear model parameters; and in response to that the second sample mean value is less than or equal to the first sample mean value, determine a group of linear model parameters corresponding to the second class of first samples among the N groups of linear model parameters as the target group of linear model parameters.

In some embodiments, the transform unit 13 is specifically configured to: determine a second bit depth mean value of the reference block; and select the target group of linear model parameters from the N groups of linear model parameters based on the second bit depth mean value.

In some embodiments, the transform unit 13 is specifically configured to select the target group of linear model parameters from the N groups of linear model parameters based on the second bit depth mean value and the first bit depth mean value.

In some embodiments, the transform unit 13 is specifically configured to: in response to that the second bit depth mean value is greater than or equal to the first bit depth mean value, determine a group of linear model parameters corresponding to the first class of first samples among the N groups of linear model parameters as the target group of linear model parameters; and in response to that the second bit depth mean value is less than or equal to the first bit depth mean value, determine a group of linear model parameters corresponding to the second class of first samples among the N groups of linear model parameters as the target group of linear model parameters.

In some embodiments, the mode determining unit 11 is specifically configured to: decode a bitstream to obtain first information, the first information being used to indicate a prediction type of the current block; and determine the prediction mode of the current block based on the first information.

In some embodiments, the mode determining unit 11 is specifically configured to: in response to that the first information indicates that the prediction type of the current block is intra block copy prediction, decode the bitstream to obtain a first flag, the first flag being used to indicate whether the current block uses a merge mode; and determine the prediction mode of the current block based on the first flag.

In some embodiments, the mode determining unit 11 is specifically configured to: in response to that the first flag indicates that the current block does not use the merge mode, decode the bitstream to obtain second information, the second information being used to indicate whether the current block uses an intra block copy illumination compensation mode; and determine the prediction mode of the current block based on the second information.

In some embodiments, the mode determining unit 11 is specifically configured to: in response to that the second information indicates that the current block uses the intra block copy illumination compensation mode, decode the bitstream to obtain index information, the index information being used to indicate a mode index of the intra block copy illumination compensation mode used by the current block; and determine the prediction mode of the current block based on the index information.

In some embodiments, the mode determining unit 11 is specifically configured to: in response to that a value of the index information is a first numerical value, determine that the prediction mode of the current block is a single-model intra block copy illumination compensation mode; and in response to that the value of the index flag is a second numerical value, determine that the prediction mode of the current block is the multi-model intra block copy illumination compensation mode.

In some embodiments, the mode determining unit 11 is specifically configured to: in response to that the second information indicates that the current block uses the intra block copy illumination compensation mode and a size of the current block is greater than or equal to a second preset size, determine the multi-model intra block copy illumination compensation mode as the prediction mode of the current block.

In some embodiments, the second information is further used to indicate a mode index of the intra block copy illumination compensation mode, and the mode determining unit 11 is specifically configured to determine the prediction mode of the current block based on a value of the second information.

In some embodiments, the mode determining unit 11 is specifically configured to: in response to that the value of the second information is a first numerical value, determine that the prediction mode of the current block is a non-intra block copy illumination compensation mode; in response to that the value of the second information is a second numerical value, determine that the prediction mode of the current block is a single-model intra block copy illumination compensation mode; and in response to that the value of the second information is a third numerical value, determine that the prediction mode of the current block is the multi-model intra block copy illumination compensation mode.

In some embodiments, the mode determining unit 11 is further configured to: determine whether a size of the current block meets a first preset size before decoding the bitstream to obtain the second information; and decode the bitstream to obtain the second information in response to that the size of the current block meets the first preset size.

In some embodiments, the mode determining unit 11 is further configured to: decode the bitstream to obtain third information before decoding the bitstream to obtain the second information, where the third information is used to indicate whether the current block is decoded using a first tool, and the first tool is mutually exclusive with an intra block copy illumination compensation technology; and decode the bitstream to obtain the second information in response to that the third information indicates that the current block is decoded without using the first tool.

In some embodiments, the mode determining unit 11 is specifically configured to, in response to that the first flag indicates that the current block uses the merge mode, determine a prediction mode of the reference block as the prediction mode of the current block.

In some embodiments, the mode determining unit 11 is specifically configured to, in response to that the first flag indicates that the current block uses the merge mode, determine a single-model intra block copy illumination compensation mode as the prediction mode of the current block.

In some embodiments, the mode determining unit 11 is specifically configured to: in response to that the first flag indicates that the current block uses the merge mode, decode the bitstream to obtain fourth information, the fourth information being used to indicate the prediction mode of the current block; and obtain the prediction mode of the current block based on the fourth information.

In some embodiments, the mode determining unit 11 is further configured to: decode the bitstream to obtain a third flag before decoding the bitstream to obtain the first flag, the third flag being used to indicate whether a current sequence allows local illumination compensation; and in response to that the third flag indicates that the current sequence allows the local illumination compensation, decode the bitstream to obtain the first flag.

It should be understood that, the apparatus embodiments and the method embodiments may correspond to each other, and for similar descriptions, reference can be made to those of the method embodiments, which will not be repeated here to avoid repetition. Specifically, the apparatus 10 shown in FIG. 16 can execute the decoding method of the decoding end in the embodiments of the present disclosure, and the above and other operations and/or functions of each unit in the apparatus 10 are respectively for implementing corresponding processes in each method such as the decoding method of the decoding end mentioned above, which will not be repeated here for the sake of brevity.

FIG. 17 is a schematic block diagram of a video encoding apparatus provided in an embodiment of the present disclosure, and the video encoding apparatus is applied to the above-mentioned encoder.

As shown in FIG. 17, the video encoding apparatus 20 may include:

a mode prediction unit 21, configured to determine a prediction mode of a current block;
a parameter determining unit 22, configured to, in response to that the prediction mode of the current block is a multi-model intra block copy illumination compensation mode, determine a reference block of the current block and determine N groups of linear model parameters, N being a positive integer greater than 1; and
a transform unit 23, configured to select a target group of linear model parameters from the N groups of linear model parameters, and perform linear transform on the reference block using the target group of linear model parameters to obtain a prediction block of the current block.

In some embodiments, the parameter determining unit 22 is specifically configured to determine the N groups of linear model parameters based on a surrounding reconstructed area of the reference block and a surrounding reconstructed area of the current block.

In some embodiments, the parameter determining unit 22 is specifically configured to: determine a first sample set from the surrounding reconstructed area of the reference block, and determine a second sample set from the surrounding reconstructed area of the current block; classify the first sample set and the second sample set into N groups of sample sets, any one of the N groups of sample sets including at least one first sample and at least one second sample; and for an i-th group of sample sets among the N groups of sample sets, determine an i-th group of linear model parameters based on first sample(s) and second sample(s) included in the i-th group of sample sets, i being a positive integer less than or equal to N.

In some embodiments, the surrounding reconstructed area of the reference block includes a template area of the reference block, and the surrounding reconstructed area of the current block includes a template area of the current block. The parameter determining unit 22 is specifically configured to determine the first sample set from the template area of the reference block, and determine the second sample set from the template area of the current block.

In some embodiments, the parameter determining unit 22 is specifically configured to: perform sampling in the template area of the reference block according to a first sampling step size to obtain the first sample set, the first sampling step size being less than a preset sampling step size; and perform sampling in the template area of the current block according to the first sampling step size to obtain the second sample set.

In some embodiments, the parameter determining unit 22 is specifically configured to: determine all samples included in the template area of the reference block as the first sample set; and determine all samples included in the template area of the current block as the second sample set.

In some embodiments, the template area of the reference block includes a top side template area of the reference block and/or a left side template area of the reference block, and the template area of the current block includes a top side template area of the current block and/or a left side template area of the current block.

In some embodiments, the top side template area of the reference block includes a top template area of the reference block and a top right template area of the reference block; and the top side template area of the current block includes a top template area of the current block and a top right template area of the current block.

In some embodiments, the left side template area of the reference block includes a left template area of the reference block and a bottom left template area of the reference block; and the left side template area of the current block includes a left template area of the current block and a bottom left template area of the current block.

In some embodiments, a number of sample rows included in the top side template area of the reference block is greater than or equal to a preset number of rows, and a number of sample rows included in the top side template area of the current block is greater than or equal to the preset number of rows.

In some embodiments, a number of sample columns included in the left side template area of the reference block is greater than or equal to a preset number of columns, and a number of sample columns included in the left side template area of the current block is greater than or equal to the preset number of columns.

In some embodiments, the parameter determining unit 22 is specifically configured to: classify first samples included in the first sample set into N classes of first samples; classify second samples included in the second sample set into N classes of second samples; and obtain the N groups of sample sets based on the N classes of first samples and the N classes of second samples.

In some embodiments, the parameter determining unit 22 is specifically configured to: determine a first sample mean value of the first sample set; and classify the first sample set into the N classes of first samples based on the first sample mean value.

In some embodiments, the parameter determining unit 22 is specifically configured to: classify first samples in the first sample set that are greater than or equal to the first sample mean value into a first class of first samples; and classify first samples in the first sample set that are less than or equal to the first sample mean value into a second class of first samples.

In some embodiments, the parameter determining unit 22 is specifically configured to classify the first sample set into the N classes of first samples based on bit depths of the first samples in the first sample set.

In some embodiments, the parameter determining unit 22 is specifically configured to: determine a first bit depth mean value of the first sample set; and classify the first sample set into the N classes of first samples based on the first bit depth mean value.

In some embodiments, the parameter determining unit 22 is specifically configured to: classify first samples in the first sample set whose bit depths are greater than or equal to the first bit depth mean value into a first class of first samples; and classify first samples in the first sample set whose bit depths are less than or equal to the first bit depth mean value into a second class of first samples.

In some embodiments, the parameter determining unit 22 is specifically configured to, for a j-th class of first samples in the N classes of first samples, determine second samples in the second sample set that correspond to first samples in the j-th class as a j-th class of second samples, j being a positive integer less than or equal to N.

In some embodiments, the parameter determining unit 22 is specifically configured to determine the j-th class of first samples and the j-th class of second samples as a j-th group of sample sets.

In some embodiments, the parameter determining unit 22 is specifically configured to: add first samples in the i-th group of sample sets to obtain a first sum value, and add second samples in the i-th group of sample sets to obtain a second sum value; determine a sum of squares of the first samples in the i-th group of sample sets to obtain a third sum value; obtain a fourth sum value by multiplying the first samples and the second samples in the i-th group of sample sets and then adding multiplied results; determine the i-th group of linear model parameters based on the first sum value, the second sum value, the third sum value and the fourth sum value.

In some embodiments, the transform unit 23 is specifically configured to: determine a second sample mean value

of the reference block; and select the target group of linear model parameters from the N groups of linear model parameters based on the second sample mean value.

In some embodiments, the transform unit 23 is specifically configured to select the target group of linear model parameters from the N groups of linear model parameters based on the second sample mean value and the first sample mean value.

In some embodiments, the transform unit 23 is specifically configured to: in response to that the second sample mean value is greater than or equal to the first sample mean value, determine a group of linear model parameters corresponding to the first class of first samples among the N groups of linear model parameters as the target group of linear model parameters; and in response to that the second sample mean value is less than or equal to the first sample mean value, determine a group of linear model parameters corresponding to the second class of first samples among the N groups of linear model parameters as the target group of linear model parameters.

In some embodiments, the transform unit 23 is specifically configured to: determine a second bit depth mean value of the reference block; and select the target group of linear model parameters from the N groups of linear model parameters based on the second bit depth mean value.

In some embodiments, the transform unit 23 is specifically configured to select the target group of linear model parameters from the N groups of linear model parameters based on the second bit depth mean value and the first bit depth mean value.

In some embodiments, the transform unit 23 is specifically configured to: in response to that the second bit depth mean value is greater than or equal to the first bit depth mean value, determine a group of linear model parameters corresponding to the first class of first samples among the N groups of linear model parameters as the target group of linear model parameters; and in response to that the second bit depth mean value is less than or equal to the first bit depth mean value, determine a group of linear model parameters corresponding to the second class of first samples among the N groups of linear model parameters as the target group of linear model parameters.

In some embodiments, the mode determining unit 21 is specifically configured to: determine a list of candidate prediction modes corresponding to the current block, the candidate prediction modes including the multi-model intra block copy illumination compensation mode; determine a cost of each candidate prediction mode in the list of candidate prediction modes for predicting the current block; and determine the prediction mode of the current block based on the cost.

In some embodiments, before determining the list of candidate prediction modes corresponding to the current block, the mode determining unit 21 is further configured to determine whether a size of the current block meets a first preset size; in response to that the size of the current block meets the first preset size, add the multi-model intra block copy illumination compensation mode to the list of candidate prediction modes corresponding to the current block.

In some embodiments, before determining the list of candidate prediction modes corresponding to the current block, the mode determining unit 21 is further configured to: determine whether the current block is encoded using a first tool, the first tool being mutually exclusive with an intra block copy illumination compensation technology; and in response to that the current block is encoded without using the first tool, add the multi-model intra block copy illumination compensation mode to the list of candidate prediction modes corresponding to the current block.

In some embodiments, the mode determining unit 21 is further configured to determine a prediction type of the current block, and write first information into a bitstream, the first information being used to indicate the prediction type of the current block.

In some embodiments, the mode determining unit 21 is further configured to, in response to that the prediction type of the current block is intra block copy prediction, write a first flag into the bitstream, the first flag being used to indicate whether the current block uses a merge mode.

In some embodiments, the mode determining unit 21 is further configured to, in response to that the current block does not use the merge mode, write second information into the bitstream, the second information being used to indicate whether the current block uses an intra block copy illumination compensation mode.

In some embodiments, the mode determining unit 21 is further configured to, in response to that the current block uses the intra block copy illumination compensation mode, write index information into the bitstream, the index information being used to indicate a mode index of the intra block copy illumination compensation mode used by the current block.

In some embodiments, the mode determining unit 21 is further configured to: in response to that the prediction mode of the current block is a single-model intra block copy illumination compensation mode, determine that a value of the index information is a first numerical value; and in response to that the prediction mode of the current block is the multi-model intra block copy illumination compensation mode, determine that the value of the index flag is a second numerical value.

In some embodiments, the mode determining unit 21 is specifically configured to, in response to that the second information indicates that the current block uses the intra block copy illumination compensation mode and a size of the current block is greater than or equal to a second preset size, determine the multi-model intra block copy illumination compensation mode as the prediction mode of the current block.

In some embodiments, the second information is further used to indicate a mode index of the intra block copy illumination compensation mode, and the mode determining unit 21 is further configured to: in response to that the prediction mode of the current block is a non-intra block copy illumination compensation mode, determine that a value of the second information is a first numerical value; in response to that the prediction mode of the current block is a single-model intra block copy illumination compensation mode, determine that the value of the second information is a second numerical value; and in response to that the prediction mode of the current block is the multi-model intra block copy illumination compensation mode, determine that the value of the second information is a third numerical value.

In some embodiments, the mode determining unit 21 is specifically configured to, in response to that the current block uses the merge mode, determine a prediction mode of the reference block as the prediction mode of the current block.

In some embodiments, the mode determining unit 21 is specifically configured to, in response to that the current block uses the merge mode, determine a single-model intra block copy illumination compensation mode as the prediction mode of the current block.

In some embodiments, before determining the list of candidate prediction modes corresponding to the current block, the mode determining unit 21 is further configured to: determine a third flag, the third flag being used to indicate whether a current sequence allows local illumination compensation; in response to that the third flag is used to indicate that the current sequence allows the local illumination compensation, add the multi-model intra block copy illumination compensation mode to the list of candidate prediction modes corresponding to the current block.

In some embodiments, the mode determining unit 21 is further configured to write the third flag into a bitstream, the third flag being used to indicate whether the current sequence allows the local illumination compensation.

It should be understood that, the apparatus embodiments and the method embodiments may correspond to each other, and for similar descriptions, reference can be made to those of the method embodiments, which will not be repeated here to avoid repetition. Specifically, the apparatus 20 shown in FIG. 17 can execute the encoding method of the encoding end in the embodiments of the present disclosure, and the above and other operations and/or functions of each unit in the apparatus 20 are respectively for implementing corresponding processes in each method such as the encoding method of the encoding end mentioned above, which will not be repeated here for the sake of brevity.

The above describes the apparatuses and the system of the embodiments of the present disclosure from the perspective of functional units in conjunction with the accompanying drawings. It should be understood that the functional units may be implemented in the form of hardware, or may be implemented by instructions in the form of software, or may be implemented by a combination of hardware units and software units. Specifically, the steps of the method embodiments in the embodiments of the present disclosure may be performed by the hardware integrated logic circuit and/or software instructions in the processor. The steps of the method disclosed in the embodiments of the present disclosure may be directly reflected as being performed by a hardware decoding processor, or being performed by a combination of hardware units and software units in the decoding processor. Optionally, the software unit may be located in a mature storage medium in the art, such as a random access memory, a flash memory, a read-only memory, a programmable read-only memory, an electrically erasable programmable memory, or a register. The storage medium is located in the memory, and the processor reads the information in the memory and completes the steps in the above method embodiments in conjunction with its hardware.

FIG. 18 is a schematic block diagram of an electronic device provided in embodiments of the present disclosure.

As shown in FIG. 18, the electronic device 30 may be the video encoder or the video encoder as described in the embodiments of the present disclosure, and the electronic device 30 may include:

a memory 33 and a processor 32, where the memory 33 is configured to store a computer program 34 and transmit the program code 34 to the processor 32; in other words, the processor 32 is capable of calling the computer program 34 from the memory 33 and running the computer program 34 to implement the method in the embodiments of the present disclosure.

For example, the processor 32 is configured to execute the steps in the above method 200 based on instructions in the computer program 34.

In some embodiments of the present disclosure, the processor 32 may include but is not limited to:

a general purpose processor, a digital signal processor (DSP), an application specific integrated circuit (ASIC), a field programmable gate array (FPGA) or another programmable logic device, a discrete gate or a transistor logic device, or a discrete hardware component.

In some embodiments of the present disclosure, the memory 33 includes but is not limited to:

a volatile (transitory) memory and/or a non-volatile (non-transitory) memory, where the non-volatile memory may be a read-only memory (ROM), a programmable read-only memory (Programmable ROM, PROM), an erasable programmable read-only memory (Erasable PROM, EPROM), an electrically erasable programmable read-only memory (Electrically, EEPROM), or a flash memory; and the volatile memory may be a random access memory (RAM), serving as an external cache. As an example and not limitation, a variety of forms of RAMs are available, such as a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synch link DRAM, SLDRAM), and a direct memory bus random access memory (Direct Rambus RAM, DR RAM).

In some embodiments of the present disclosure, the computer program 34 may be partitioned into one or more units. The one or more units are stored in the memory 33 and performed by the processor 32, to implement the method provided in the present disclosure. The one or more units may be a series of computer program instruction segments capable of completing specific functions, and the instruction segments are used to describe the performing processes of the computer program 34 in the electronic device 30.

As shown in FIG. 18, the electronic device 30 may further include:

a transceiver 33, where the transceiver 33 is connectable to the processor 32 or the memory 33.

The processor 32 may control the transceiver 33 to communicate with other devices, and specifically, may control the transceiver 33 to transmit information or data to other devices, or control the transceiver 33 to receive information or data transmitted by other devices. The transceiver 33 may include a transmitter and a receiver. The transceiver 33 may further include an antenna, and there may be one or more antennas.

It should be understood that various components in the electronic device 30 are connected via a bus system, where the bus system includes not only a data bus but also a power bus, a control bus and a status signal bus.

FIG. 19 is a schematic block diagram of a video encoding and decoding system provided in embodiments of the present disclosure.

As shown in FIG. 19, the video encoding and decoding system 40 may include a video encoder 41 and a video encoder 42. The video encoder 41 is configured to execute the video encoding method involved in the embodiments of the present disclosure, and the video encoder 42 is configured to execute the video encoding method involved in the embodiments of the present disclosure.

The present disclosure further provides a computer storage medium with a computer program stored thereon. The computer program, when performed by a computer, enables the computer to execute the method in the above method embodiments. In other words, the embodiments of the present disclosure further provide a computer program product including instructions, and the instructions, when performed by a computer, enable the computer to execute the method in the above method embodiments.

The present disclosure further provides a bitstream, which is generated according to the above encoding method.

When implemented using software, all or part of the above embodiments may be implemented in a form of a computer program product. The computer program product includes one or more computer instructions. When loaded and executed on a computer, the computer program instructions produce, in all or in part, a process or function in accordance with the embodiments of the present disclosure. The computer may be a general purpose computer, a special purpose computer, a computer network, or any of other programmable apparatuses. The computer instructions may be stored in a computer-readable storage medium, or transmitted from one computer-readable storage medium to another computer-readable storage medium. For example, the computer instructions may be transmitted from a website, a computer, a server, or a data center to another website, computer, server, or data center through a wired manner (e.g., a coaxial cable, an optical fiber, or a digital subscriber line (DSL)) or a wireless manner (e.g., infrared, radio, or microwave). The computer-readable storage medium may be any available medium that a computer can access or may be a data storage device, such as a server or a data center that includes one or more available media. The available medium may be a magnetic medium (e.g., a floppy disk, a hard disk, or a magnetic tape), an optical medium (e.g., a digital video disc (DVD)), or a semiconductor medium (e.g., a solid state disk (SSD)).

Those skilled in the art will appreciate that the units and algorithm steps of the examples described in conjunction with the embodiments disclosed in the present disclosure may be implemented by electronic hardware, or a combination of computer software and electronic hardware. Whether these functions are performed in hardware or software depends on the specific application and design constraints of the technical solution. Professional technicians may use different methods to implement the described functions for each specific application, but such implementation should not be considered to be beyond the scope of the present disclosure.

In several embodiments provided in the present disclosure, it should be understood that the disclosed system, apparatuses and methods may be implemented in other manners. For example, the apparatus embodiments described above are only schematic. For example, the partition of the units is only partition of logical functions, and there may be other partition manners in the actual implementation, for example, a plurality of units or components may be combined or integrated into another system, or some features may be ignored or not implemented. In addition, the mutual coupling or direct coupling or communication connection illustrated or discussed may be indirect coupling or communication connection through some interfaces, apparatuses or units, which may be in electrical, mechanical or other forms.

The units described as discrete components may or may not be physically separated, and the components shown as units may or may not be physical units, that is, they may be located at one place, or may be distributed onto a plurality of network units. Some or all of these units may be selected depending on actual needs to achieve the purpose of the solution of the embodiments. For example, various functional units in various embodiments of the present disclosure may be integrated into one processing unit, or various units may exist physically alone, or two or more units may be integrated into one unit.

The foregoing descriptions are merely specific implementations of the present disclosure, but the protection scope of the present disclosure is not limited thereto. Any skilled person in the art could readily conceive of variations or replacements within the technical scope of the present disclosure, which shall be all included in the protection scope of the present disclosure. Therefore, the protection scope of the present disclosure shall be subject to the protection scope of claims.

**Claims**

1. A video decoding method, comprising:

   determining a prediction mode of a current block;
   in response to that the prediction mode of the current block is a multi-model intra block copy illumination compensation mode, determining a reference block of the current block and determining N groups of linear model parameters, N being a positive integer greater than 1; and
   selecting a target group of linear model parameters from the N groups of linear model parameters, and performing linear transform on the reference block using the target group of linear model parameters to obtain a prediction block of the current block.

2. The method according to claim 1, wherein determining the N groups of linear model parameters comprises:
   determining the N groups of linear model parameters based on a surrounding reconstructed area of the reference block and a surrounding reconstructed area of the current block.

3. The method according to claim 2, wherein determining the N groups of linear model parameters based on the surrounding reconstructed area of the reference block and the surrounding reconstructed area of the current block comprises:

   determining a first sample set from the surrounding reconstructed area of the reference block, and determining a second sample set from the surrounding reconstructed area of the current block;
   classifying the first sample set and the second sample set into N groups of sample sets, any one of the N groups of sample sets comprising at least one first sample and at least one second sample; and
   for an i-th group of sample sets among the N groups of sample sets, determining an i-th group of linear model parameters based on the at least one first sample and the at least one second sample comprised in the i-th group of sample sets, i being a positive integer less than or equal to N.

4. The method according to claim 3, wherein the surrounding reconstructed area of the reference block comprises a template area of the reference block, and the surrounding reconstructed area of the current block comprises a template area of the current block; and determining the first sample set from the surrounding reconstructed area of the reference block, and determining the second sample set from the surrounding reconstructed area of the current block comprises:
   determining the first sample set from the template area of the reference block, and determining the second sample set from the template area of the current block.

5. The method according to claim 4, wherein determining the first sample set from the template area of the reference block and determining the second sample set from the template area of the current block comprises:

   performing sampling in the template area of the reference block according to a first sampling step size to obtain the first sample set, wherein the first sampling step size is less than a preset sampling step size; and
   performing sampling in the template area of the current block according to the first sampling step size to obtain the second sample set.

6. The method according to claim 4, wherein determining the first sample set from the template area of the reference block and determining the second sample set from the template area of the current block comprises:

   determining all samples comprised in the template area of the reference block as the first sample set; and

determining all samples comprised in the template area of the current block as the second sample set.

7. The method according to claim 4, wherein the template area of the reference block comprises a top side template area of the reference block and/or a left side template area of the reference block, and the template area of the current block comprises a top side template area of the current block and/or a left side template area of the current block.

8. The method according to claim 7, wherein the top side template area of the reference block comprises a top template area of the reference block and a top right template area of the reference block; and the top side template area of the current block comprises a top template area of the current block and a top right template area of the current block.

9. The method according to claim 7, wherein the left side template area of the reference block comprises a left template area of the reference block and a bottom left template area of the reference block; and the left side template area of the current block comprises a left template area of the current block and a bottom left template area of the current block.

10. The method according to claim 7, wherein a number of sample rows comprised in the top side template area of the reference block is greater than or equal to a preset number of rows, and a number of sample rows comprised in the top side template area of the current block is greater than or equal to the preset number of rows.

11. The method according to claim 7, wherein a number of sample columns comprised in the left side template area of the reference block is greater than or equal to a preset number of columns, and a number of sample columns comprised in the left side template area of the current block is greater than or equal to the preset number of columns.

12. The method according to claim 3, wherein classifying the first sample set and the second sample set into the N groups of sample sets comprises:

    classifying first samples comprised in the first sample set into N classes of first samples;
    classifying second samples comprised in the second sample set into N classes of second samples; and
    obtaining the N groups of sample sets based on the N classes of first samples and the N classes of second samples.

13. The method according to claim 12, wherein classifying the first samples comprised in the first sample set into the N classes of first samples comprises:

    determining a first sample mean value of the first sample set; and
    classifying the first sample set into the N classes of first samples based on the first sample mean value.

14. The method according to claim 13, wherein classifying the first sample set into the N classes of first samples based on the first sample mean value comprises:

    classifying first samples in the first sample set that are greater than or equal to the first sample mean value into a first class of first samples; and
    classifying first samples in the first sample set that are less than or equal to the first sample mean value into a second class of first samples.

15. The method according to claim 12, wherein classifying the second samples comprised in the second sample set into the N classes of second samples comprises:
    for a j-th class of first samples in the N classes of first samples, determining second samples in the second sample set that correspond to first samples in the j-th class as a j-th class of second samples, j being a positive integer less than or equal to N.

16. The method according to claim 15, wherein obtaining the N groups of sample sets based on the N classes of first samples and the N classes of second samples comprises:
    determining the j-th class of first samples and the j-th class of second samples as a j-th group of sample sets.

17. The method according to claim 3, wherein determining the i-th group of linear model parameters based on the at least one first sample and the at least one second sample comprised in the i-th group of sample sets comprises:

    adding first samples in the i-th group of sample sets to obtain a first sum value, and adding second samples in the i-th group of sample sets to obtain a second sum value;

determining a sum of squares of the first samples in the i-th group of sample sets to obtain a third sum value;

obtaining a fourth sum value by multiplying the first samples and the second samples in the i-th group of sample sets and then adding multiplied results; and

determining the i-th group of linear model parameters based on the first sum value, the second sum value, the third sum value and the fourth sum value.

18. The method according to claim 14, wherein selecting the target group of linear model parameters from the N groups of linear model parameters comprises:

determining a second sample mean value of the reference block; and

selecting the target group of linear model parameters from the N groups of linear model parameters based on the second sample mean value.

19. The method according to claim 18, wherein selecting the target group of linear model parameters from the N groups of linear model parameters based on the second sample mean value comprises:

selecting the target group of linear model parameters from the N groups of linear model parameters based on the second sample mean value and the first sample mean value.

20. The method according to claim 19, wherein selecting the target group of linear model parameters from the N groups of linear model parameters based on the second sample mean value and the first sample mean value comprises:

in response to that the second sample mean value is greater than or equal to the first sample mean value, determining a group of linear model parameters corresponding to the first class of first samples among the N groups of linear model parameters as the target group of linear model parameters; and

in response to that the second sample mean value is less than or equal to the first sample mean value, determining a group of linear model parameters corresponding to the second class of first samples among the N groups of linear model parameters as the target group of linear model parameters.

21. The method according to claim 2, wherein determining the prediction mode of the current block comprises:

decoding a bitstream to obtain first information, the first information being used to indicate a prediction type of the current block; and

determining the prediction mode of the current block based on the first information.

22. The method according to claim 21, wherein determining the prediction mode of the current block based on the first information comprises:

in response to that the first information indicates that the prediction type of the current block is intra block copy prediction, decoding the bitstream to obtain a first flag, the first flag being used to indicate whether the current block uses a merge mode; and

determining the prediction mode of the current block based on the first flag.

23. The method according to claim 22, wherein determining the prediction mode of the current block based on the first flag comprises:

in response to that the first flag indicates that the current block does not use the merge mode, decoding the bitstream to obtain second information, the second information being used to indicate whether the current block uses an intra block copy illumination compensation mode; and

determining the prediction mode of the current block based on the second information.

24. The method according to claim 23, wherein determining the prediction mode of the current block based on the second information comprises:

in response to that the second information indicates that the current block uses the intra block copy illumination compensation mode, decoding the bitstream to obtain index information, the index information being used to indicate a mode index of the intra block copy illumination compensation mode used by the current block; and

determining the prediction mode of the current block based on the index information.

**25.** The method according to claim 24, wherein determining the prediction mode of the current block based on the index information comprises:

in response to that a value of the index information is a first numerical value, determining that the prediction mode of the current block is a single-model intra block copy illumination compensation mode; and
in response to that the value of the index flag is a second numerical value, determining that the prediction mode of the current block is the multi-model intra block copy illumination compensation mode.

**26.** The method according to claim 23, wherein determining the prediction mode of the current block based on the second information comprises:
in response to that the second information indicates that the current block uses the intra block copy illumination compensation mode and a size of the current block is greater than or equal to a second preset size, determining the multi-model intra block copy illumination compensation mode as the prediction mode of the current block.

**27.** The method according to claim 23, wherein the second information is further used to indicate a mode index of the intra block copy illumination compensation mode; and determining the prediction mode of the current block based on the second information comprises:
determining the prediction mode of the current block based on a value of the second information.

**28.** The method according to claim 27, wherein determining the prediction mode of the current block based on the value of the second information comprises:

in response to that the value of the second information is a first numerical value, determining that the prediction mode of the current block is a non-intra block copy illumination compensation mode;
in response to that the value of the second information is a second numerical value, determining that the prediction mode of the current block is a single-model intra block copy illumination compensation mode; and
in response to that the value of the second information is a third numerical value, determining that the prediction mode of the current block is the multi-model intra block copy illumination compensation mode.

**29.** The method according to claim 23, wherein before decoding the bitstream to obtain the second information, the method further comprises:
determining whether a size of the current block meets a first preset size; and
decoding the bitstream to obtain the second information comprises:
in response to that the size of the current block meets the first preset size, decoding the bitstream to obtain the second information.

**30.** The method according to claim 23, wherein before decoding the bitstream to obtain the second information, the method further comprises:
decoding the bitstream to obtain third information, wherein the third information is used to indicate whether the current block is decoded using a first tool, and the first tool is mutually exclusive with an intra block copy illumination compensation technology; and
decoding the bitstream to obtain the second information comprises:
in response to that the third information indicates that the current block is decoded without using the first tool, decoding the bitstream to obtain the second information.

**31.** The method according to claim 23, wherein determining the prediction mode of the current block based on the first flag comprises:
in response to that the first flag indicates that the current block uses the merge mode, determining a prediction mode of the reference block as the prediction mode of the current block.

**32.** The method according to claim 23, wherein determining the prediction mode of the current block based on the first flag comprises:
in response to that the first flag indicates that the current block uses the merge mode, determining a single-model intra block copy illumination compensation mode as the prediction mode of the current block.

**33.** The method according to claim 23, wherein determining the prediction mode of the current block based on the first flag comprises:

in response to that the first flag indicates that the current block uses the merge mode, decoding the bitstream to obtain fourth information, the fourth information being used to indicate the prediction mode of the current block; and

obtaining the prediction mode of the current block based on the fourth information.

34. The method according to claim 23, wherein before decoding the bitstream to obtain the first flag, the method further comprises:

decoding the bitstream to obtain a third flag, the third flag being used to indicate whether a current sequence allows local illumination compensation; and

decoding the bitstream to obtain the first flag comprises:

in response to that the third flag indicates that the current sequence allows the local illumination compensation, decoding the bitstream to obtain the first flag.

35. A video encoding method, comprising:

determining a prediction mode of a current block;

in response to that the prediction mode of the current block is a multi-model intra block copy illumination compensation mode, determining a reference block of the current block and determining N groups of linear model parameters, N being a positive integer greater than 1; and

selecting a target group of linear model parameters from the N groups of linear model parameters, and performing linear transform on the reference block using the target group of linear model parameters to obtain a prediction block of the current block.

36. The method according to claim 35, wherein determining the N groups of linear model parameters comprises:

determining the N groups of linear model parameters based on a surrounding reconstructed area of the reference block and a surrounding reconstructed area of the current block.

37. The method according to claim 36, wherein determining the N groups of linear model parameters based on the surrounding reconstructed area of the reference block and the surrounding reconstructed area of the current block comprises:

determining a first sample set from the surrounding reconstructed area of the reference block, and determining a second sample set from the surrounding reconstructed area of the current block;

classifying the first sample set and the second sample set into N groups of sample sets, any one of the N groups of sample sets comprising at least one first sample and at least one second sample; and

for an i-th group of sample sets among the N groups of sample sets, determining an i-th group of linear model parameters based on at least one first sample and at least one second sample comprised in the i-th group of sample sets, i being a positive integer less than or equal to N.

38. The method according to claim 37, wherein the surrounding reconstructed area of the reference block comprises a template area of the reference block, and the surrounding reconstructed area of the current block comprises a template area of the current block; and determining the first sample set from the surrounding reconstructed area of the reference block, and determining the second sample set from the surrounding reconstructed area of the current block comprises:

determining the first sample set from the template area of the reference block, and determining the second sample set from the template area of the current block.

39. The method according to claim 38, wherein determining the first sample set from the template area of the reference block and determining the second sample set from the template area of the current block comprises:

performing sampling in the template area of the reference block according to a first sampling step size to obtain the first sample set, wherein the first sampling step size is less than a preset sampling step size; and

performing sampling in the template area of the current block according to the first sampling step size to obtain the second sample set.

40. The method according to claim 38, wherein determining the first sample set from the template area of the reference block and determining the second sample set from the template area of the current block comprises:

determining all samples comprised in the template area of the reference block as the first sample set; and
determining all samples comprised in the template area of the current block as the second sample set.

41. The method according to claim 38, wherein the template area of the reference block comprises a top side template area of the reference block and/or a left side template area of the reference block, and the template area of the current block comprises a top side template area of the current block and/or a left side template area of the current block.

42. The method according to claim 41, wherein the top side template area of the reference block comprises a top template area of the reference block and a top right template area of the reference block; and the top side template area of the current block comprises a top template area of the current block and a top right template area of the current block.

43. The method according to claim 41, wherein the left side template area of the reference block comprises a left template area of the reference block and a bottom left template area of the reference block; and the left side template area of the current block comprises a left template area of the current block and a bottom left template area of the current block.

44. The method according to claim 41, wherein a number of sample rows comprised in the top side template area of the reference block is greater than or equal to a preset number of rows, and a number of sample rows comprised in the top side template area of the current block is greater than or equal to the preset number of rows.

45. The method according to claim 41, wherein a number of sample columns comprised in the left side template area of the reference block is greater than or equal to a preset number of columns, and a number of sample columns comprised in the left side template area of the current block is greater than or equal to the preset number of columns.

46. The method according to claim 37, wherein classifying the first sample set and the second sample set into the N groups of sample sets comprises:

classifying first samples comprised in the first sample set into N classes of first samples;
classifying second samples comprised in the second sample set into N classes of second samples; and
obtaining the N groups of sample sets based on the N classes of first samples and the N classes of second samples.

47. The method according to claim 46, wherein classifying the first samples comprised in the first sample set into the N classes of first samples comprises:

determining a first sample mean value of the first sample set; and
classifying the first sample set into the N classes of first samples based on the first sample mean value.

48. The method according to claim 47, wherein classifying the first sample set into the N classes of first samples based on the first sample mean value comprises:

classifying first samples in the first sample set that are greater than or equal to the first sample mean value into a first class of first samples; and
classifying first samples in the first sample set that are less than or equal to the first sample mean value into a second class of first samples.

49. The method according to claim 46, wherein classifying the second samples comprised in the second sample set into the N classes of second samples comprises:
for a j-th class of first samples in the N classes of first samples, determining second samples in the second sample set that correspond to first samples in the j-th class as a j-th class of second samples, j being a positive integer less than or equal to N.

50. The method according to claim 49, wherein obtaining the N groups of sample sets based on the N classes of first samples and the N classes of second samples comprises:
determining the j-th class of first samples and the j-th class of second samples as a j-th group of sample sets.

51. The method according to claim 37, wherein determining the i-th group of linear model parameters based on the at least one first sample and the at least one second sample comprised in the i-th group of sample sets comprises:

adding first samples in the i-th group of sample sets to obtain a first sum value, and adding second samples in the i-th group of sample sets to obtain a second sum value;

determining a sum of squares of the first samples in the i-th group of sample sets to obtain a third sum value;

obtaining a fourth sum value by multiplying the first samples and the second samples in the i-th group of sample sets and then adding multiplied results; and

determining the i-th group of linear model parameters based on the first sum value, the second sum value, the third sum value and the fourth sum value.

52. The method according to claim 48, wherein selecting the target group of linear model parameters from the N groups of linear model parameters comprises:

determining a second sample mean value of the reference block; and

selecting the target group of linear model parameters from the N groups of linear model parameters based on the second sample mean value.

53. The method according to claim 52, wherein selecting the target group of linear model parameters from the N groups of linear model parameters based on the second sample mean value comprises:

selecting the target group of linear model parameters from the N groups of linear model parameters based on the second sample mean value and the first sample mean value.

54. The method according to claim 53, wherein selecting the target group of linear model parameters from the N groups of linear model parameters based on the second sample mean value and the first sample mean value comprises:

in response to that the second sample mean value is greater than or equal to the first sample mean value, determining a group of linear model parameters corresponding to the first class of first samples among the N groups of linear model parameters as the target group of linear model parameters; and

in response to that the second sample mean value is less than or equal to the first sample mean value, determining a group of linear model parameters corresponding to the second class of first samples among the N groups of linear model parameters as the target group of linear model parameters.

55. The method according to claim 37, wherein determining the prediction mode of the current block comprises:

determining a list of candidate prediction modes corresponding to the current block, the candidate prediction modes comprising the multi-model intra block copy illumination compensation mode;

determining a cost of each candidate prediction mode in the list of candidate prediction modes for predicting the current block; and

determining the prediction mode of the current block based on the cost.

56. The method according to claim 55, wherein before determining the list of candidate prediction modes corresponding to the current block, the method further comprises:

determining whether a size of the current block meets a first preset size; and

determining the list of candidate prediction modes corresponding to the current block comprises:

in response to that the size of the current block meets the first preset size, adding the multi-model intra block copy illumination compensation mode to the list of candidate prediction modes corresponding to the current block.

57. The method according to claim 55, wherein before determining the list of candidate prediction modes corresponding to the current block, the method further comprises:

determining whether the current block is encoded using a first tool, the first tool being mutually exclusive with an intra block copy illumination compensation technology; and

determining the list of candidate prediction modes corresponding to the current block comprises:

in response to that the current block is encoded without using the first tool, adding the multi-model intra block copy illumination compensation mode to the list of candidate prediction modes corresponding to the current block.

58. The method according to claim 55, further comprising:

determining a prediction type of the current block, and writing first information into a bitstream, the first information being used to indicate the prediction type of the current block.

59. The method according to claim 58, further comprising:

in response to that the prediction type of the current block is intra block copy prediction, writing a first flag into the bitstream, the first flag being used to indicate whether the current block uses a merge mode.

**60.** The method according to claim 59, further comprising:

in response to that the current block does not use the merge mode, writing second information into the bitstream, the second information being used to indicate whether the current block uses an intra block copy illumination compensation mode.

**61.** The method according to claim 60, further comprising:

in response to that the current block uses the intra block copy illumination compensation mode, writing index information into the bitstream, the index information being used to indicate a mode index of the intra block copy illumination compensation mode used by the current block.

**62.** The method according to claim 61, further comprising:

in response to that the prediction mode of the current block is a single-model intra block copy illumination compensation mode, determining that a value of the index information is a first numerical value; and
in response to that the prediction mode of the current block is the multi-model intra block copy illumination compensation mode, determining that the value of the index flag is a second numerical value.

**63.** The method according to claim 60, wherein determining the prediction mode of the current block comprises:
in response to that the second information indicates that the current block uses the intra block copy illumination compensation mode and a size of the current block is greater than or equal to a second preset size, determining the multi-model intra block copy illumination compensation mode as the prediction mode of the current block.

**64.** The method according to claim 60, wherein the second information is further used to indicate a mode index of the intra block copy illumination compensation mode; and the method further comprises:

in response to that the prediction mode of the current block is a non-intra block copy illumination compensation mode, determining that a value of the second information is a first numerical value;
in response to that the prediction mode of the current block is a single-model intra block copy illumination compensation mode, determining that the value of the second information is a second numerical value; and
in response to that the prediction mode of the current block is the multi-model intra block copy illumination compensation mode, determining that the value of the second information is a third numerical value.

**65.** The method according to claim 59, wherein determining the prediction mode of the current block comprises:
in response to that the current block uses the merge mode, determining a prediction mode of the reference block as the prediction mode of the current block.

**66.** The method according to claim 59, wherein determining the prediction mode of the current block comprises:
in response to that the current block uses the merge mode, determining a single-model intra block copy illumination compensation mode as the prediction mode of the current block.

**67.** The method according to claim 55, wherein before determining the list of candidate prediction modes corresponding to the current block, the method further comprises:
determining a third flag, the third flag being used to indicate whether a current sequence allows local illumination compensation; and
determining the list of candidate prediction modes corresponding to the current block comprises:
in response to that the third flag is used to indicate that the current sequence allows the local illumination compensation, adding the multi-model intra block copy illumination compensation mode to the list of candidate prediction modes corresponding to the current block.

**68.** The method according to claim 67, further comprising:
writing the third flag into a bitstream, the third flag being used to indicate whether the current sequence allows the local illumination compensation.

**69.** A video decoding apparatus, comprising:

a mode determining unit configured to determine a prediction mode of a current block;

a parameter determining unit configured to: in a case where the prediction mode of the current block is a multi-model intra block copy illumination compensation mode, determine a reference block of the current block and determine N groups of linear model parameters, N being a positive integer greater than 1; and

a transform unit configured to: select a target group of linear model parameters from the N groups of linear model parameters, and perform linear transform on the reference block using the target group of linear model parameters to obtain a prediction block of the current block.

70. A video encoding apparatus, comprising:

a mode prediction unit configured to determine a prediction mode of a current block;

a parameter determining unit configured to: in a case where the prediction mode of the current block is a multi-model intra block copy illumination compensation mode, determine a reference block of the current block and determine N groups of linear model parameters, N being a positive integer greater than 1; and

a transform unit configured to: select a target group of linear model parameters from the N groups of linear model parameters, and perform linear transform on the reference block using the target group of linear model parameters to obtain a prediction block of the current block.

71. An electronic device, comprising a processor and a memory, wherein

the memory is configured to store a computer program; and

the processor is configured to call and run the computer program stored in the memory to implement the method according to any one of claims 1 to 34 or any one of claims 35 to 68.

72. A video encoding and decoding system, comprising: a video encoder and a video encoder, wherein

the video decoder is configured to implement the method according to any one of claims 1 to 34; and

the video encoder is configured to implement the method according to any one of claims 35 to 68.

73. A computer-readable storage medium, configured to store a computer program, wherein

the computer program enables a computer to perform the method according to any one of claims 1 to 34 or any one of claims 35 to 68.

Encoding device 110

| Video source 111 | Video encoder 112 | Output interface 113 |

— 130

Decoding device 120

| Display apparatus 123 | Video decoder 122 | Input interface 121 |

FIG. 1

Video encoder 200

Input video stream

220 — Residual block

Transform/ quantization unit 230

Quantized transform coefficient

Prediction block

Prediction unit 210

Inter prediction unit 211

Intra prediction unit 212

250

Inverse transform/inverse quantization unit 240

Reconstructed block

In-loop filter unit 260

Decoded picture buffer 270

Entropy coding unit 280

Bitstream

FIG. 2

Video decoder 300

Bitstream

Entropy decoding unit 310

Prediction unit 320

Inter prediction unit 321

Intra prediction unit 322

inverse quanti-zation/trans-form unit 330

340

In-loop filter unit 350

Decoded picture buffer 360

Video data

FIG. 3

FIG. 4A

FIG. 4B

Reference picture

$PredCU' = a \times PredCU + b$

Current picture

FIG. 5

Reconstructed pixels    Reconstructed pixels

Reference CU    Current CU

FIG. 6

FIG. 7

FIG. 8

FIG. 9

FIG. 10

Determine a prediction mode of a current block    S101

In response to that the prediction mode of the current block is a multi-model intra block copy illuminance compensation mode, determine a reference block of the current block, and determine N groups of linear model parameters    S102

Select a target group of linear model parameters from the N groups of linear model parameters, and perform linear transform on the reference block using the target group of linear model parameters to obtain a prediction block of the current block    S103

FIG. 11

Top

Left    Current block

FIG. 12

| Top | Top right |

| Current block |

FIG. 13

| Left | Current block |

| Bottom left |

FIG. 14

| Determine a prediction mode of a current block | S201 |

| In response to that the prediction mode of the current block is a multi-model intra block copy illuminance compensation mode, determine a reference block of the current block, and determine N groups of linear model parameters | S202 |

| Select a target group of linear model parameters from the N groups of linear model parameters, and perform linear transform on the reference block using the target group of linear model parameters to obtain a prediction block of the current block | S203 |

FIG. 15

Video decoding apparatus 10

Mode determining unit 11

Parameter determining unit 12

Transform unit 13

FIG. 16

Video encoding apparatus 20

Mode prediction unit 21

Parameter determining unit 22

Transform unit 23

FIG. 17

30

Electronic device

33

Transceiver

31

Memory

Computer program

Processor

32

34

FIG. 18

Video encoding and decoding system 40

Video encoder 41

Video decoder 42

FIG. 19

## INTERNATIONAL SEARCH REPORT

| International application No. |
|---|
| **PCT/CN2023/086930** |

| A. | CLASSIFICATION OF SUBJECT MATTER |
|---|---|

H04N19/196(2014.01)i; H04N19/70(2014.01)i

According to International Patent Classification (IPC) or to both national classification and IPC

| B. | FIELDS SEARCHED |
|---|---|

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNTXT, CNKI, ENTXTC, VCN, JVET; IEEE: 光照补偿, 帧内块复制, 线性模型, 参考块, 样本, 预测, 多组, 参数, 重建, LIC, IBC, Local 1w Illuminance 1w Compensationcu, Intra 1w Block 1w Copy, linear 1w model, reference 1w block, sample?, prediction, multiple 1w group, parameter?, reconstruction

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 112868239 A (BEIJING BYTEDANCE NETWORK TECHNOLOGY CO., LTD. et al.) 28 May 2021 (2021-05-28) description, paragraphs 170-764 | 1-16, 18-22, 35-50, 52-55, 58-59, 65, 69-73 |
| Y | EP 3706419 A1 (INTERDIGITAL VC HOLDINGS INC.) 09 September 2020 (2020-09-09) description, paragraphs 33-76 | 1-16, 18-22, 35-50, 52-55, 58-59, 65, 69-73 |
| Y | YANG WANG et al. "EE2-3.6: IBC-CIIP, IBC-GPM, and IBC-LIC, JVET-AC0112" *Joint Video Experts Team (JVET) of ITU-T SG 16 WP 3 and ISO/IEC JTC 1/SC 29 29th Meeting*, 05 January 2023 (2023-01-05), section 1.5 | 1-16, 18-22, 35-50, 52-55, 58-59, 65, 69-73 |
| Y | CN 111557095 A (QUALCOMM TECHNOLOGIES INC.) 18 August 2020 (2020-08-18) description, paragraphs 107-191 | 1-16, 18-22, 35-50, 52-55, 58-59, 65, 69-73 |
| A | WO 2022174469 A1 (GUANGDONG OPPO MOBILE TELECOMMUNICATIONS CORP., LTD.) 25 August 2022 (2022-08-25) entire document | 1-73 |

☑ Further documents are listed in the continuation of Box C.     ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **30 November 2023** | **26 December 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/086930** |

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2022116246 A1 (GUANGDONG OPPO MOBILE TELECOMMUNICATIONS CORP., LTD.) 09 June 2022 (2022-06-09)<br>    entire document | 1-73 |

Form PCT/ISA/210 (second sheet) (July 2022)

## INTERNATIONAL SEARCH REPORT
### Information on patent family members

| | | | | | International application No. |
| --- | --- | --- | --- | --- | --- |
| | | | | | **PCT/CN2023/086930** |

| Patent document cited in search report | | | Publication date (day/month/year) | Patent family member(s) | | | Publication date (day/month/year) |
| --- | --- | --- | --- | --- | --- | --- | --- |
| CN | 112868239 | A | 28 May 2021 | WO | 2020084509 | A1 | 30 April 2020 |
| | | | | US | 2021235110 | A1 | 29 July 2021 |
| | | | | US | 11405607 | B2 | 02 August 2022 |
| | | | | US | 2021235092 | A1 | 29 July 2021 |
| | | | | US | 11758124 | B2 | 12 September 2023 |
| | | | | WO | 2020084506 | A1 | 30 April 2020 |
| | | | | WO | 2020084508 | A1 | 30 April 2020 |
| | | | | US | 2021235074 | A1 | 29 July 2021 |
| | | | | US | 11470307 | B2 | 11 October 2022 |
| EP | 3706419 | A1 | 09 September 2020 | None | | | |
| CN | 111557095 | A | 18 August 2020 | US | 2019215522 | A1 | 11 July 2019 |
| | | | | US | 11082708 | B2 | 03 August 2021 |
| | | | | WO | 2019136220 | A1 | 11 July 2019 |
| | | | | TW | 201933873 | A | 16 August 2019 |
| | | | | EP | 3738314 | A1 | 18 November 2020 |
| WO | 2022174469 | A1 | 25 August 2022 | None | | | |
| WO | 2022116246 | A1 | 09 June 2022 | None | | | |

Form PCT/ISA/210 (patent family annex) (July 2022)